# EUROPEAN PATENT APPLICATION

(11) **EP 4 567 588 A1**
(43) Date of publication of application: **11.06.2025**
(21) Application number: 23917260.4
(22) Date of filing: 08.12.2023
(51) Int. Cl.: G06F 8/61

(54) **APPLICATION INSTALLATION METHOD AND DEVICE**

(30) Priority: 20.01.2023 CN 202310105105
(71) Applicant: Huawei Technologies Co., Ltd., Shenzhen, Guangdong 518129 (CN)
(72) Inventor: LI, Chengquan, Shenzhen, Guangdong 518129 (CN); HUANG, Zijun, Shenzhen, Guangdong 518129 (CN); HU, Donghua, Shenzhen, Guangdong 518129 (CN); HONG, Tailiang, Shenzhen, Guangdong 518129 (CN); WANG, Daibin, Shenzhen, Guangdong 518129 (CN)
(74) Representative: Pfenning, Meinig & Partner mbB
(86) International application number: PCT/CN2023/137572
(87) International publication number: WO 2024/152792

(57) **Abstract**

This application provides an application installation method and a device. **In** the method, the device may manage an initiator of installing an application, and identify an application installation behavior of the initiator. When the application installation behavior of the initiator meets a user expectation and is secure, the device may conveniently implement local installation or distributed installation of the application. This reduces complexity of a user operation. When the application installation behavior of the initiator does not meet a user expectation and is insecure, the device may authorize an installation credential, so that an installation process of the application is known and controllable. This ensures necessity, effectiveness, and security of application installation. Therefore, a phenomenon that the initiator installs the application silently and maliciously is avoided, and the method is applicable to a scenario in which a single application is installed and a scenario in which applications are installed in batches. This helps improve necessity, effectiveness, and security of application installation.

## Description

This application claims priority to Chinese Patent Application No. 202310105105.2, filed with the China National Intellectual Property Administration on January 20, 2023 and entitled "APPLICATION INSTALLATION METHOD AND DEVICE", which is incorporated herein by reference in its entirety.

### TECHNICAL FIELD

This application relates to the field of terminal technologies, and in particular, to an application installation method and a device.

### BACKGROUND

As internet products rapidly develop, applications (application, APP) are widely used in devices, to help meet user requirements such as photographing, multimedia viewing, social chatting, and multi-device connection.

Currently, when an application is installed for the first time, a device performs installation authentication. For example, the device prompts a user to press a physical button twice to pop up an authentication screen for installation authentication, or prompts a user to choose whether to trust an insecure enterprise certificate for installation authentication, or prompts a user to set installation permission for installation authentication. After authentication succeeds, the device may install the application. Otherwise, the device may refuse to install the application.

However, installation of some applications may bypass installation authentication of the device, or even the device does not have installation authentication for an application. As a result, an application that does not meet a user expectation is installed on the device. The above vulnerability is maliciously exploited by the application to install and promote the application. This deteriorates user experience.

### SUMMARY

This application provides an application installation method and a device, to implement local installation or distributed installation of an application by managing all installation parties, so that a user can know and control an application installation process. This implements unified authentication and installation of the application, and avoids installation of an application that does not meet a user expectation, and improves user experience of installing the application.

According to a first aspect, an application installation method is provided, and applied to a first device. The first device includes a first interface and a first functional module. The method includes: The first interface sends a first request to the first functional module after receiving a first event, where the first event indicates that an initiator requests to install a first application on a second device, the first request is used to apply for a first installation credential, and the first installation credential is used to allow the initiator to request, through the first interface, the first functional module to install the first application on the second device; the first functional module sends the first installation credential to the first interface in response to the first request; the first interface sends a second request to the first functional module, where the second request is used to request to install the first application on the second device, and the second request carries the first installation credential; and the first functional module performs, in response to the second request, a corresponding operation of installing the first application on the second device.

According to the method provided in the first aspect, the authorized first interface and the first functional module used to manage an application installation process may be disposed in the first device. In some examples, the first interface may be an authorized interface in the first device. The first functional module is a package management service in the first device.

When the initiator wants to install the first application on the second device, the initiator may send the first event to the first interface. After receiving the first event, the first interface may send the first request to the first functional module, and can apply for the first installation credential from the first functional module based on the first request. The first functional module may determine, in one or more manners of a distributed device, a server, or user confirmation, whether the initiator is allowed to request to install the first application on the second device. In other words, the first functional module may identify whether the first application that the initiator requests to install on the second device meets a user expectation.

When the first functional module determines that the sender is allowed to request to install the first application on the second device, the first functional module may send the first installation credential to the first interface. The first interface may send the second request to the first functional module based on the first installation credential, and can request, based on the second request, the first functional module to install the first application on the second device.

When the second device is the first device, the first functional module may install the first application on the first device. When the second device is not the first device, the first functional module may send, to the second device, a request used to request to install the first application, so that the second device can install the first application based on the request.

In this way, the first functional module may manage the initiator that requests, through the first interface, to install the first application on the second device, and the first application that meets a user expectation can be installed on the second device by applying for the installation credential, so that an application installation process is known and controllable, and local installation or distributed installation of the application is implemented. This ensures security of installing the application and improves user experience of installing the application.

In a possible design, that the first functional module sends the first installation credential to the first interface includes: The first functional module sends a third request to a third device, where the third request is used to query whether the first application is installed on the third device, and the third device and the first device are in a same distributed network; the first functional module receives a first result sent by the third device, where the first result indicates whether the first application is installed on the third device; and the first functional module sends the first installation credential to the first interface when the first result indicates that the first application is installed on the third device.

Therefore, when the third device and the first device are in the same distributed network, the first functional module may query the third device whether the first application is installed on the third device. The third device is a distributed device of the first device. The third device may be one or more devices.

When the first application is installed on the third device, the first functional module may determine that the first application meets the user expectation. Therefore, the first functional module may send the first installation credential to the first interface, so that the initiator can be allowed to request to install the first application on the second device.

When the first application is not installed on the third device, the first functional module cannot determine whether the first application meets the user expectation. Therefore, the first functional module may continue to determine, in another manner like the server or user confirmation, whether the first application meets the user expectation, to avoid a case in which an application that meets the user expectation cannot be installed on the second device. Alternatively, the first functional device may not send the first installation credential to the first interface, so that a request that is initiated by the initiator through the first interface and that is used to apply for the first installation credential can be shielded, to prevent an application that does not meet the user expectation from being installed on the second device.

In this way, the first functional module may query one or more devices located in the same distributed network as the first device whether the first application is installed on a device, to determine whether to send the first installation credential, so that confirmation in another manner like the server or user confirmation can be exempted. This reduces interaction complexity.

In a possible design, that the first functional module sends the first installation credential to the first interface includes: The first functional module sends a fourth request to a server, where the fourth request is used to query whether the first application has been installed on a fourth device, the fourth device and the first device are located in the same distributed network, and the server stores installation information of an application installed on another device located in the same distributed network as the first device; the first functional module receives a second result sent by the server, where the second result indicates whether the first application has been installed on the fourth device; and the first functional module sends the first installation credential to the first interface when the second result indicates that the first application has been installed on the fourth device.

Therefore, the first functional module may query the server whether the first application has been installed on the fourth device. The fourth device and the first device are located in the same distributed network. The fourth device is a distributed device of the first device. The fourth device may be one or more devices. The server stores installation information of an application installed on one or more devices located in the same distributed network as the first device.

That the application has been installed on the device may include two cases: The application is installed on the device; and the application has been installed on the device but is deleted or uninstalled, and a difference between a deletion time point and a current time point is within an exemption period of the application.

When the first application has been installed on the fourth device, the first functional module may determine that the first application meets the user expectation. Therefore, the first functional module may send the first installation credential to the first interface, so that the initiator can be allowed to request to install the first application on the second device.

When the first application has not been installed on the fourth device, the first functional module cannot determine whether the first application meets a user expectation. Therefore, the first functional module may continue to determine, in another manner like a distributed device or user confirmation, whether the first application meets the user expectation, to avoid a case in which an application that meets the user expectation cannot be installed on the second device. Alternatively, the first functional device may not send the first installation credential to the first interface, so that a request that is initiated by the initiator through the first interface and that is used to apply for the first installation credential can be shielded, to prevent an application that does not meet the user expectation from being installed on the second device.

In this way, the first functional module may query, by using the server, one or more devices (for example, the fourth device) located in the same distributed network as the first device whether the first application has been installed on a device, to determine whether to send the first installation credential, so that confirmation in another manner like the distributed device or user confirmation can be exempted. This reduces interaction complexity.

In a possible design, the first device further includes a second functional module; and that the first functional module sends the first installation credential to the first interface includes: The first functional module invokes the second functional module in response to the first request; the second functional module displays a first screen on a display of the first device, where the first screen is used to determine whether a user installs the first application on the second device; the second functional module receives a second event for the first screen, where the second event indicates whether the user determines to install the first application on the second device; the second functional module sends a third result to the first functional module in response to the second event, where the third result indicates whether the user determines to install the first application on the second device; and the first functional module sends the first installation credential to the first interface when the third result indicates that the user determines to install the first application on the second device.

Therefore, the second functional module of a screen for performing user confirmation verification may be further disposed in the first device. In some examples, the second functional module is an authentication service in the first device.

In this way, the first functional module may invoke the second functional module. The second functional module may display the first screen on the display of the first device, and can query, by using the first screen, the user whether to confirm to install the first application on the second device, so that silent or background installation is explicit, and the user confirms necessity, effectiveness, and security of the installation.

When the user confirms to install the first application on the second device, the first functional module may determine that the first application meets a user expectation. Therefore, the first functional module may send the first installation credential to the first interface, so that the initiator can be allowed to request to install the first application on the second device.

When the user confirms not to install the first application on the second device, the first functional module determines that the first application does not meet a user expectation. Therefore, the first functional device may not send the first installation credential to the first interface, so that a request that is initiated by the initiator through the first interface and that is used to apply for the first installation credential can be shielded, to prevent an application that does not meet the user expectation from being installed on the second device.

In this way, the first functional module invokes the second functional module, and determines whether to send the first installation credential by querying the user, by using the first screen, whether to install the first application on the second device, so that the user knows and controls an application installation process, and the user actively confirms necessity, validity, and security of the installation.

In conclusion, the first functional module may determine, in one or more manners such as a distributed device, a server, or user confirmation, whether to send the first installation credential. Therefore, flexibility of authorizing, by the first functional module, an installation credential to the initiator is improved.

In a possible design, that the first functional module sends the first installation credential to the first interface includes: The first functional module sends the first installation credential to the first interface when a security level and/or a risk level of the second device meet/meets a first preset condition.

Therefore, before authorizing the installation credential to the initiator, the first functional module may check the security level and/or the risk level of the second device, to ensure security of installing an application on the second device.

In a possible design, the first installation credential includes an identifier of an application, a validity period of the installation credential, an identifier of the initiator, and an identifier of a device on which an application is to be installed.

In a possible design, that the first functional module performs, in response to the second request, a corresponding operation of installing the first application on the second device includes: When an application indicated by the first installation credential is the first application and a device indicated by the first installation credential is the second device, the first functional module performs the corresponding operation of installing the first application on the second device.

Therefore, the first functional module may verify validity of the installation credential, to determine whether to perform a corresponding operation of installing the first application on the second device. This avoids a phenomenon that the initiator uses the installation credential without authorization to request to install an application that does not meet a user expectation.

In a possible design, that the first functional module performs, in response to the second request, a corresponding operation of installing the first application on the second device includes: When a receiving time point of the second request is within the validity period of the first installation credential, the first functional module performs the corresponding operation of installing the first application on the second device.

Therefore, the first functional module may verify the validity period of the installation credential, to determine whether to perform a corresponding operation of installing the first application on the second device. This avoids a phenomenon that the initiator uses the installation credential without authorization to request to install an application that does not meet a user expectation.

In conclusion, the first functional module may verify validity and/or a validity period of the installation credential. This can avoid using the installation credential by the initiator without authorization, thereby ensuring validity and security of installing the application.

In a possible design, the first device further includes a second interface corresponding to a first control; and the method further includes: The first device displays the first control on the display of the first device, where the first control is used to trigger installation of a second application on a fifth device; the second interface sends a fifth request to the first functional module after receiving a third event for the first control, where the third event indicates that the initiator requests to install the second application on the fifth device, and the fifth request is used to request to install the second application on the fifth device; and the first functional module performs, in response to the fifth request, the corresponding operation of installing the second application on the fifth device.

Therefore, a second interface corresponding to a trusted first control other than the first interface may be further disposed in the first device. In some examples, the first control corresponding to the second interface may be a trusted control in the first device.

When the initiator wants to install the second application on the fifth device, the initiator may present the first control to the user on the display of the first device. The initiator may send the third event for the first control to the second interface. After receiving the third event for the first control, the second interface may send the fifth request to the first functional module without applying for an installation credential, and can request, based on the fifth request, the first functional module to install the second application on the fifth device. The first functional module may determine that the second application meets a user expectation. Therefore, when the fifth device is the first device, the first functional module may install the second application on the fifth device. When the fifth device is not the first device, the first functional module may send, to the fifth device, a request used to request to install the second application, so that the fifth device can install the second application based on the request.

In this way, the first functional module may manage the initiator that requests, through the second interface corresponding to the first control, to install the second application on the fifth device, without applying for an installation credential, and the second application that meets a user expectation can be quickly installed on the fifth device, so that an application installation process is known and controllable, and local installation or distributed installation of the application is implemented. This ensures security of installing the application and improves user experience of installing the application.

In a possible design, that the first functional module requests the fifth device to install the second application includes: When a security level and/or a risk level of the fifth device meet/meets a second preset condition, the first functional module performs the corresponding operation of installing the second application on the fifth device.

Therefore, before executing the corresponding operation of installing the second application on the fifth device, the first functional module may check the security level and/or the risk level of the fifth device, to ensure security of installing an application on the fifth device.

**In** a possible design, the first device further includes a third interface and the second functional module. The method further includes: The third interface sends a sixth request to the first functional module after receiving a fourth event, where the fourth event indicates that the initiator requests to install a third application on the first device, the sixth request is used to apply for a second installation credential, and the second installation credential is used to allow the initiator to request, through the third interface, the first functional module to install the third application on the first device; the first functional module invokes the second functional module in response to the sixth request; the second functional module displays a second screen on the display of the first device, where the second screen is used to determine whether the user installs the third application on the first device; the second functional module receives a fifth event for the second screen, where the fifth event indicates whether the user determines to install the third application on the first device; the second functional module sends a fourth result to the first functional module in response to the fifth event, where the fourth result indicates whether the user determines to install the third application on the first device; the first functional module sends the second installation credential to the third interface when the fourth result indicates that the user determines to install the third application on the first device; the third interface sends a seventh request to the first functional module, where the seventh request is used to request to install the third application on the first device, and the seventh request carries the second installation credential; and the first functional module installs the third application on the first device in response to the seventh request.

Therefore, in addition to the first interface, or the first interface and the second interface, a third interface and the second functional module of a screen for performing user confirmation verification may be further disposed in the first device. In some examples, the third interface may be an unauthorized interface in the first device. The second functional module may be an authentication service in the first device.

When the initiator wants to install the third application on the first device, the initiator may send the fourth event to the third interface. After receiving the fourth event, the third interface may send the sixth request to the first functional module, and can apply for the second installation credential from the first functional module based on the sixth request. For the second installation credential, refer to the foregoing description of the first installation credential. The second installation credential includes an identifier of an application, a validity period of the installation credential, an identifier of the initiator, and an identifier of a device on which an application is to be installed.

The first functional module may determine, in a manner of user confirmation, whether the initiator is allowed to request to install the third application on the first device. In this way, the first functional module may invoke the second functional module. The second functional module may display the second screen on the display of the first device, and can query, by using the second screen, the user whether to confirm to install the third application on the first device, so that silent or background installation is explicit, and the user confirms necessity, effectiveness, and security of the installation.

When the user confirms to install the third application on the first device, the first functional module may determine that the first application meets a user expectation. Therefore, the first functional module may send the first installation credential to the third interface, so that the initiator can be allowed to request to install the third application on the first device.

When the user confirms not to install the third application on the first device, the first functional module determines that the first application does not meet a user expectation. Therefore, the first functional device may not send the first installation credential to the third interface, so that a request that is initiated by the initiator through the third interface and that is used to apply for the second installation credential can be shielded, to prevent an application that does not meet the user expectation from being installed on the first device.

Therefore, the third interface may send the seventh request to the first functional module based on the second installation credential, and can request, based on the seventh request, the first functional module to install the third application on the first device. The first functional module may install the third application on the first device.

In this way, the first functional module may manage the initiator that requests, through the third interface, to install the third application on the first device, whether to authorize the installation credential is determined through user confirmation, and the third application that meets a user expectation can be installed on the first device, so that an application installation process is known and controllable, and local installation of the application is implemented. This ensures security of installing the application and improves user experience of installing the application.

In addition, in addition to the foregoing implementation, when receiving the sixth request, the first functional module may determine that the initiator is not allowed to request to install the third application on the first device, that is, the initiator is not authorized with the second installation credential. Therefore, the first functional module may directly refuse to install the third application on the first device.

In a possible design, that the first functional module installs the third application on the first device in response to the seventh request includes: When an application indicated by the second installation credential is the third application and a device indicated by the second installation credential is the first device, the first functional module installs the third application on the first device.

Therefore, the first functional module may verify validity of the installation credential, to determine whether to perform a corresponding operation of installing the third application on the first device. This avoids a phenomenon that the initiator uses the installation credential without authorization to request to install an application that does not meet a user expectation.

In a possible design, that the first functional module installs the third application on the first device in response to the seventh request includes: When a receiving time point of the seventh request is within the validity period of the second installation credential, the first functional module installs the third application on the first device.

Therefore, the first functional module may verify the validity period of the installation credential, to determine whether to perform a corresponding operation of installing the third application on the first device. This avoids a phenomenon that the initiator uses the installation credential without authorization to request to install an application that does not meet a user expectation.

In conclusion, the first functional module may verify validity and/or a validity period of the installation credential. This can avoid using the installation credential by the initiator without authorization, thereby ensuring validity and security of installing the application.

According to a second aspect, a device is provided, including a memory and a processor, where the memory is configured to store an executable program or instructions, and the processor is configured to invoke the executable program or the instructions in the memory, so that the device performs the method in any one of the first aspect or the possible designs of the first aspect.

According to a third aspect, a chip system is provided, where the chip system is applied to a device including a memory and a sensor, the chip system includes a processor, and when the processor executes an executable program or instructions stored in the memory, the device implements the method in any one of the first aspect or the possible designs of the first aspect. In addition, the device may further include a display.

According to a fourth aspect, a readable storage medium is provided, where the readable storage medium stores an executable program or instructions, and when the executable program or the instructions are executed by a processor, a device implements the method in any one of the first aspect or the possible designs of the first aspect.

A fifth aspect provides a program product, including an executable program or instructions, where the executable program or the instructions are stored in a readable storage medium, at least one processor of a device may read the executable program or the instructions from the readable storage medium, and the at least one processor executes the executable program or the instructions, so that the device implements the method in any one of the first aspect or the possible designs of the first aspect.

### BRIEF DESCRIPTION OF DRAWINGS

FIG. 1 is a diagram of a structure of a device according to an embodiment of this application;
FIG. 2 is a block diagram of a software structure of a device according to an embodiment of this application;
FIG. 3A to FIG. 3C are diagrams of human-computer interaction interfaces according to an embodiment of this application;
FIG. 4 is a diagram of a human-computer interaction interface according to an embodiment of this application;
FIG. 5 is an interaction diagram of an application installation method according to an embodiment of this application;
FIG. 6A and FIG. 6B are an interaction diagram of an application installation method according to an embodiment of this application;
FIG. 7A to FIG. 7C are an interaction diagram of an application installation method according to an embodiment of this application;
FIG. 8A and FIG. 8B are an interaction diagram of an application installation method according to an embodiment of this application;
FIG. 9A to FIG. 9D are an interaction diagram of an application installation method according to an embodiment of this application;
FIG. 10A to FIG. 10C are an interaction diagram of an application installation method according to an embodiment of this application;
FIG. 11A and FIG. 11B are an interaction diagram of an application installation method according to an embodiment of this application;
FIG. 12 is an interaction diagram of an application installation method according to an embodiment of this application;
FIG. 13 is a schematic flowchart of an application installation method according to an embodiment of this application;
FIG. 14 is a schematic flowchart of an application installation method according to an embodiment of this application;
FIG. 15 is an interaction diagram of an application installation method according to an embodiment of this application;
FIG. 16 is an interaction diagram of an application installation method according to an embodiment of this application; and
FIG. 17 is an interaction diagram of an application installation method according to an embodiment of this application.

### DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may represent: a, b, c, a combination of a and b, a combination of a and c, a combination of b and c, or a combination of a, b and c, where each of a, b, and c may be singular or plural. It should be noted that terms "first", "second", and the like are used only for description, and cannot be understood as indicating or implying relative importance.

This application provides an application installation method, a device, a chip system, a readable storage medium, and a program product, so that local installation and distributed installation of an application can be implemented by managing an initiator of installing the application, so that an installation process of the application can be known and controlled by a user. This improves necessity, effectiveness, and security of application installation.

The initiator can request to install an application on the device. In other words, the initiator can initiate a request for installing an application to the device. In addition, the initiator may alternatively be referred to as an initiator object, an initiator platform, an origin, an initiator, another name, or the like. In some examples, the initiator may include a plurality of types, for example, an application market provided by a device, a third-party installation assistant, a browser, an advertisement, another application, and an installation link of an application.

When the application is not installed, installing the application mentioned in this application may be understood as installing the application for the first time. When the application is installed, installing the application mentioned in this application may be understood as updating a software version of the installed application. Therefore, the application installation mentioned in this application may include the foregoing two cases.

The installed application may be one or more applications. Therefore, the application installation method in this application is applicable to an installation scenario of a single application, and may also be applicable to a scenario of installing applications in batches (for example, a cloning scenario or a batch update scenario).

The local installation of the application may be understood as that the initiator requests the device to install the application on the device. The distributed installation of the application may be understood as that the initiator requests the device to install the application on another device, or on the device and another device.

The device may be directly or indirectly connected to the another device in a wired or wireless communication manner. The another device may include one or more devices. The wired communication manner may be a manner of using a coaxial cable, an optical fiber, a digital subscriber line (digital subscriber line, DSL), or the like. The wireless communication manner may be a manner of using Bluetooth, infrared, wireless (Wi-Fi), microwave, or the like.

The device may be a device like a mobile phone, a tablet computer, a notebook computer, a wearable device, a vehicle-mounted device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), a smart television, a smart screen, a high-definition television, a 4K television, a smart speaker, or a smart projector. A specific type of the device is not limited in this application.

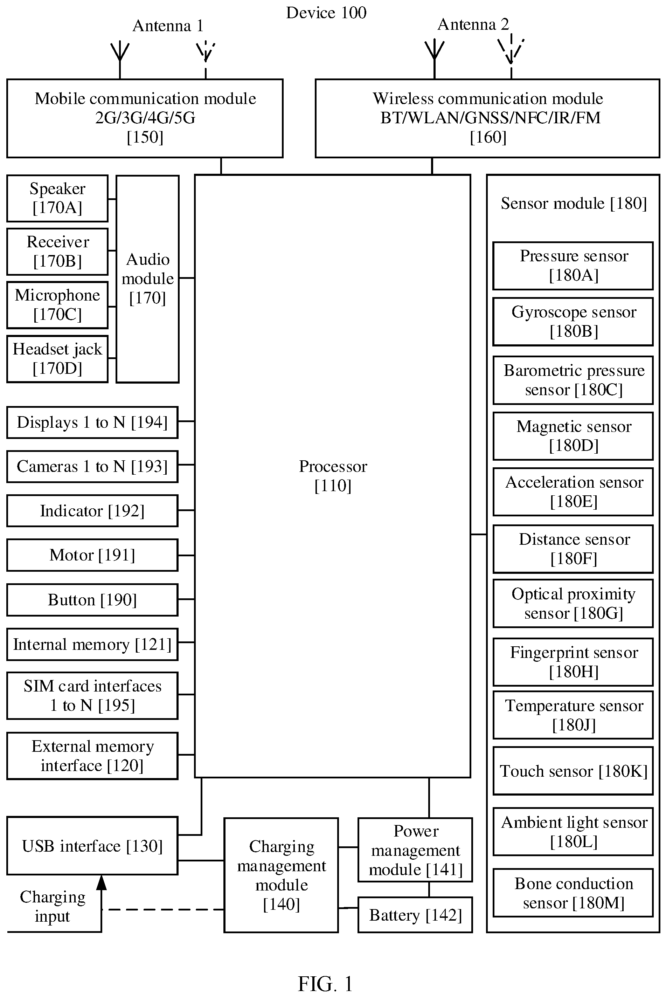

The following describes a device in this application with reference to FIG. 1 by using an example in which the device is a mobile phone.

FIG. 1 is a diagram of a structure of a device according to an embodiment of this application. As shown in FIG. 1, a device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure in this application does not constitute a specific limitation on the device 100. In some other embodiments, the device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the device 100. The controller may generate an operation control signal based on instruction operation code and a timing signal, and complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

In some embodiments, the processor 110 may include one or more interfaces. It can be understood that an interface connection relationship between the modules shown in this application is merely an example for description, and constitutes no limitation on the structure of the device 100. In some other embodiments, different interface connection manners in the foregoing embodiments or a combination of a plurality of interface connection manners may alternatively be used for the device 100.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the device 100. The charging management module 140 may further supply power to the device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the device 100 may be configured to cover one or more communication frequency bands.

The mobile communication module 150 may provide a wireless communication solution that is applied to the device 100, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (not limited to the speaker 170A, the receiver 170B, and the like), and displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the device 100 and that includes wireless communication like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the device 100 is coupled to the mobile communication module 150, and the antenna 2 is coupled to the wireless communication module 160, so that the device 100 can communicate with a network and another device through a wireless communication technology.

The device 100 implements a display function by using the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. The display 194 includes a display panel. In some embodiments, the device 100 may include one or N displays 194. N is a positive integer greater than 1.

The device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. An optical image of an object is generated through the lens, and is projected onto the photosensitive element. The photosensitive element converts an optical signal into an electrical signal, and then transmits the electrical signal to an ISP for converting the electrical signal into a digital image signal. The ISP outputs the digital image signal to the DSP for processing. The DSP converts the digital image signal into an image signal in a standard format such as RGB or YUV.

The digital signal processor is configured to process a digital signal, and may further process another digital signal in addition to a digital image signal.

The video codec is configured to compress or decompress a digital video. The device 100 may support one or more video codecs. In this way, the device 100 may play or record videos in a plurality of encoding formats.

The NPU is a neural-network (neural-network, NN) computing processor. The NPU quickly processes input information by referring to a structure of a biological neural network, for example, a transmission mode between human brain neurons, and may further continuously perform self-learning. Applications such as intelligent cognition of the device 100 may be implemented through the NPU, for example, image recognition, facial recognition, speech recognition, and text understanding

The external memory interface 120 may be used to connect to an external storage card, for example, a micro SD card, to extend a storage capability of the device 100. The external memory card communicates with the processor 110 through the external memory interface 120, to implement a data storage function.

The internal memory 121 may be configured to store computer-executable program code. The executable program code includes instructions. The processor 110 runs the instructions stored in the internal memory 121, to perform various function applications and data processing of the device 100. The internal memory 121 may include a program storage area and a data storage area. The program storage area may store an operating system, an application required by at least one function (for example, a sound playing function), and the like. The data storage area may store data (for example, audio data) created when the device 100 is used, and the like. In addition, the internal memory 121 may include a high-speed random access memory, or may include a nonvolatile memory, for example, at least one magnetic disk storage device and a flash memory.

The device 100 may implement an audio function by using the audio module 170, the speaker 170A, the receiver 170B, the microphone 170C, the headset jack 170D, the application processor, and the like.

The audio module 170 is configured to convert a digital audio signal into an analog audio signal for output, and is also configured to convert an analog audio input into a digital audio signal. The audio module 170 may be further configured to code and decode an audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset. The pressure sensor 180A is configured to sense a pressure signal, and can convert the pressure signal into an electrical signal. The gyroscope sensor 180B may be configured to determine a motion posture of the device 100. The barometric pressure sensor 180C is configured to measure barometric pressure. The magnetic sensor 180D includes a Hall sensor. The acceleration sensor 180E may detect magnitudes of accelerations of the device 100 in all directions (usually on three axes). The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature. The touch sensor 180K is also referred to as a touch panel. The touch sensor 180K may be disposed on the display 194, and the touch sensor 180K and the display 194 constitute a touchscreen, which is also referred to as a "touch screen". The bone conduction sensor 180M may obtain a vibration signal. The button 190 includes a power button, a volume button, and the like. The button 190 may be a mechanical button, or may be a touch button. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card. In some embodiments, the device 100 uses an eSIM, namely, an embedded SIM card. The eSIM card may be embedded into the device 100, and cannot be separated from the device 100.

A software system of the device 100 may use a layered architecture, an event-driven architecture, a microkernel architecture, a micro service architecture, or a cloud architecture. A type of the software system of the device is not limited in this application, for example, a Harmony operating system (harmony operating system, Harmony OS), an Android system, a Linux system, a Windows system, or an iOS system.

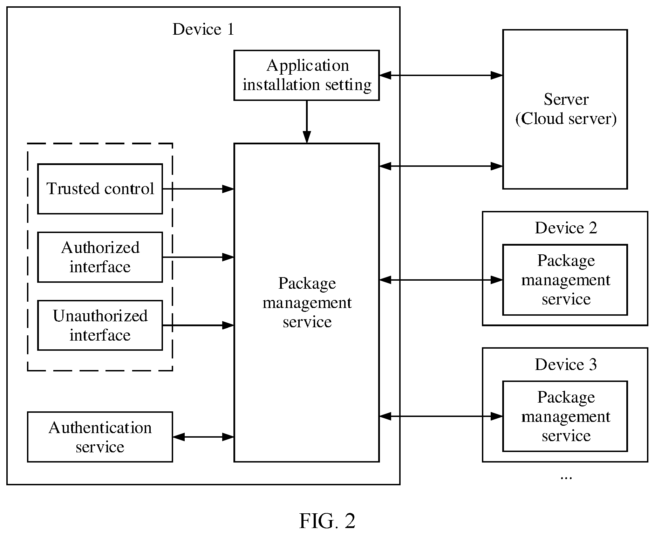

FIG. 2 is a block diagram of a software structure of an electronic device according to an embodiment of this application. For ease of description, in FIG. 2, a device to which an initiator initiates installation of an application is referred to as a device 1. For a specific implementation of the device 1, refer to the descriptions of the device 100 in FIG. 1. Details are not described herein again.

In addition, a device for installing the application is referred to as a device 4 (not shown in FIG. 2). The device 4 has a capability of installing the application. The device 4 may include one or more devices. In some examples, the device 4 may be the device 1, or may be a device other than the device 1, or may include the device 1 and a device other than the device 1.

As shown in FIG. 2, a software system of the device 1 may include one or more functional modules. The functional modules invoke each other through software interfaces. In some examples, the software system of the device 1 may include a trusted control, an authorized interface, an unauthorized interface, a package management service, an authentication service, and an application installation setting.

The package management service is separately connected to the trusted control, the authorized interface, the unauthorized interface, and the authentication service.

The trusted control is used as a trusted entry for installing the application. The trusted control is used to trigger local installation or distributed installation of the application.

Therefore, after the initiator adapts the trusted control, the initiator may implement interaction between the initiator and the package management service based on an invoking procedure of the trusted control, so that the initiator can request, by using the trusted control, the package management service to install the application on the device 4.

In some examples, the invoking procedure of the trusted control is used for the initiator to request the package management service directly to install the application on the device 4. For example, in the invoking procedure of the trusted control, parameters such as an identifier of the trusted control, a configuration file of an interface between the trusted control and the package management service, and a to-be-invoked function and a resource source for installing the application may be set.

In addition, a screen layout of the trusted control may be presented to a user based on a configuration of the device 1. In some examples, parameters such as a shape, a size, a color, transparency, a location, an icon, a character string, a picture, and a video of the trusted control may be set for the screen layout of the trusted control.

The authorized interface is used as an authorized entry other than the trusted control for installing the application. The authorized interface is used to trigger local installation or distributed installation of the application.

Therefore, after the initiator adapts the authorized interface, the initiator may implement interaction between the initiator and the package management service based on an invoking procedure of the authorized interface, so that the initiator can request, through the authorized interface, the package management service to install the application on the device 4.

In some examples, the invoking procedure of the authorized interface is used for the initiator to apply for an installation credential from the package management service and to request, based on the installation credential, the package management service to install the application on the device 4. For example, in the invoking procedure of the authorized interface, parameters such as an identifier of the authorized interface, a configuration file of an interface between the authorized interface and the package management service, a to-be-invoked function for applying for the installation credential, a to-be-invoked function and a resource source for installing the application may be set.

In some examples, the installation credential may be used as a unique credential for the initiator to request the device 1 to install the application locally or in a distributed manner on the device 4. For example, the installation credential may include related information of the application, a validity period of the installation credential, an identifier of the initiator, and an identifier of the device 4.

The related information of the application may include a unique identifier of the application. In addition, the related information of the application may further include a hash value of the application, a version number of the application, an application developer signature of the application, a screen state (for example, a screen-off state or a steady-on state) of the device 1, and the like.

The validity period of the installation credential may be understood as duration for using the installation credential, for example, 12 hours. In the validity period of the installation credential, the device 1 may initiate an installation request to install the application on the device 4. Out of the validity period of the installation credential, the device 1 cannot initiate an installation request to install the application on the device 4.

Alternatively, the validity period of the installation credential may be understood as a time period for using the installation credential. In other words, the validity period of the installation credential specifies duration, a start time point, and an end time point for using the installation credential.

For ease of description, an example in which the validity period of the installation credential is the duration for using the installation credential is used for illustration in this application.

The identifier of the initiator may be a unique identifier of the initiator, for example, a package name.

The identifier of the device 4 may include one or more of a name of the device 4, a version number of the device 4, a device number of the device 4, an identifier of the device 4 in a distributed network or a distributed scenario, and the like.

In addition, a control and/or a user interface (user interface, UI) of the authorized interface may not be presented to the user, to simplify an interaction process. Alternatively, a control and/or a user interface of the authorized interface may be presented to the user based on a configuration of the initiator, to display an interaction process in a personalized manner.

The unauthorized interface is used as an untrusted and unauthorized entry for installing the application in a manner other than the foregoing two manners. In some examples, the unauthorized interface is used to refuse to trigger local installation or distributed installation of the application. In some examples, the unauthorized interface may be used to trigger local installation or distributed installation of the application.

Therefore, after the initiator adapts the unauthorized interface, the initiator may implement interaction between the initiator and the package management service based on an invoking procedure of the unauthorized interface, so that the initiator can request, through the unauthorized interface, the package management service to install the application on the device 4.

In some examples, the invoking procedure of the unauthorized interface is used when the initiator cannot request the package management service to install the application on the device 4.

In some examples, the invoking procedure of the unauthorized interface is used for the initiator to apply for the installation credential from the package management service and to request, based on the installation credential, the package management service to install the application on the device 4. For example, in the invoking procedure of the unauthorized interface, parameters such as an identifier of the unauthorized interface, a configuration file of an interface between the unauthorized interface and the package management service, a to-be invoked function for applying for the installation credential, a to-be-invoked function and a resource source for installing the application may be set.

It can be learned that the initiator may select, based on factors such as an installation requirement and an actual situation, any interface or entry from the trusted control, the authorized interface, and the unauthorized interface for use.

The package management service is used as a main entry for authenticating and installing the application, and can manage the initiator and the device 4.

The authentication service is used as an entry for the user to confirm the installation credential granted to the initiator, and may provide a screen and a service for user confirmation verification. Therefore, the authentication service may display the screen on a display of the device 1, and may determine, based on whether the user performs an operation on the screen and a type of the operation performed by the user on the screen, whether the user determines to install the application on the device 4.

The screen is used to request the user to confirm, in any confirmation manner like preconfigured control confirmation, fingerprint confirmation, iris confirmation, or face confirmation, whether to install the application on the device 4. In addition, the screen is further used to provide the user with an entry for configuring or adjusting the device 4 and/or the application installed. A specific implementation of the screen is not limited in this application. In some examples, the screen may be any one of a widget, a window, a pop-up window, a user interface, and the like.

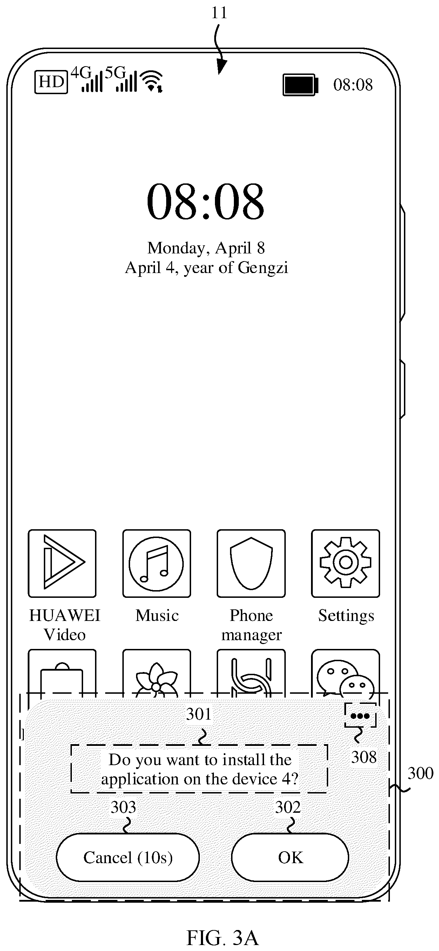

The following describes a specific implementation of the screen by using an example with reference to FIG. 3A to FIG. 3C.

FIG. 3A to FIG. 3C are diagrams of human-computer interaction interfaces according to an embodiment of this application. For ease of description, in FIG. 3A to FIG. 3C, an example in which the device 1 is a mobile phone is used for illustration.

In some examples, the mobile phone may display a window 300 on a user interface 11 shown as an example in FIG. 3A.

The user interface 11 may be a home screen (home screen). The user interface 11 may include but is not limited to a status bar, a navigation bar, a calendar indicator, a weather indicator, a plurality of application icons, and the like. The application icons include at least an icon of a video player application, an icon of a music player application, an icon of a phone manager, an icon of system settings, an icon of an application store, an icon of a gallery, an icon of an AI Life application, an icon of a chat application (for example, WeChat), and the like.

The window 300 is used to request a user to confirm whether to install an application on the device 4.

For example, the window 300 may include a prompt 301, a control 302, and a control 303.

The prompt 301 is used to query the user whether to install the application on the device 4. In addition to a text, the prompt 302 may alternatively be represented in a form of vibration, ringing, indicator blinking, or the like. The control 302 is used to trigger installation of the application on the device 4. The control 303 is used to trigger cancellation of installation of the application on the device 4.

After detecting an operation (for example, tapping the control 302) that is indicated by the user and that is of installing the application on the device 4, the mobile phone may determine that the user requires to install the application on the device 4. After detecting an operation (for example, tapping the control 303) that is indicated by the user and that is of refusing to install the application on the device 4, the mobile phone may determine that the user does not want to install the application on the device 4. In addition, the control 303 is further used to indicate remaining display duration of the window 300, for example, 10 seconds (s). Therefore, after the remaining duration, the mobile phone does not continue displaying the window 300.

After detecting that the user does not indicate any operation (for example, does not tap the control 303 or the control 304, or closes the window 300), the mobile phone may determine that the user does not give a feedback on whether to install the application on the device 4. In this case, the mobile phone may determine that the user does not want to install the application on the device 4.

In conclusion, the window 300 may be used as a screen that is provided by the authentication service in the device 1 for the user and that is used to perform user confirmation verification, so that the user confirms whether to install the application on the device 4. This is applicable to a local installation scenario and a distributed installation scenario.

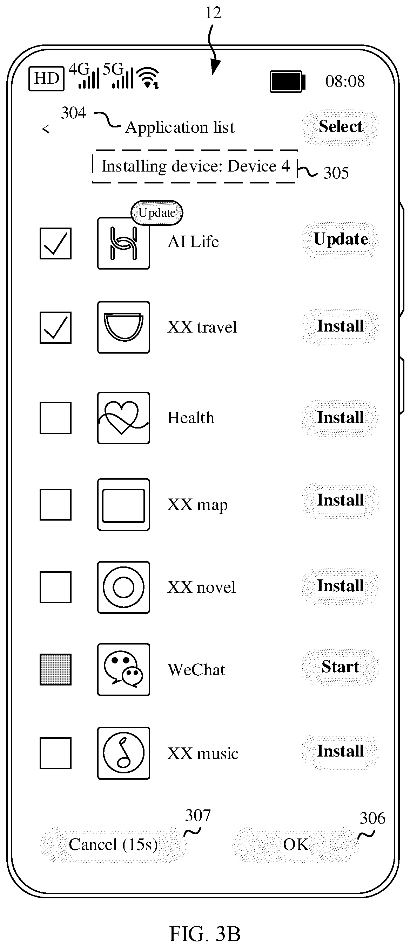

In some examples, the mobile phone may display a user interface 12 shown as an example in FIG. 3B.

The user interface 12 is used to request the user to confirm whether to install the application on the device 4.

In addition, the user interface 12 is further used to display an application list. The application list may include the application that the initiator requests the device 1 to install on the device 4, for example, an AI Life application and a travel application. The application list may further include one or more applications that are provided by the device 1 for the user and that can be installed on the device 4, for example, a health application, a map application, and a novel reading application.

For example, the user interface 12 may include an application list 304, a prompt 305, a control 306, and a control 307.

The application list 304 is used to prompt the user with applications installed on the device 4.

In this way, the application list 304 is used to facilitate the user to select one or more applications installed on the device 4.

The prompt 305 is used to inform the user that a device for installing the application is the device 4. The control 306 is used to trigger installation of the application on the device 4. The control 307 is used to trigger cancellation of installation of the application on the device 4.

After detecting an operation (for example, tapping the control 306) that is indicated by the user and that is of installing the application on the device 4, the mobile phone may determine that the user requires to install the application on the device 4. After detecting an operation (for example, tapping the control 307) that is indicated by the user and that is of refusing to install the application on the device 4, the mobile phone may determine that the user does not want to install the application on the device 4. In addition, the control 307 is further used to indicate remaining display duration of the user interface 12, for example, 15 seconds (s). Therefore, after the remaining duration, the mobile phone does not continue displaying the user interface 12. After detecting that the user does not indicate any operation (for example, does not tap the control 306 and the control 307, or closes the user interface 12), the mobile phone may determine that the user does not give a feedback on whether to install the application on the device 4. In this case, the mobile phone may determine that the user does not want to install the application on the device 4.

In conclusion, the user interface 12 may be used as a screen that is provided by the authentication service in the device 1 for the user and that is used to perform user confirmation verification, so that the user confirms whether to install an application on the device 4. This is applicable to a local installation scenario and a distributed installation scenario.

In addition, the window 300 may further include a control 308. The control 308 is used to provide an entry for adjusting the application installed on the device 4.

After detecting an operation (for example, tapping the control 308) that is indicated by the user and that is of adjusting an application installed on the device 4, the mobile phone may change from displaying the user interface 11 shown as an example in FIG. 3A to displaying the user interface 12 shown as an example in FIG. 3B.

It should be understood that, on the user interface 12, when one or more applications whose versions are the latest are installed on the device 4, the user cannot select the one or more applications. For example, a chat application (for example, WeChat) of the latest version has been installed on the mobile phone. Therefore, the user cannot select the chat application on the user interface 12 as the application to be installed on the device 4.

In this way, the user can adjust the application installed on the device 4 on the interface 12.

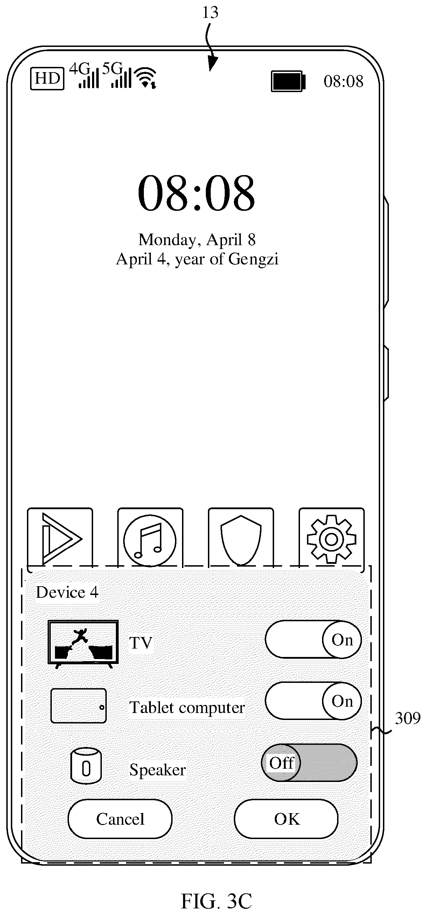

In some examples, in a distributed network or a distributed scenario, after detecting an operation that is indicated by the user and that is of setting the device 4 on which the application is to be installed, the mobile phone may display a window 309 on a user interface 13 shown as an example in FIG. 3C.

The user interface 13 may be a home screen (home screen). For a specific implementation of the user interface 13, refer to the description of the user interface 11 shown in FIG. 3A. Details are not described herein again.

The window 309 is used to prompt the user with the devices on which the application can be installed, so that the user can determine the device 4 from the foregoing devices. In other words, the window 309 may present, to the user, devices that are in the same distributed network or distributed scenario as the device 1.

In conclusion, the window 309 may be used as a screen that is provided by the authentication service in the device 1 for the user and that is of a device on which an application can be installed, so that the user can select the device 4. This is applicable to a distributed installation scenario.

In addition, the control 308 and/or the prompt 305 are/is used to provide an entry for adjusting the device 4 on which the application is installed.

After detecting an operation (for example, tapping the control 308) that is indicated by the user and that is of adjusting the device 4, the mobile phone may change from displaying the user interface 11 including the window 300 shown as an example in FIG. 3A to displaying the user interface 13 including the window 309 shown as an example in FIG. 3C.

Alternatively, after detecting an operation (for example, tapping the prompt 305) that is indicated by the user and that is of adjusting the device 4, the mobile phone may change from displaying the user interface 12 shown as an example in FIG. 3B to displaying the user interface 13 including the window 309 shown as an example in FIG. 3C.

Therefore, the window 309 is used to help the user reselect the device 4.

An application installation setting is used as an entry for a server and/or the user to set configuration information of the installation credential, and may configure or adjust a user confirmation verification rule.

In some examples, the configuration information of the installation credential may include whether to turn on a switch for authenticating installation of the application, a validity period of the installation credential, an exemption validity period for installation (referred to as an exemption period for short) of the application, whether to turn on a switch for verifying a security level of an installed device, whether to turn on a switch for verifying a risk level of a device for installation, whether to turn on a switch for allowing a device (which may also be referred to as a distributed device) other than the device 1 to install the application on the device 1, and the like.

The exemption period of the application may be understood as duration in which the application can be installed, for example, 30 days. In the exemption period of the application, when installing the application on the device 4, the device 1 may determine to make user confirmation verification exempt. Out of the exemption period of the application, when the device 1 installs the application on the device 4, user confirmation verification needs to be performed.

In addition, the exemption period of the application may alternatively be understood as a time period in which the application can be installed. In other words, the exemption period of the application specifies duration, a start time point, and an end time point for installing the application.

For ease of description, in this application, an example in which the exemption period of the application is duration in which the application can be installed is used for illustration.

In some examples, the application installation setting may display, in system settings and/or application settings of the device 1, a screen used to configure the installation credential. The screen is used to display configuration information of the installation credential to the user. The screen is further used to provide an entry for the user and/or a server to set or adjust the configuration information of the installation credential. A specific implementation of the screen is not limited in this application. In some examples, the screen may be any one of a widget, a window, a pop-up window, a user interface, and the like.

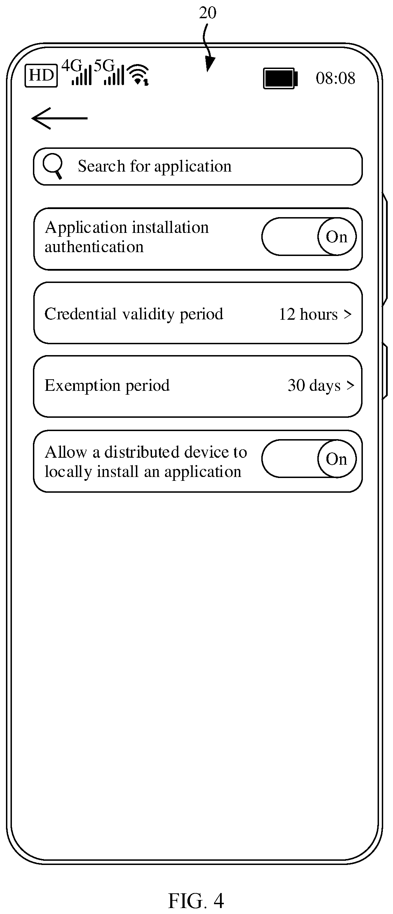

With reference to FIG. 4, the following describes an example of a feasible implementation of the screen.

FIG. 4 is a diagram of a human-computer interaction interface according to an embodiment of this application. For ease of description, in FIG. 4, an example in which the device 1 is a mobile phone is used for illustration. In some examples, the mobile phone may display a user interface 20 shown as an example in FIG. 4.

The user interface 20 is used to display configuration information of an installation credential. In addition, the user interface 20 is further used to provide an entry for the user and/or a server to set the configuration information of the installation credential. Therefore, after the user and/or the server set/sets the configuration information of the installation credential, the configuration information of the installation credential in the user interface 20 adaptively changes. The user interface 20 is further used to provide an entry for the user and/or the server to adjust the configuration information of the installation credential. Therefore, after the user and/or the server adjust/adjusts the configuration information of the installation credential, the configuration information of the installation credential in the user interface 20 adaptively changes.

In this way, the package management service in the device 1 can verify validity of the installation credential based on final configuration information of the installation credential.

In a same distributed network or distributed scenario, the device 1 and a device other than the device 1 may coordinate and cooperate with each other. For ease of description, in FIG. 2, a device 2 and a device 3 are used as examples of the device other than the device 1. For a specific implementation of the device 2 or the device 3, refer to the descriptions of the device 100 in FIG. 1. Details are not described herein again.

The package management service is further connected to a package management service in a device other than the device 1 and the device 4.

For example, when the device 4 is the device 1, and another device includes the device 2 and the device 3, the package management service in the device 1 may be separately connected to the package management service in the device 2 and the package management service in the device 3.

For another example, when the device 4 is the device 2, and the another device includes the device 3, the package management service in the device 1 may be connected to the package management service in the device 3.

When an application that needs to be installed on the device 4 is installed on the another device, the another device stores installation information of the application. In this way, the another device may provide an interface for querying the installation information of the application to the package management service in the device 1, so that the package management service in the device 1 can determine whether to make user confirmation verification exempt.

Therefore, when the application is installed on the another device, the package management service in the device 1 may determine that the application is an application that the user expects to install. In this way, the package management service in the device 1 may determine to make user confirmation verification exempt. When the application is not installed on the another device, the package management service in the device 1 determines that the application may be an application that the user does not expect to install. In this way, the package management service in the device 1 may determine to perform user confirmation verification.

The device other than the device 1 and the device 4 is further connected to the server. The package management service in the device 1 is also connected to the server.

The another device may send the installation information of the application to the server through an account, so that the server can store the installation information of the application under the account.

In some examples, the installation information of the application may be understood as an installation status of the application. For example, the installation information of the application may include an identifier (for example, a package name) of the application, a version number of the application, an exemption period of the application, a device identifier of the device on which the application is to be installed, an installation initiator, installation time, a public key of an application developer, and the like.

After the another device deletes the application, the another device may also notify, through the account, the server that the application has been deleted, so that the server can update the installation information of the application under the account, for example, set or adjust the exemption period of the application, or add an identifier indicating that the application has been deleted.

In addition, the another device may alternatively notify the device 1 that the application has been deleted, and the device 1 may notify, through the account, the server that the application has been deleted, so that the server can update the installation information of the application under the account.

In some examples, considering that storage space of the server is limited and the installed application has been deleted, the server may continue to store the installation information of the application within the exemption period of the application, and delete the installation information of the application out of the exemption period of the application. A specific value of the exemption period of the application is not limited in this application.

It can be learned that the server may store, under the account, installation information of an application that is installed and/or that has been installed on another device.

After the package management service in the device 1 uses the same account, the server may provide, for the package management service in the device 1, an interface for querying installation information of an application that needs to be installed on the device 4, so that the package management service in the device 1 can determine whether to make user confirmation verification exempt.

Therefore, when the server stores the installation information of the application, the package management service in the device 1 may determine that the application is an application that the user expects to install. In this way, the package management service in the device 1 may determine to make user confirmation verification exempt. When the server does not store the installation information of the application, the package management service in the device 1 may determine that the application may be an application that the user does not expect to install. In this way, the package management service in the device 1 may determine to perform user confirmation verification.

After the application is installed on the device 4, the device 1 may send the installation information of the application to the server through the same account. Alternatively, the device 4 may send the installation information of the application to the server through the same account. In this way, the server can store the installation information of the application under the account.

After the device 4 deletes the application, the device 4 may notify, through the same account, the server that the application has been deleted, so that the server can update the installation information of the application under the account. Alternatively, the device 4 may notify the device 1 that the application has been deleted, so that the device 1 notifies the server, through the account, that the application has been deleted.

It can be learned that the server may store, under the same account, installation information of applications that are installed and/or that have been installed on the device 1, the device 4, another device, and the like.

In other words, a same account may be bound to a plurality of connected devices, so that the plurality of devices can store, in the server through the same account, installation information of applications that are installed and/or that have been installed.

It should be understood that, in a same distributed network or distributed scenario, a plurality of devices such as the device 1, the device 4, and another device may coordinate and cooperate with each other. The plurality of devices may store, in the server through a same account, installation information of applications that are installed and/or that have been installed.

In conclusion, the server stores installation information of applications that are used by a plurality of devices and that are under a same account. Therefore, the server may provide, for a package management service in each device that uses the account, an interface for querying installation information of an application that needs to be installed, so that the corresponding package management service can determine whether to make user confirmation verification exempt.

The application installation setting is connected to the server.

The server stores configuration information of a default installation credential. Therefore, the application installation setting may receive the configuration information that is of the installation credential and that is set by the server, so that the application installation setting can use the configuration information of the installation credential to provide a basis for the package management service in the device 1 to perform user confirmation verification.

In addition, the application installation setting may further receive configuration information that is of the installation credential and that is set by the user, so that the application installation setting can use the configuration information of the installation credential to provide a basis for the package management service in the device 1 to perform user confirmation verification.

In some examples, if the user does not provide the configuration information of the installation credential, an application installation device may use the configuration information that is of the installation credential and that is set by the server. After the user provides one or more parameters in the configuration information of the installation credential, the application installation device may use the one or more parameters in the configuration information that is of the installation credential and that is set by the user, and use remaining parameters in the configuration information that is of the installation credential and that is set by the server.

The server mentioned in this application may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform.

The device 1 may be directly or indirectly connected to the server in a wired or wireless communication manner. The wired communication manner may be a manner of using a coaxial cable, an optical fiber, a digital subscriber line (digital subscriber line, DSL), or the like. The wireless communication manner may be a manner of using Bluetooth, infrared, wireless (Wi-Fi), microwave, or the like.

In some examples, a network may be used as a medium for communication between the device 1 and the server, and may be a wide area network, or a local area network, or a combination thereof. For example, this application may be implemented through a cloud technology (cloud technology). The cloud technology is a hosting technology in which a series of resources such as hardware, software, and a network are unified in a wide area network or a local area network, to implement data computing, storage, processing, and sharing.

In some examples, the device 1 and the server belong to a same vendor. The server and a device other than the device 1 may belong to a same vendor, or may belong to different vendors. This is not limited in this application.

With reference to the foregoing descriptions, the following describes in detail specific implementations of the functional modules in the device 1.

The package management service can manage the initiator.

When the initiator uses the trusted control, the initiator may generate an installation initiation behavior. The package management service identifies the installation initiation behavior as a trusted installation behavior. In other words, the installation initiation behavior meets a user expectation and is secure.

In this way, the package management service may determine that the user requires to install the application on the device 4. Therefore, the package management service can install the application on the device 4 without performing user confirmation verification.

It can be learned that the package management service may identify an initiator corresponding to the trusted control, and provide, for the initiator corresponding to the trusted control, a service of exempting user confirmation verification and installing the application on the device 4.

When the initiator uses the authorized interface, the initiator may generate an installation initiation behavior through the authorized interface. The package management service identifies the installation initiation behavior as a trusted installation behavior. However, the package management service cannot determine whether the application that the initiator requests to install is an application that meets a user expectation. In other words, the installation initiation behavior is secure, but does not necessarily meet a user expectation.

Based on this, the initiator needs to apply for an installation credential from the package management service through the authorized interface. The package management service determines whether to make user confirmation verification exempt through a device and/or a server other than the device 4. Therefore, when the package management service determines to make user confirmation verification exempt, complexity of a user operation can be reduced. When the package management service determines to perform user confirmation verification, the user, the server, and a device that is in the same distributed network or distributed scenario as the device 4 jointly confirm necessity, effectiveness, and security of installation.

In some examples, the package management service may determine to make user confirmation verification exempt when the application is installed (also referred to as installed) on a device other than the device 4. Otherwise, the package management service may determine to perform user confirmation verification.

In some examples, the package management service may determine to make user confirmation verification exempt when the server determines that installation information for an application under a same account indicates that the application has been installed. Otherwise, the package management service may determine to perform user confirmation verification.

In some examples, the package management service may determine to make user confirmation verification exempt when the server determines that installation information for an application under a same account indicates that the application is installed. Otherwise, the package management service may determine to perform user confirmation verification.

The same account is a same account used by the device 1 and a device other than the device 1 and the device 4.

In some examples, when the user determines to install an application on the device 4, the package management service may determine to make user confirmation verification exempt. Otherwise, the package management service may determine to perform user confirmation verification.

It should be understood that the package management service may determine, in at least one manner in the foregoing examples, whether to make user confirmation verification exempt. In addition, this application includes but is not limited to the manner in the foregoing examples to determine whether to make user confirmation verification exempt.

The package management service can send the installation credential to the initiator through the authorized interface when determining to make user confirmation verification exempt. The package management service may invoke (which may also be referred to as start) an authentication service when determining to perform user confirmation verification. The authentication service may present, to the user on a display of the device 1, a screen used to perform user confirmation verification. In this way, a silent installation initiation behavior or a background installation initiation behavior can be made explicit.

After learning from the screen that the user confirms to install the application, the authentication service may notify the package management service that the user confirms to install the application. The package management service can send an installation credential to the initiator through the authorized interface.

After learning from the screen that the user confirms not to install the application, the authentication service may notify the package management service that the user confirms not to install the application. The package management service may refuse to install the application on the device 4.

Therefore, after receiving the installation credential, the initiator uses the installation credential to request, through the authorized interface again, the package management service to install the application on the device 4. When the installation credential is valid, the package management service may install the application on the device 4. When the installation credential is invalid, the package management service may refuse to install the application on the device 4.

It can be learned that the package management service may identify an initiator corresponding to an authorized interface, and provide, for the initiator corresponding to the authorized interface, a service for authorizing the installation credential, verifying validity of the installation credential, and selecting, based on the validity of the installation credential, whether to install the application on the device 4.

When the initiator uses an unauthorized interface, the initiator may generate an installation initiation behavior through the unauthorized interface. The package management service may identify that the installation initiation behavior may be a trusted installation behavior or an untrusted installation behavior.

In some examples, the package management service may determine that the installation initiation behavior is insecure and does not meet a user expectation. In this way, the package management service may refuse to install an application on the device 4.

In some examples, the package management service may determine that the installation initiation behavior is secure, but may not necessarily be against a user expectation. In this way, the package management service may determine to perform user confirmation verification. The package management service may invoke the authentication service. The authentication service may present, to the user on a display of the device 1, a screen used to perform user confirmation verification. In this way, a silent installation initiation behavior or a background installation initiation behavior can be made explicit.

After learning from the screen that the user confirms to install the application, the authentication service may notify the package management service that the user confirms to install the application. The package management service can send an installation credential to the initiator through the unauthorized interface. The initiator uses the installation credential to request, through the unauthorized interface again, the package management service again to install the application on device 4. When the installation credential is valid, the package management service may install the application on the device 4. When the installation credential is invalid, the package management service may refuse to install the application on the device 4.

After learning from the screen that the user confirms not to install the application, the authentication service may notify the package management service that the user confirms not to install the application. The package management service may refuse to install the application on the device 4.

It can be learned that the package management service may identify an initiator corresponding to the unauthorized interface. In addition, the package management service may reject a behavior of installing an application on the device 4 by the initiator corresponding to the unauthorized interface. Alternatively, the package management service may provide, for the initiator corresponding to the unauthorized interface, a service for requesting user confirmation verification, authorizing the installation credential, verifying validity of the installation credential, and selecting, based on the validity of the installation credential, whether to install the application on the device 4.

In conclusion, regardless of which one of the trusted control, the authorized interface, and the unauthorized interface is used as an entry by the initiator to send an installation initiation behavior to the package management service, the package management service may identify a corresponding initiator, and provide a related service for the corresponding initiator. Therefore, the package management service can manage the initiator of installing an application.

In addition, the package management service may also manage the device 4.

The initiator can dynamically sense devices in a same distributed network or distributed scenario. Therefore, the initiator may flexibly select one or more devices (namely, the device 4), so that the initiator can request the package management service to install an application on the device 4.

Considering that the device 4 may have a risk or an insecure factor of the device 4, the package management service may verify a security level of the device 4 and/or a risk level of the device 4, to determine whether the device 1 can initiate an installation request to the device 4, that is, whether the device 1 can install an application on the device 4.

A security level of a device may indicate security performance of the device at delivery. Generally, the security level of a device is fixed. A risk level of a device may indicate a risk situation or an unreliable factor of the device in a subsequent use process. Generally, the risk level of a device varies.

When the device 4 includes only the device 1, the package management service does not need to verify the risk level and the security level of the device 4.

When the device 4 includes a device other than the device 1, the package management service needs to verify the risk level of the device 4 and/or the security level of the device 4.

In some examples, the package management service may set various verification rules to verify the security level of the device 4.

For example, the package management service may determine, according to verification rules shown in Table 1, whether the device 1 can initiate an installation request to the device 4 by comparing the security level of the device 1 with the security level of the device 4.

**Table 1 Security level verification rules**

| | Device 1 has a high security level | Device 1 has a medium security level | Device 1 has a low security level |
|---|---|---|---|
| Device 4 has a high | Can | Cannot | Cannot |

| security level | | | |
|---|---|---|---|
| Device 4 has a medium security level | Can | Can | Cannot |
| Device 4 has a low security level | Can | Can | Can |

**In** Table 1, a device having a high security level may initiate an installation request to a device having a low security level. A device having a low security level cannot initiate an installation request to a device having a high security level. Devices having a same security level can initiate an installation request or risk levels of the devices continue to be verified.

A security level of each device may be set based on factors such as a model, a manufacturer, built-in software, built-in hardware, and historical data of the device.

According to the security level verification rules in Table 1, when the security level of the device 1 is higher than the security level of the device 4, the package management service may initiate an installation request to the device 4. When the security level of the device 1 is lower than the security level of the device 4, the package management service does not initiate an installation request to the device 4. When the security level of the device 1 is equal to the security level of the device 4, the package management service may initiate an installation request to the device 4, or may continue to verify the risk level of the device 4.

It should be understood that the foregoing security level verification rule is merely an example. This application may further include another security level verification rule to verify the security level of the device 4.

In some examples, the package management service may set various verification rules to verify the risk level of the device 4.

For example, the package management service may determine, according to verification rules shown in Table 2, in each scenario with reference to the security level of the device 4, whether the device 1 can initiate an installation request to the device 4.

**Table 2 Risk level verification rules**

| | Local installation scenario | Local update scenario | Distributed installation scenario (with installation on another device) | Distributed installation scenario (with storage in a server) |
|---|---|---|---|---|
| Device 4 has a high risk level | Prohibit | Prohibit | Prohibit | Prohibit |
| Device 4 has a medium risk level | Perform user confirmation verification | Perform user confirmation verification | Perform user confirmation verification | Perform user confirmation verification |
| Device 4 has a low risk level | Perform user confirmation verification | Make user confirmation verification exempt | Make user confirmation verification exempt | Make user confirmation verification exempt |

In Table 2, installation of an application is prohibited on a device having a high risk level in each scenario. For a device having a medium risk, user confirmation verification needs to be performed in each scenario. For a device having a low risk, user confirmation verification needs to be performed in local installation scenario. In other scenarios, user confirmation verification can be exempted.

The risk level of each device may be set based on factors such as software and hardware that are installed in the device.

According to the risk level verification rules in Table 2, when the risk level of the device 4 is high, the package management service does not initiate an installation request to the device 4 in any scenario. When the risk level of the device 4 is medium, in any scenario, the package management service may initiate an installation request to the device 4, and user confirmation verification needs to be performed. When the risk level of the device 4 is low, in a local installation scenario, the package management service may initiate an installation request to the device 4, and user confirmation verification needs to be performed. In a scenario other than the local installation scenario, the package management service may initiate an installation request to the device 4 and determine to make user confirmation verification exempt.

It should be understood that the foregoing security level verification rule is merely an example. This application may further include another security level verification rule to verify the security level of the device 4.

In conclusion, the package management service may choose whether to verify the security level of the device 4, or may choose whether to verify the risk level of the device 4, or may choose whether to verify the security level and the risk level of the device 4, to ensure security of installing an application on the device 4.

It may be understood that the structure in this application does not constitute a specific limitation on the device 100. In some other embodiments, the device 100 may include more or fewer components than those shown in the figure, or a combination of a part of the components, or splits from a part of the components, or an arrangement of different components. The components shown in the figure may be implemented by hardware, software, or a combination of software and hardware.

Based on the foregoing descriptions, in the following embodiments of this application, a device having the structures shown in FIG. 1 and FIG. 2 is used as an example to describe in detail the application installation method provided in this application with reference to the accompanying drawings and application scenarios.

When the initiator selects any interface from the trusted control, the authorized interface, and the unauthorized interface, each functional module in the device may provide a service corresponding to each interface, to implement local installation or distributed installation of an application.

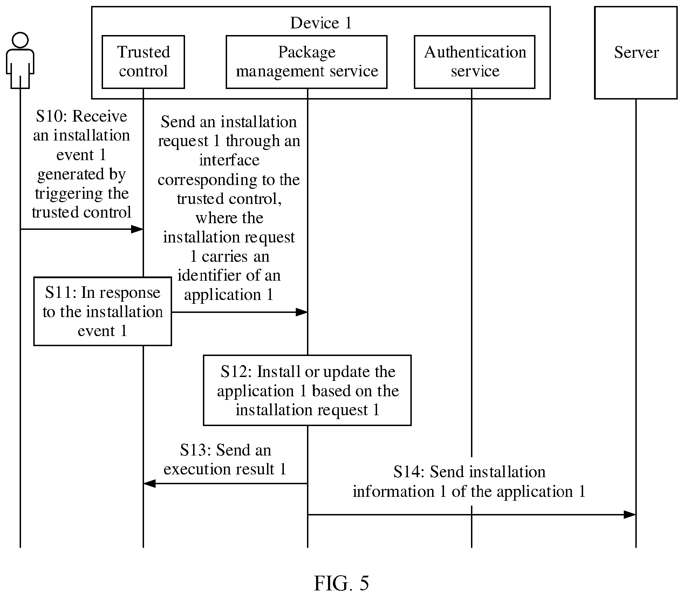

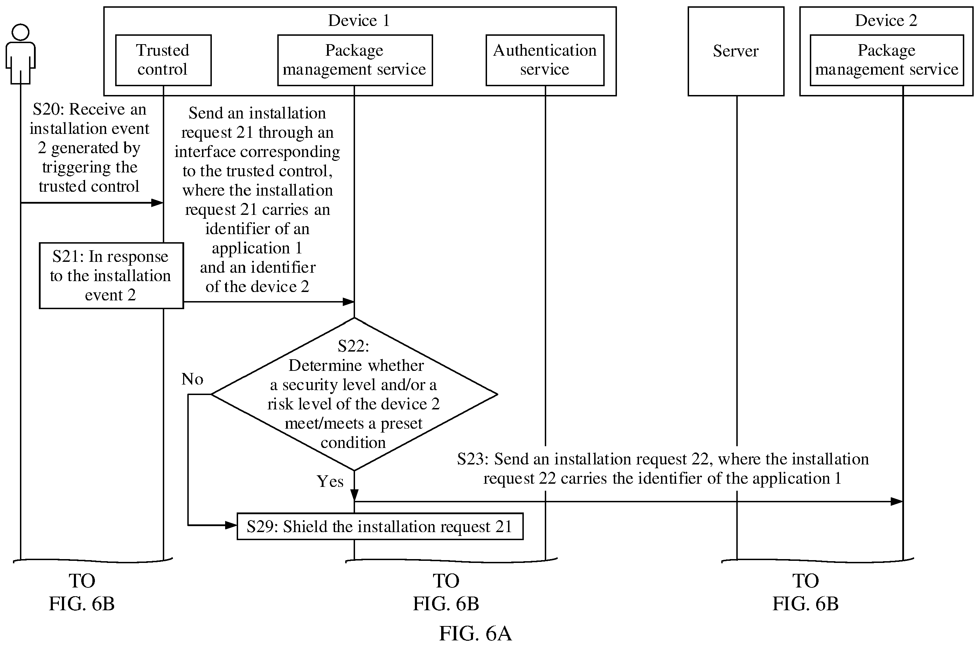

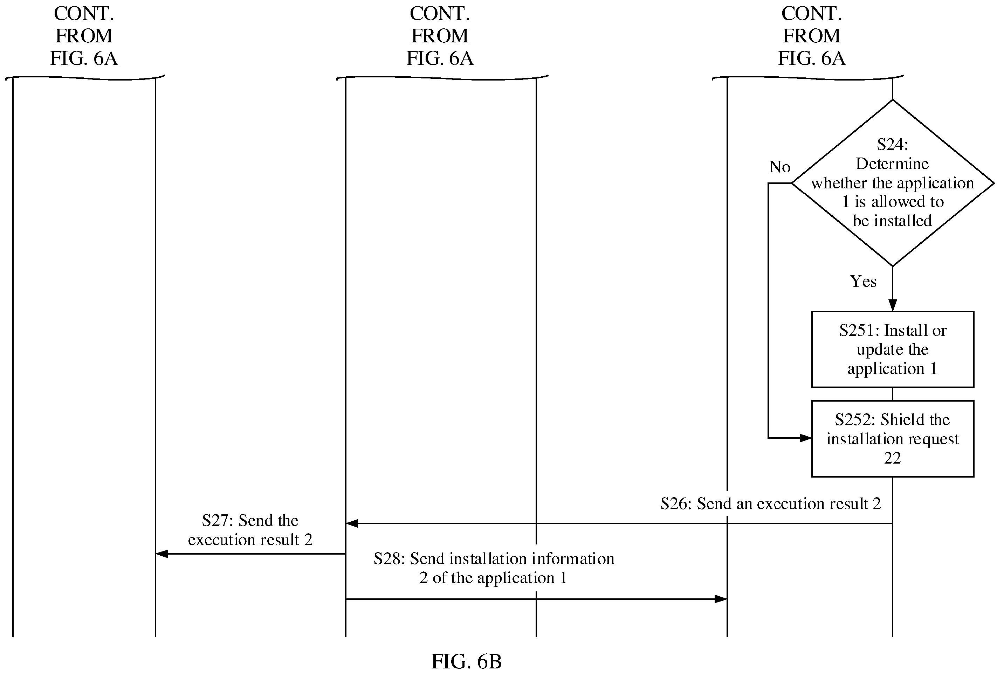

With reference to FIG. 5 and FIG. 6A and FIG. 6B, the following describes a specific implementation in which the initiator initiates local installation or distributed installation of an application to the device by using the trusted control.

FIG. 5 is an interaction diagram of an application installation method according to an embodiment of this application. For ease of description, in FIG. 5, a device to which an initiator initiates installation of one or more applications is referred to as a device 1, and the one or more applications each may be referred to as an application 1. A specific implementation of the application 1 is not limited in this application.

For local installation of the one or more applications, a device (namely, the device 4 mentioned above) for installing the application 1 is the device 1. As shown in FIG. 5, the application installation method in this application may include the following steps.

S10: A trusted control in the device 1 receives an installation event 1 generated by triggering the trusted control.

The installation event 1 is generated by triggering the trusted control by a user. In some examples, the initiator may provide, for the user, a trusted control that is set on the device 1 and that is used to install the application 1. For example, the trusted control is set in an application market built in the device 1. After the user performs a trigger operation like tapping on the trusted control, the device 1 may generate the installation event 1 based on the trigger operation. It can be learned that the initiator may request the device 1 to install the application 1 on the device 1 with user perception.

The installation event 1 indicates that the initiator requests, by using the trusted control, the device 1 to install the application 1 on the device 1. A specific implementation of the installation event 1 is not limited in this application.

S11: In response to the installation event 1, the trusted control in the device 1 sends an installation request 1 to a package management service in the device 1 through an interface corresponding to the trusted control, where the installation request 1 is used to request to install the application 1 on the device 1, and the installation request 1 carries an identifier of the application 1.

After receiving the installation event 1, the trusted control may send the installation request 1 to the package management service through the interface corresponding to the trusted control, so that the installation request 1 can be used to request the package management service to install the application 1 on the device 1.

A specific implementation of the installation request 1 is not limited in this application.

In the installation request 1, if the application 1 includes one application, the identifier of the application 1 may be an identifier of the application. If the application 1 includes a plurality of applications, the identifier of the application 1 may include identifiers of the applications, and/or include an identifier of an application list that includes all the applications.

In addition, in addition to the identifier of the application 1, the installation request 1 may further include an identifier of the device 1.

S12: The package management service in the device 1 installs or updates the application 1 based on the installation request 1.

The installation request 1 is sent through the interface corresponding to the trusted control. Therefore, after the package management service receives the installation request 1, it may be determined that the installation request 1 is generated by triggering the trusted control, or it may be considered that the installation request 1 carries an installation credential. In other words, an installation initiation behavior generated by the initiator by using the trusted control in the device 1 is a trusted installation behavior. In other words, the installation initiation behavior meets a user expectation and is secure. Therefore, the package management service may determine that the user requires to install the application 1 on the device 1, and the package management service may determine to make user confirmation verification exempt.

Therefore, the package management service may install the application 1 on the device 1 or update the application 1 in the device 1.

S13: The package management service in the device 1 sends an execution result 1 to the trusted control in the device 1 through the interface corresponding to the trusted control.

S13 is an optional step.

After the package management service completes S12, the execution result 1 may be obtained. The execution result 1 may indicate that the device 1 has installed or updated the application 1. A specific implementation of the execution result 1 is not limited in this application.

Therefore, the package management service may send the execution result 1 to the trusted control through the interface corresponding to the trusted control, so that the trusted control can learn, based on the execution result 1, that the device 1 has installed or updated the application 1.

In addition, the device 1 may further notify, by using the trusted control, the user that the device 1 has installed or updated the application 1. In some examples, a screen layout of the trusted control of the application 1 may adaptively change, for example, change from a download prompt to a start prompt. In addition, the device 1 may further display a prompt 1 to the user, where the prompt 1 is used to remind the user that the device 1 has installed or updated the application 1. The prompt 1 may be represented in a form of text, vibration, ringing, indicator blinking, or the like.

S14: The package management service in the device 1 sends installation information 1 of the application 1 to a server.

The installation information 1 of the application 1 may include one or more parameters in the initiator, a package name of each application, installation time of each application, an application developer public key of each application, a version number of each application, an exemption period of each application, the identifier of the device 1, and the like.

After completing S12, the package management service may send the installation information 1 of the application 1 to the server, so that the server can store the installation information 1 of the application 1 under a same account. Therefore, another device located in the same distributed network or distributed scenario as the device 1 can learn of the installation information 1 of the application 1. This helps the another device determine, when installing any one of the applications 1, whether to perform user confirmation verification.

It should be understood that there is no time sequence for S13 and S14, and S13 and S14 may be performed simultaneously or sequentially.

In conclusion, when the initiator uses the trusted control, the device 1 may install one or more applications on the device 1, and can locally install a single application or can locally install applications in batches.

FIG. 6A and FIG. 6B are an interaction diagram of an application installation method according to an embodiment of this application. For ease of description, in FIG. 6A and FIG. 6B, a device to which an initiator initiates installation of one or more applications is referred to as a device 1, and the one or more applications each are referred to as an application 1. A specific implementation of the application 1 is not limited in this application.

For distributed installation of the application 1, a device (namely, the device 4 mentioned above) on which the application 1 is installed may be the device 2 in FIG. 2. The device 1 and the device 2 are deployed in a same distributed network or distributed scenario. As shown in FIG. 6A and FIG. 6B, the application installation method in this application may include the following steps.

S20: A trusted control in the device 1 receives an installation event 2 generated by triggering the trusted control.

The installation event 2 is generated by triggering the trusted control by a user. In some examples, the initiator may provide, for the user, a trusted control that is set on the device 1 and that is used to install the application 1. For example, the trusted control is set in an application market built in the device 1. After the user performs a trigger operation like tapping on the trusted control, the device 1 may generate the installation event 2 based on the trigger operation. It can be learned that the initiator may request the device 1 to install the application 1 on the device 2 with user perception.

The installation event 2 indicates that the initiator requests, by using the trusted control, the device 1 to install the application 1 on the device 2. A specific implementation of the installation event 2 is not limited in this application.

S21: In response to the installation event 2, the trusted control in the device 1 sends an installation request 21 to a package management service in the device 1 through an interface corresponding to the trusted control, where the installation request 21 is used to request to install the application 1 on the device 2, and the installation request 21 carries an identifier of the application 1 and an identifier of the device 2.

After receiving the installation event 2, the trusted control in the device 1 may send the installation request 21 to the package management service in the device 1 through the interface corresponding to the trusted control, so that the installation request 21 can be used to request the package management service in the device 1 to install the application 1 on the device 2.

A specific implementation of the installation request 21 is not limited in this application.

In the installation request 21, if the application 1 includes one application, the identifier of the application 1 may be an identifier of the application. If the application 1 includes a plurality of applications, the identifier of the application 1 may include identifiers of the applications, and/or include an identifier of an application list that includes all the applications.

In the installation request 21, the identifier of the device 2 may include one or more manners such as a name of the device 2, a version number of the device 2, a device number of the device 2, and an identifier of the device 2 in a same distributed network or distributed scenario.

S22: The package management service in the device 1 determines, based on the installation request 21, whether a security level and/or a risk level of the device 2 meet/meets a preset condition.

The installation request 21 is sent through the interface corresponding to the trusted control. Therefore, after the package management service in the device 1 receives the installation request 21, it may be determined that the installation request 21 is generated by triggering the trusted control in the device 1 by the user, or it may be considered that the installation request 21 carries an installation credential. In other words, an installation initiation behavior generated by the initiator by using the trusted control in the device 1 is a trusted installation behavior. In other words, the installation initiation behavior meets a user expectation and is secure. Therefore, the package management service may determine that the user requires to install the application 1 on the device 2, and the package management service may determine to make user confirmation verification exempt.

Therefore, after receiving the installation request 21, the package management service in the device 1 may directly perform S23 to request the device 2 to install the application 1, or may perform S22 to verify security and/or a risk of the device 2.

It can be learned that S22 and S29 are optional steps.

For ease of description, in FIG. 6A and FIG. 6B, an example in which the security level and/or the risk level of the device 2 are/is determined is used for illustration.

The package management service in the device 1 may determine whether the security level of the device 2 meets a preset condition, or may determine whether the risk level of the device 2 meets a preset condition, or may determine whether the security level and the risk level of the device 2 meet a preset condition.

The preset condition may be adaptively changed or adjusted based on a corresponding determining parameter. In other words, the preset condition of the security level is different from the preset condition of the risk level. A specific implementation of the preset condition is not limited in this application.

In some examples, the package management service in the device 1 may compare the security level of the device 2 with a security level of the device 1, to determine whether the security level of the device 2 meets the preset condition.

In some examples, the package management service in the device 1 may determine whether the risk level of the device 2 matches a corresponding scenario, to determine whether the risk level of the device 2 meets the preset condition.

When the security level and/or the risk level of the device 2 meet/meets the preset condition, the package management service in the device 1 performs S23. When the security level and the risk level of the device 2 do not meet the preset condition, the package management service in the device 1 performs S29.

S23: The package management service in the device 1 sends an installation request 22 to a package management service in the device 2, where the installation request 22 is used to request to install the application 1 on the device 2, and the installation request 22 carries the identifier of the application 1.

When the security level and/or the risk level of the device 2 meet/meets the preset condition, the package management service in the device 1 may send the installation request 22 to the package management service in the device 2, so that the installation request 22 can be used to request the package management service in the device 1 to install the application 1 on the device 2.

A specific implementation of the installation request 22 is not limited in this application. In addition, in addition to the identifier of the application 1, the installation request 22 may further include the identifier of the device 2.

S24: The package management service in the device 2 determines, based on the installation request 22, whether the device 2 is allowed to install the application 1.

After receiving the installation request 22, the package management service in the device 2 may determine whether the device 2 is allowed to install each of the applications 1.

When the device 2 is allowed to install each of the applications 1, the package management service in the device 2 performs S251. When the device 2 is not allowed to install any application in the applications 1, the package management service in the device 2 performs S252.

S251: The package management service in the device 2 installs or updates the application 1.

The package management service in the device 2 may install each of the applications 1 on the device 2 or update each of the applications 1 in the device 2.

S252: The package management service in the device 2 shields the installation request 22.

The package management service in the device 2 may refuse to install the application 1 on the device 2 or refuse to update the application 1 in the device 2. Therefore, the package management service in the device 2 may shield the installation request 22.

S26: The package management service in the device 2 sends an execution result 2 to the package management service in the device 1.

After the package management service in the device 2 completes S251, the execution result 2 may be obtained. The execution result 2 may indicate that the device 2 has installed or updated the application 1.

After the package management service in the device 2 completes S252, the execution result 2 may be obtained. The execution result 2 may indicate that the device 2 refuses to install or update the application 1.

It can be learned that the execution result 2 may indicate whether the device 2 installs or updates the application 1. A specific implementation of the execution result 2 is not limited in this application.

Therefore, the package management service in the device 2 may send the execution result 2 to the package management service in the device 1, so that the device 1 can learn, based on the execution result 2, whether the device 2 installs or updates the application 1.

S27: The package management service in the device 1 sends the execution result 2 to the trusted control in the device 1 through the interface corresponding to the trusted control.

S27 is an optional step.

After receiving the execution result 2, the package management service in the device 1 may send the execution result 2 to the trusted control in the device 1 through the interface corresponding to the trusted control, so that the trusted control can learn, based on the execution result 2, whether the device 2 installs or updates the application 1.

In addition, the device 1 may further notify, by using the trusted control, the user whether the device 2 installs or updates the application 1. In some examples, a screen layout of the trusted control of the application 1 may adaptively change.

When the execution result 2 indicates that the device 2 has installed or updated the application 1, the screen layout of the trusted control in the device 1 may adaptively change, for example, change from a download prompt to a start prompt. In addition, the device 1 may further display a prompt 21 to the user, where the prompt 21 is used to remind the user that the device 2 has installed or updated the application 1. The prompt 21 may be represented in a form of text, vibration, ringing, indicator blinking, or the like.

When the execution result 2 indicates that the device 2 refuses to install or update the application 1, the screen layout of the trusted control in the device 1 may not be changed. In addition, the device 1 may further display a prompt 22 to the user, where the prompt 22 is used to remind the user that the device 2 cannot install or update the application 1. The prompt 22 may be represented in a form of text, vibration, ringing, indicator blinking, or the like.

S28: The package management service in the device 1 sends installation information 2 of the application 1 to a server.

The installation information 2 of the application 1 may include one or more parameters in the initiator, a package name of each application, installation time of each application, an application developer public key of each application, a version number of each application, an exemption period of each application, the identifier of the device 2, and the like.

When the execution result 2 indicates that the device 2 has installed or updated the application 1, the package management service in the device 1 may send the installation information 2 of the application 1 to the server, so that the server can store the installation information 2 of the application 1 under a same account. Therefore, another device that is in the same distributed network or distributed scenario as the device 1 can learn of the installation information 2 of the application 1. This helps the another device determine, when installing any one of the applications 1, whether to perform user confirmation verification.

It should be understood that there is no time sequence for S27 and S28, and S27 and S28 may be performed simultaneously or sequentially.

S29: The package management service in the device 1 shields the installation request 21.

When the security level and the risk level of the device 2 do not meet the preset condition, the package management service in the device 1 may refuse to install the application 1 on the device 2 or refuse to update the application 1 in the device 2. Therefore, the package management service in the device 1 may shield the installation request 21.

In addition, the package management service in the device 1 may further send a corresponding execution result to the trusted control in the device 1 through the interface corresponding to the trusted control, to notify the user in a timely manner that the device 2 cannot install or update the application 1.

In conclusion, when the initiator uses the trusted control, the device 1 may install one or more applications on the device 2, and can install a single application in a distributed manner or can install applications in a distributed manner in batches.

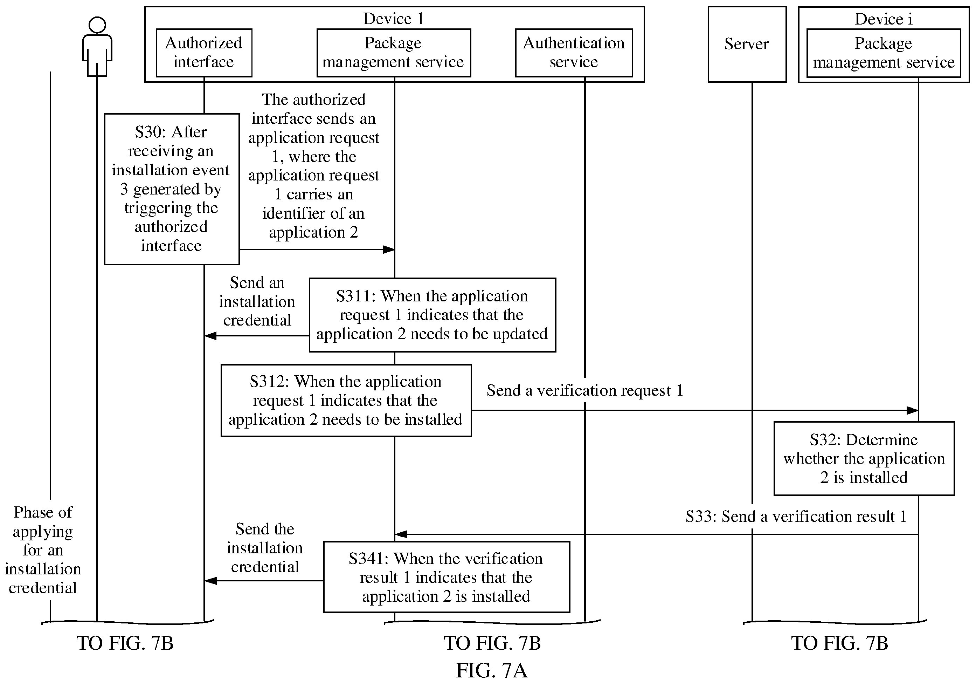

With reference to FIG. 7A to FIG. 10C, the following describes a specific implementation in which the initiator initiates local installation or distributed installation of an application to the device through an authorized interface.

FIG. 7A to FIG. 7C are an interaction diagram of an application installation method according to an embodiment of this application. For ease of description, in FIG. 7A to FIG. 7C, a device to which an initiator initiates installation of an application is referred to as a device 1, and the application is referred to as an application 2. A specific implementation of the application 2 is not limited in this application.

For local installation of the application, a device (namely, the device 4 mentioned above) for installing the application is the device 1. The device 1 and a device i are deployed in a same distributed network or distributed scenario. Herein, i is a positive integer greater than or equal to 2. For example, the device i may be the device 2 in FIG. 2, or may be the device 3 in FIG. 2. As shown in FIG. 7A to FIG. 7C, the application installation method in this application may include a phase of applying for an installation credential and an application installation phase.

**In** the phase of applying for an installation credential, the application installation method in this application may include the following steps.

S30: After receiving an installation event 3 generated by triggering an authorized interface, the authorized interface in the device 1 sends an application request 1 to a package management service in the device 1 through the authorized interface, where the application request 1 is used to apply for an installation credential for installing the application 2 on the device 1, and the application request 1 carries an identifier of the application 2.

The installation event 3 is generated by triggering the authorized interface by the initiator. **In** some examples, after the initiator like an advertisement or a browser performs a trigger operation like invoking on the authorized interface set on the device 1, the device 1 may generate the installation event 3 based on the trigger operation. It can be learned that the initiator may request the device 1 to install the application 2 on the device 1 without user perception.

Certainly, the initiator may alternatively provide the user with a control corresponding to the authorized interface. This control is different from a trusted control provided by the device 1. An interface corresponding to the control is an authorized interface, and an interface corresponding to the trusted control is not an authorized interface. After the user performs a trigger operation like tapping on the control, the device 1 may generate the installation event 3 based on the trigger operation. It can be learned that the initiator may request the device 1 to install the application 2 on the device 1 with user perception.

The installation event 3 indicates that the initiator requests, through the authorized interface, the device 1 to install the application 2 on the device 1. A specific implementation of the installation event 3 is not limited in this application.

After receiving the installation event 3, the authorized interface in the device 1 may send the application request 1 to the package management service in the device 1 through the authorized interface, so that the application request 1 can be used to apply for, from the package management service, the installation credential for installing the application 2 on the device 1.

A specific implementation of the application request 1 is not limited in this application. In addition, in addition to the identifier of the application 2, the application request 1 may further include an identifier of the device 1.

The installation credential may be used as a unique credential for the authorized interface in the device 1 to initiate, to the package management service in the device 1, an installation request for installing the application 2 on the device 1. A specific implementation of the installation credential is not limited in this application.

In some examples, the installation credential may include one or more parameters in the identifier of the application 2, a validity period of the installation credential, an identifier of the initiator, the identifier of the device 1, a hash value of the application 2, a version number of the application 2, an application developer signature of the application 2, and a screen state (for example, a screen-off state or a steady-on state) of the device 1, and the like.

S311: When the application request 1 indicates that the application 2 needs to be updated, the package management service in the device 1 sends the installation credential to the authorized interface in the device 1.

When the application request 1 indicates that the application 2 needs to be updated, the package management service in the device 1 may determine that the application 2 has been installed on the device 1, so that the package management service in the device 1 may determine to make user confirmation verification exempt.

Therefore, the package management service in the device 1 may send the installation credential to the authorized interface in the device 1.

S312: When the application request 1 indicates that the application 2 needs to be installed, the package management service in the device 1 sends a verification request 1 to a package management service in the device i.

When the application request 1 indicates that the application 2 needs to be installed, the package management service in the device 1 needs to determine whether to perform user confirmation verification.

Therefore, the package management service in the device 1 may send the verification request 1 to the package management service in the device i. The verification request 1 is used to request the package management service in the device i to query whether the application 2 is installed on the device i. A specific implementation of the verification request 1 is not limited in this application.

In other words, the package management service in the device 1 may send the verification request 1 to one or more devices that are located in the same distributed network or distributed scenario as the device 1, so that the device i can provide, for the package management service in the device 1, a basis for determining whether to perform user confirmation verification.

In some examples, the device i is the device 2 or the device 3 in FIG. 2, the package management service in the device 1 may separately send the verification request 1 to a package management service in the device 2 and a package management service in the device 3.

S32: The package management service in the device i determines whether the application 2 is installed on the device i.

After receiving the verification request 1, the package management service in the device i may check whether the application 2 is installed on the device i. Therefore, the package management service in the device i may obtain a verification result 1. The verification result 1 indicates whether the application 2 is installed on the device i. A specific implementation of the verification result 1 is not limited in this application.

That the application 2 is installed on the device i means that the application 2 is installed on the device i and the application 2 can be started to implement a service function of the application 2, instead of meaning that the application 2 has been installed on the device i but the application 2 is deleted or uninstalled.

S33: The package management service in the device i sends the verification result 1 to the package management service in the device 1.

The package management service in the device i may send the verification result 1 to the package management service in the device 1, so that the package management service in the device 1 can learn, based on the verification result 1, whether the application 2 is installed on the device i.

In some examples, the device i is the device 2 or the device 3 in FIG. 2. The package management service in the device 2 may send the verification result 1 to the package management service in the device 1. The package management service in the device 3 may send the verification result 1 to the package management service in the device 1.

Therefore, the package management service in the device 1 can learn, based on the verification result 1 sent by one or more devices that are located in the same distributed network or distributed scenario as the device 1, whether the application 2 is installed on a device in the devices. In this way, the package management service in the device 1 may determine whether to perform user confirmation verification.

S341: When the verification result 1 sent by the device i indicates that the application 2 is installed on a device, the package management service in the device 1 sends the installation credential to the authorized interface in the device 1. Therefore, the package management service in the device 1 may determine to make user confirmation verification exempt.

S342: When the package management service in the device 1 does not receive the verification result 1 within duration 11 or the verification results 1 sent by all devices i indicate that the application 2 is not installed on the devices, the package management service sends a verification request 2 to a server.

In some examples, considering various factors such as a network, the device i may not feed back the verification result 1. Based on this, when the package management service in the device 1 does not receive, after the duration 11, the verification result 1 sent by any device i, it may determine that the application 2 is not installed on a device. Therefore, the package management service in the device 1 may send the verification request 2 to the server.

A specific value of the duration 11 is not limited in this application.

In some examples, when the verification results 1 sent by all the devices i indicate that the application 2 is not installed on the devices, the package management service in the device 1 may determine that the application 2 has not been installed on all the devices i. Therefore, the package management service in the device 1 may send the verification request 2 to the server.

The verification request 2 is used to request the server to query whether the application 2 has been installed on a device. The device herein is a device located in the same distributed network or distributed scenario as the device 1. The verification request 2 carries an account used by the device 1, and the account is an account shared by all devices located in the same distributed network or distributed scenario as the device 1. A specific implementation of the verification request 2 is not limited in this application.

Therefore, the package management service in the device 1 may send the verification request 2 to the server, so that the server can provide, for the package management service in the device 1 based on the verification request 2, a basis for determining whether to perform user confirmation verification.

In addition, when the verification result 1 is not received within the duration 11 or the verification results 1 sent by all the devices i indicate that the application 2 is not installed on the devices, in addition to sending the verification request 2 to the server, the package management service in the device 1 may further shield the application request 1. In other words, the package management service in the device 1 may determine that the user does not want to install the application 2 on the device 1.

S35: The server determines whether the application 2 has been installed under a same account.

After receiving the verification request 2, the server may obtain installation information of the application 2 under the same account. The server may determine, based on the installation information of the application 2 under the account, whether the application 2 has been installed on the device.

When the installation information of the application 2 under the account indicates that the application 2 is installed on the device, the server may determine that the application 2 has been installed on the device.

When the installation information of the application 2 under the account indicates that the application 2 has been installed on the device but is deleted or uninstalled, and a difference between a deletion time point and a current time point is within an exemption period of the application 2, the server may determine that the application 2 has been installed on the device.

When the installation information of the application 2 under the account indicates that the application 2 has not been installed on the device, or that the application 2 has been installed on the device but is deleted or uninstalled, and a difference between a deletion time point and a current time point is out of the exemption period of the application 2, the server may determine that the application 2 has not been installed on the device.

Therefore, the server may obtain a verification result 2. The verification result 2 indicates whether the application 2 has been installed on the device. A specific implementation of the verification result 2 is not limited in this application.

That the application 2 has been installed on the device includes two cases: The application 2 is installed on the device and the application 2 can be started to implement the service function of the application 2; and the application 2 has been installed on the device but is deleted or uninstalled, and the difference between the deletion time point and the current time point is within the exemption period of the application 2.

S36: The server sends the verification result 2 to the package management service in the device 1.

The server may send the verification result 2 to the package management service in the device 1, so that the package management service in the device 1 can learn, based on the verification result 2, whether the application 2 has been installed on the device.

Therefore, the package management service in the device 1 can learn, based on the verification result 2 sent by the server, whether the application 2 has been installed on the device. In this way, the package management service in the device 1 can determine whether to perform user confirmation verification.

S371: When the verification result 2 indicates that the application 2 has been installed on the device, the package management service in the device 1 sends the installation credential to the authorized interface in the device 1.

In this way, the package management service in the device 1 may determine that the user has previously requested to install the application 2 on the device i, and the package management service in the device 1 may determine to make user confirmation verification exempt.

S372: When the package management service in the device 1 does not receive the verification result 2 within duration 12 or the verification result 2 indicates that the application 2 has not been installed on the device, the package management service in the device 1 sends a user confirmation request 1 to an authentication service in the device 1.

In some examples, considering various factors such as a network, the server may not feed back the verification result 2. Based on this, when the package management service in the device 1 does not receive, after the duration 12, the verification result 2 sent by the server, it may be determined that the application 2 has not been installed on the device. Therefore, the package management service in the device 1 may determine that user confirmation verification needs to be performed. Therefore, the packet management service in the device 1 may send the user confirmation request 1 to the authentication service in the device 1. A specific value of the duration 12 is not limited in this application.

In some examples, when the verification result 2 sent by the server indicates that the application 2 has not been installed on the device, the package management service in the device 1 may determine that the user confirmation verification needs to be performed. Therefore, the packet management service in the device 1 may send the user confirmation request 1 to the authentication service in the device 1.

The user confirmation request 1 is used to request the authentication service in the device 1 to confirm, by the user, whether to install the application 2 on the device 1. A specific implementation of the user confirmation request 1 is not limited in this application.

It can be learned that the package management service in the device 1 may invoke the authentication service in the device 1 to perform user confirmation verification.

In addition, when the verification result 2 is not received within the duration 12 or the verification result 2 indicates that the application 2 has not been installed on the device, in addition to sending the user confirmation request 1 to the authentication service in the device 1, the package management service in the device 1 may further shield the application request 1. In other words, the package management service in the device 1 may determine that the user does not want to install the application 2 on the device 1.

S38: The authentication service in the device 1 displays a screen 1 on a display of the device 1 based on the user confirmation request 1.

After receiving the user confirmation request 1, the authentication service in the device 1 may display the screen 1 on the display of the device 1. The screen 1 is used to request the user to confirm whether to install the application 2 on the device 1. In some examples, for the screen 1, refer to the window 300 shown in FIG. 3A, or for the screen 1, refer to the user interface 12 shown in FIG. 3B.

S391: The authentication service in the device 1 receives a confirmation event 1 generated by triggering the screen 1.

The confirmation event 1 is generated by triggering the screen 1 by the user. In some examples, the screen 1 is the window 300 shown in FIG. 3A. After the user performs a trigger operation like tapping on the control 302, the authentication service in the device 1 may generate the confirmation event 1 based on the trigger operation. The confirmation event 1 indicates that the user requires to install the application 2 on the device 1. A specific implementation of the confirmation event 1 is not limited in this application.

S392: The authentication service in the device 1 sends a confirmation result 11 to the packet management service in the device 1 in response to the confirmation event 1.

After receiving the confirmation event 1, the authentication service in the device 1 may obtain the confirmation result 11. The confirmation result 11 indicates that the user requires to install the application 2 on the device 1. A specific implementation of the confirmation result 11 is not limited in this application.

Therefore, after confirmation by the user, the authentication service in the device 1 may send the confirmation result 11 to the package management service in the device 1, so that the package management service in the device 1 determines that the user requires to install the application 2 on the device 1.

S393: The package management service in the device 1 sends the installation credential to the authorized interface in the device 1 based on the confirmation result 11.

After receiving the confirmation result 11, the package management service in the device 1 may determine that the user requires to install the application 2 on the device 1. Therefore, after confirmation by the user, the package management service in the device 1 may send the installation credential to the authorized interface in the device 1.

S401: When the authentication service in the device 1 does not receive the confirmation event 1 within duration 13 or receives a rejection event 1, the authentication service in the device 1 sends a confirmation result 12 to the packet management service in the device 1.

In some examples, considering various factors such as a network, the user may not give a feedback or a user feedback may time out. Based on this, when the authentication service in the device 1 does not receive, after the duration 13, the confirmation event 1 generated by triggering the screen 1, it may be determined that the user does not want to install the application 2 on the device 1. Therefore, after confirmation by the user, the authentication service in the device 1 may send the confirmation result 12 to the package management service in the device 1.

A specific value of the duration 13 is not limited in this application.

In some examples, when receiving the rejection event 1 generated by triggering the screen 1, the authentication service in the device 1 may determine that the user does not want to install the application 2 on the device 1. Therefore, after confirmation by the user, the authentication service in the device 1 may send the confirmation result 12 to the package management service in the device 1.

The rejection event 1 is generated by triggering the screen 1 by the user. In some examples, the screen 1 is the window 300 shown in FIG. 3A. After the user performs a trigger operation like tapping on the control 303, the authentication service in the device 1 may generate the rejection event 1 based on the trigger operation. The rejection event 1 indicates that the user does not want to install the application 2 on the device 1. A specific implementation of the rejection event 1 is not limited in this application.

The confirmation result 12 indicates that the user does not want to install the application 2 on the device 1. A specific implementation of the confirmation result 12 is not limited in this application.

Therefore, after confirmation by the user, the authentication service in the device 1 may send the confirmation result 12 to the package management service in the device 1, so that the package management service in the device 1 can determine that the user does not want to install the application 2 on the device 1.

S402: The package management service in the device 1 shields the application request 1 based on the confirmation result 12.

After receiving the confirmation result 12, the package management service in the device 1 may determine that the user does not want to install the application 2 on the device 1. Therefore, the package management service in the device 1 may shield the application request 1.

In conclusion, the authorized interface in the device 1 may receive the installation credential from the package management service in the device 1 in any one of cases in which the device 1 needs to update the application 2, the application 2 is installed on devices in a same distributed network or distributed scenario, the installation information of the application 2 stored in the server indicates that the application 2 has been installed on a device, and it is determined that the user requires to install the application 2 on the device 1.

It should be understood that, other than the foregoing implementation, the package management service in the device 1 may alternatively determine, by using both the device i and the server, whether to perform user confirmation verification. Alternatively, the package management service in the device 1 may determine, only by using the device i or the server, whether to perform user confirmation verification. Alternatively, the package management service in the device 1 may first use the device i and then use the server to determine whether to perform user confirmation verification.

In the application installation phase, the application installation method in this application may include the following steps.

S41: The authorized interface in the device 1 sends an installation request 3 to the package management service in the device 1, where the installation request 3 is used to request to install the application 2 on the device 1, and the installation request 3 carries the installation credential, the identifier of the application 2, and the identifier of the initiator.

After receiving the installation credential in the phase of applying for the installation credential, the authorized interface in the device 1 may send the installation request 3 to the package management service in the device 1 at any time point within the validity period of the installation credential, so that the installation request 3 can be used to request the package management service in the device 1 to install the application 2 on the device 1. In this way, application installation time is controllable, misuse of the installation credential by the initiator is avoided, thereby ensuring validity and security of application installation.

A specific implementation of the installation request 3 is not limited in this application. In addition, in addition to the installation credential, the identifier of the application 2, and the identifier of the initiator, the installation request 3 may further include the identifier of the device 1. The installation credential does not include the screen state of the device 1.

In addition, when the validity period of the installation credential does not exist, the authorized interface in the device 1 may send the installation request 3 to the package management service in the device 1 at any time point.

S42: When the installation credential matches both the initiator and the application 2, the package management service in the device 1 installs or updates the application 2.

After receiving the installation request 3, the package management service in the device 1 needs to verify validity of the installation credential, to ensure that the application 2 is installed on the device 1, instead of installation of the application 2 on another device or installation of another application on the device 1. This avoids a phenomenon that the initiator uses the installation credential without authorization, thereby ensuring validity and security of application installation.

In some examples, the package management service in the device 1 may determine whether the installation credential matches the initiator and the application 2, to verify validity of the installation credential.

When the identifier of the initiator included in the installation credential indicates the initiator that requests to install the application 2 on the device 1, and an identifier of an application included in the installation credential indicates the application 2, the package management service in the device 1 may determine that the installation credential matches both the initiator and the application 2. Therefore, the package management service in the device 1 may determine that the installation credential is valid.

The installation request 3 is sent through the authorized interface in the device 1, and the installation request 3 includes the valid installation credential. Therefore, the package management service in the device 1 may determine that an installation initiation behavior generated by the initiator through the authorized interface in the device 1 based on the installation credential is a trusted installation behavior. In other words, the installation initiation behavior meets a user expectation and is secure. Therefore, the package management service in the device 1 may determine that the user requires to install the application 2 on the device 1.

In this way, the package management service in the device 1 may install the application 2 on the device 1 or update the application 2 in the device 1.

S43: The package management service in the device 1 sends an execution result 3 to the authorized interface in the device 1 through the authorized interface.

S43 is an optional step.

After the package management service in the device 1 completes S42, the execution result 3 may be obtained. The execution result 3 may indicate that the device 1 has installed or updated the application 2. A specific implementation of the execution result 3 is not limited in this application.

Therefore, the package management service in the device 1 may send the execution result 3 to the authorized interface in the device 1 through the authorized interface, so that the authorized interface can learn, based on the execution result 3, that the device 1 has installed or updated the application 2.

In addition, the device 1 may further notify the user that the device 1 has installed or updated the application 2. In some examples, the device 1 may display a prompt 33 to the user. The prompt 33 is used to remind the user that the device 1 has installed or updated the application 2. The prompt 33 may be represented in a form of text, vibration, ringing, indicator blinking, or the like.

Certainly, the device 1 may further notify the user that the device 1 has installed or updated the application 2. In some examples, a screen layout of a control corresponding to the authorized interface may also adaptively change, for example, change from a download prompt to a start prompt.

S44: The package management service in the device 1 sends installation information 3 of the application 2 to the server.

The installation information 3 of the application 2 may include one or more parameters in the initiator, a package name of the application 2, installation time of the application 2, an application developer public key of the application 2, the version number of the application 2, the exemption period of the application 2, the identifier of the device 1, and the like.

After completing S42, the package management service in the device 1 may send the installation information 3 of the application 2 to the server, so that the server can store the installation information 3 of the application 2 under a same account. Therefore, another device located in the same distributed network or distributed scenario as the device 1 can learn of the installation information 3 of the application 2. This helps the another device determine, when installing the application 2, whether to perform user confirmation verification.

It should be understood that there is no time sequence for S43 and S44, and S43 and S44 may be performed simultaneously or sequentially.

S45: The package management service in the device 1 shields the installation request 3 when the installation credential does not match the initiator and/or the application 2.

When the identifier of the initiator included in the installation credential does not indicate the initiator that requests to install the application 2 on the device 1, the package management service in the device 1 determines that the installation credential does not match the initiator.

When an identifier of an application included in the installation credential does not indicate the application 2, the package management service in the device 1 may determine that the installation credential does not match the application 2.

It can be learned that when the installation credential does not match the initiator, and/or the installation credential does not match the application 2, the package management service in the device 1 may determine that the installation credential is invalid.

The installation request 3 is sent through the authorized interface in the device 1, and the installation request 3 includes the invalid installation credential. Therefore, the package management service in the device 1 may determine that an installation initiation behavior generated by the initiator through the authorized interface in the device 1 based on the installation credential is not a trusted installation behavior. In other words, the installation initiation behavior is secure but does not meet a user expectation. Therefore, the package management service in the device 1 may refuse to install the application 2 on the device 1 or refuse to update the application 2 in the device 1.

Therefore, the package management service in the device 1 may shield the installation request 3.

In conclusion, when the initiator uses the authorized interface, the device 1 may install a single application on the device 1, and can locally install the single application.

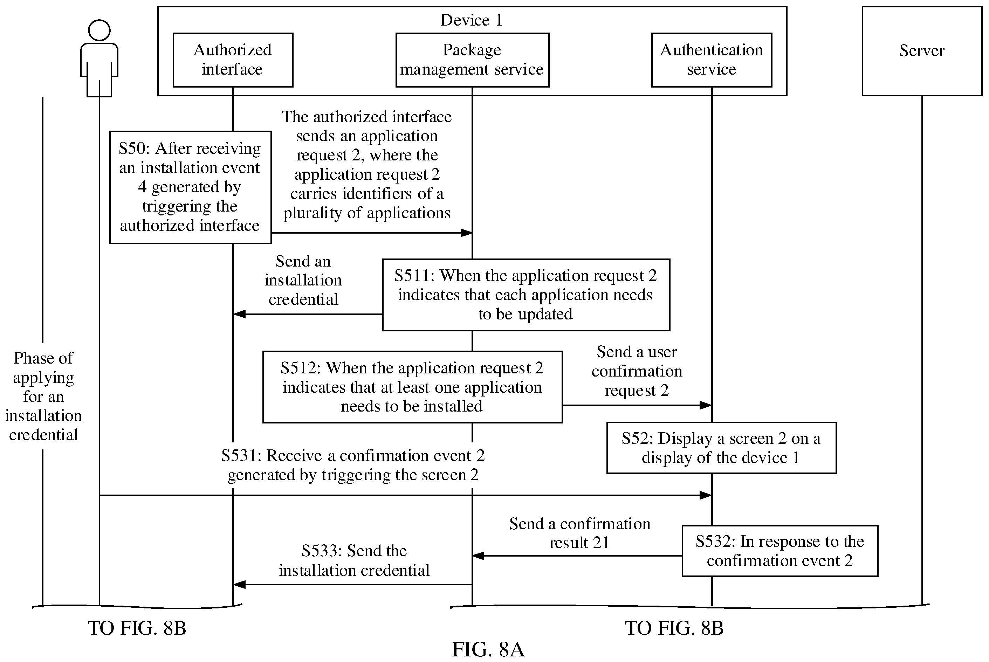

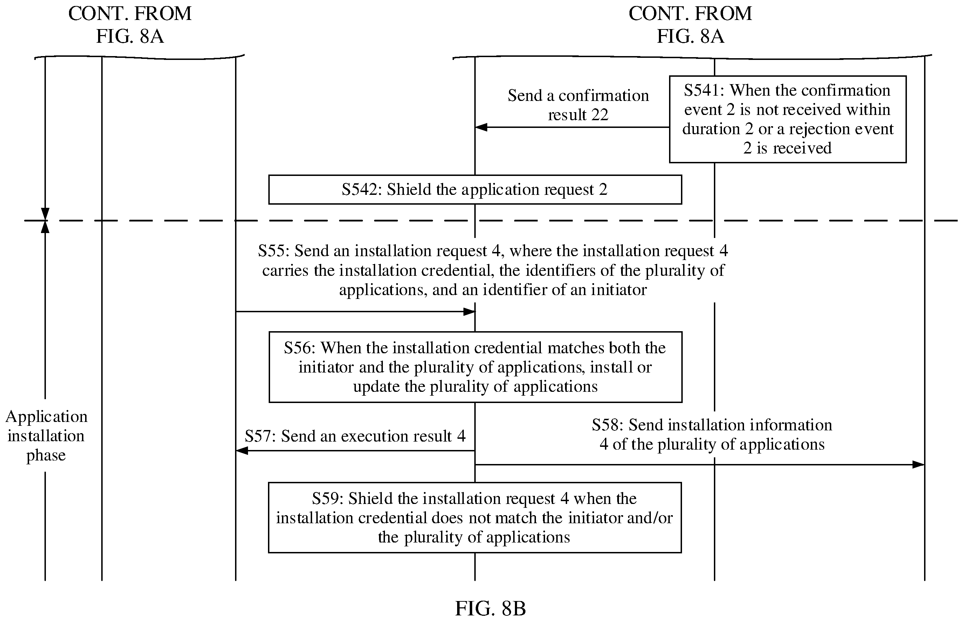

FIG. 8A and FIG. 8B are an interaction diagram of an application installation method according to an embodiment of this application. For ease of description, in FIG. 8A and FIG. 8B, a device to which an initiator initiates installation of a plurality of applications is referred to as a device 1.

For local installation of the plurality of applications, a device (namely, the device 4 mentioned above) for installing the applications is the device 1. As shown in FIG. 8A and FIG. 8B, the application installation method in this application may include a phase of applying for an installation credential and an application installation phase.

In the phase of applying for an installation credential, the application installation method in this application may include the following steps.

S50: After receiving an installation event 4 generated by triggering an authorized interface, the authorized interface in the device 1 sends an application request 2 to a package management service in the device 1 through the authorized interface, where the application request 2 is used to apply for an installation credential for installing a plurality of applications on the device 1, and the application request 2 carries identifiers of the plurality of applications.

The installation event 4 is generated by triggering the authorized interface by the initiator. In some examples, after the initiator like an advertisement or a browser performs a trigger operation like invoking on the authorized interface set on the device 1, the device 1 may generate the installation event 4 based on the trigger operation. It can be learned that the initiator may request the device 1 to install the plurality of applications on the device 1 without user perception.

Certainly, the initiator may alternatively provide the user with a control corresponding to the authorized interface. This control is different from a trusted control provided by the device 1. An interface corresponding to the control is an authorized interface, and an interface corresponding to the trusted control is not an authorized interface. After the user performs a trigger operation like tapping on the control, the device 1 may generate the installation event 4 based on the trigger operation. It can be learned that the initiator may request the device 1 to install the plurality of applications on the device 1 with user perception.

The installation event 4 indicates that the initiator requests, through the authorized interface, the device 1 to install the plurality of applications on the device 1. A specific implementation of the installation event 4 is not limited in this application.

After receiving the installation event 4, the authorized interface in the device 1 may send the application request 2 to the package management service in the device 1 through the authorized interface, so that the application request 2 can be used to apply for, from the package management service, the installation credential for installing the plurality of applications on the device 1.

A specific implementation of the application request 2 is not limited in this application. In the application request 2, identifiers of the plurality of applications may include identifiers of the applications, and/or include an identifier of an application list that includes all the applications. In addition, in addition to the identifiers of the plurality of applications, the application request 2 may further include an identifier of the device 1.

The installation credential may be used as a unique credential for the authorized interface in the device 1 to initiate, to the package management service in the device 1, an installation request for installing the plurality of applications on the device 1. A specific implementation of the installation credential is not limited in this application. In some examples, the installation credential may include one or more parameters in an identifier of each application, a validity period of the installation credential, an identifier of the initiator, the identifier of the device 1, a hash value of each application, a version number of each application, an application developer signature of each application, and a screen state (for example, a screen-off state or a steady-on state) of the device 1, and the like.

S511: When the application request 2 indicates that each application needs to be updated, the package management service in the device 1 sends the installation credential to the authorized interface in the device 1.

When the application request 2 indicates that each application needs to be updated, the package management service in the device 1 may determine that each application has been installed on the device 1, so that the package management service in the device 1 may determine to make user confirmation verification exempt.

Therefore, the package management service in the device 1 may send the installation credential to the authorized interface in the device 1.

S512: When the application request 2 indicates that at least one application needs to be installed, the package management service in the device 1 sends a user confirmation request 2 to the authentication service in the device 1.

When the application request 2 indicates that one or more applications need to be installed, the package management service in the device 1 may determine that user confirmation verification needs to be performed. Therefore, the package management service in the device 1 may send the user confirmation request 2 to the authentication service in the device 1, and can invoke the authentication service in the device 1 to perform user confirmation verification.

The user confirmation request 2 is used to request the authentication service in the device 1 to confirm, by the user, whether to install the plurality of applications on the device 1. A specific implementation of the user confirmation request 2 is not limited in this application.

S52: The authentication service in the device 1 displays a screen 2 on a display of the device 1 based on the user confirmation request 2.

After receiving the user confirmation request 2, the authentication service in the device 1 may display the screen 2 on the display of the device 1. The screen 2 is used to confirm to the user whether to install a plurality of applications on the device 1. In some examples, for the screen 2, refer to the window 300 shown in FIG. 3A, or for the screen 2, refer to the user interface 12 shown in FIG. 3B.

S531: The authentication service in the device 1 receives a confirmation event 2 generated by triggering the screen 2.

The confirmation event 2 is generated by triggering the screen 2 by the user. In some examples, the screen 2 is the user interface 12 shown in FIG. 3B. After the user performs a trigger operation like tapping on the control 306, the device 1 may generate the confirmation event 2 based on the trigger operation. The confirmation event 2 indicates that the user confirms to install the plurality of applications on the device 1. A specific implementation of the confirmation event 2 is not limited in this application.

S532: The authentication service in the device 1 sends a confirmation result 21 to the packet management service in the device 1 in response to the confirmation event 2.

After receiving the confirmation event 2, the authentication service in the device 1 may obtain the confirmation result 21. The confirmation result 21 indicates that the user requires to install the plurality of applications on the device 1. A specific implementation of the confirmation result 21 is not limited in this application.

Therefore, after confirmation by the user, the authentication service in the device 1 may send the confirmation result 21 to the package management service in the device 1, so that the package management service in the device 1 determines that the user requires to install the plurality of applications on the device 1.

S533: The package management service in the device 1 sends the installation credential to the authorized interface in the device 1 based on the confirmation result 21.

After receiving the confirmation result 21, the package management service in the device 1 may determine that the user requires to install the plurality of applications on the device 1. Therefore, after confirmation by the user, the package management service in the device 1 may send the installation credential to the authorized interface in the device 1.

S541: When the authentication service in the device 1 does not receive the confirmation event 2 within duration 2 or receives a rejection event 2, the authentication service in the device 1 sends a confirmation result 22 to the packet management service in the device 1.

In some examples, considering various factors such as a network, the user may not give a feedback or a user feedback may time out. Based on this, when the authentication service in the device 1 does not receive, after the duration 2, the confirmation event 2 generated by triggering the screen 2, it may be determined that the user does not want to install the plurality of applications on the device 1. Therefore, after confirmation by the user, the authentication service in the device 1 may send the confirmation result 22 to the package management service in the device 1.

A specific value of the duration 2 is not limited in this application.

In some examples, when receiving the rejection event 2 generated by triggering the screen 2, the authentication service in the device 1 may determine that the user does not want to install the plurality of applications on the device 1. Therefore, after confirmation by the user, the authentication service in the device 1 may send the confirmation result 22 to the package management service in the device 1.

The rejection event 2 is generated by triggering the screen 2 by the user. In some examples, the screen 2 is the user interface 12 shown in FIG. 3B. After the user performs a trigger operation like tapping on the control 307, the authentication service in the device 1 may generate the rejection event 2 based on the trigger operation. The rejection event 2 indicates that the user does not want to install the plurality of applications on the device 1. A specific implementation of the rejection event 2 is not limited in this application.

The confirmation result 22 indicates that the user does not want to install the plurality of applications on the device 1. A specific implementation of the confirmation result 22 is not limited in this application.

Therefore, after confirmation by the user, the authentication service in the device 1 may send the confirmation result 22 to the package management service in the device 1, so that the package management service in the device 1 can determine that the user does not want to install the plurality of applications on the device 1.

S542: The package management service in the device 1 shields the application request 2 based on the confirmation result 22.

After receiving the confirmation result 22, the package management service in the device 1 may determine that the user does not want to install the plurality of applications on the device 1. Therefore, the package management service in the device 1 may shield the application request 2.

In conclusion, the authorized interface in the device 1 may receive the installation credential from the package management service in the device 1 in any one of cases in which the device 1 needs to update each of the plurality of applications and determines that the user requires to install the plurality of applications on the device 1.

In the application installation phase, the application installation method in this application may include the following steps.

S55: The authorized interface in the device 1 sends an installation request 4 to the package management service in the device 1, where the installation request 4 is used to request to install the plurality of applications on the device 1, and the installation request 4 carries the installation credential, the identifiers of the plurality of applications, and the identifier of the initiator.

After receiving the installation credential in the phase of applying for the installation credential, the authorized interface in the device 1 may send the installation request 4 to the package management service in the device 1 at any time point within the validity period of the installation credential, so that the installation request 4 can be used to request the package management service in the device 1 to install the plurality of applications on the device 1. In this way, application installation time is controllable, misuse of the installation credential by the initiator is avoided, thereby ensuring validity and security of application installation.

A specific implementation of the installation request 4 is not limited in this application. In the installation request 4, the identifiers of the plurality of applications may include identifiers of the applications, and/or include an identifier of an application list that includes all the applications. In addition, in addition to the installation credential, the identifiers of the plurality of applications, and the identifier of the initiator, the installation request 4 may further include the identifier of the device 1. The installation credential does not include the screen state of the device 1.

Certainly, when the validity period of the installation credential does not exist, the authorized interface in the device 1 may send the installation request 4 to the package management service in the device 1 at any time point.

S56: When the installation credential matches both the initiator and the plurality of applications, the package management service in the device 1 installs or updates the plurality of applications.

After receiving the installation request 4, the package management service in the device 1 needs to verify validity of the installation credential, to ensure that the plurality of applications are installed on the device 1, instead of installation of the plurality of applications on another device or installation of another application on the device 1. This avoids a phenomenon that the initiator uses the installation credential without authorization, thereby ensuring validity and security of application installation.

In some examples, the package management service in the device 1 may determine whether the installation credential matches the initiator and the plurality of applications, to verify the validity of the installation credential.

When the identifier of the initiator included in the installation credential indicates the initiator that requests to install the plurality of applications on the device 1, and the identifiers of the plurality of applications included in the installation credential indicate the plurality of applications, the package management service in the device 1 may determine that the installation credential matches both the initiator and the plurality of applications. Therefore, the package management service in the device 1 may determine that the installation credential is valid.

The installation request 4 is sent through the authorized interface in the device 1, and the installation request 4 includes the valid installation credential. Therefore, the package management service in the device 1 may determine that an installation initiation behavior generated by the initiator through the authorized interface in the device 1 based on the installation credential is a trusted installation behavior. In other words, the installation initiation behavior meets a user expectation and is secure. Therefore, the package management service in the device 1 may determine that the user requires to install the plurality of applications on the device 1.

Therefore, the package management service in the device 1 may install each of the plurality of applications on the device 1 or update each of the plurality of applications in the device 1.

S57: The package management service in the device 1 sends an execution result 4 to the authorized interface in the device 1.

S57 is an optional step.

After the package management service in the device 1 completes S57, the execution result 4 may be obtained. The execution result 4 may indicate that the device 1 has installed or updated the plurality of applications. A specific implementation of the execution result 4 is not limited in this application.

Therefore, the package management service in the device 1 may send the execution result 4 to the authorized interface in the device 1 through the authorized interface, so that the authorized interface can learn, based on the execution result 4, that the device 1 has installed or updated the plurality of applications.

In addition, the device 1 may further notify the user that the device 1 has installed or updated the plurality of applications. In some examples, the device 1 may display a prompt 43 to the user, where the prompt 43 is used to remind the user that the device 1 has installed or updated the plurality of applications. The prompt 43 may be represented in a form of text, vibration, ringing, indicator blinking, or the like.

Certainly, the device 1 may further notify, through the authorized interface, the user that the device 1 has installed or updated the plurality of applications. A screen layout of a control corresponding to the authorized interface may also adaptively change, for example, change from a download prompt to a start prompt.

S58: The package management service in the device 1 sends installation information 4 of the plurality of applications to a server.

The installation information 4 of the plurality of applications may include one or more parameters in the initiator, a package name of each application, installation time of each application, an application developer public key of each application, a version number of each application, an exemption period of each application, the identifier of the device 1, and the like.

After completing S57, the package management service in the device 1 may send the installation information 4 of the plurality of applications to the server, so that the server can store the installation information 4 of the plurality of applications under a same account. Therefore, another device located in the same distributed network or distributed scenario as the device 1 can learn of the installation information 4 of the plurality of applications. This helps the another device determines, when installing any one of the plurality of applications, whether to perform user confirmation verification.

It should be understood that there is no time sequence for S57 and S58, and S57 and S58 may be performed simultaneously or sequentially.

S59: The package management service in the device 1 shields the installation request 4 when the installation credential does not match the initiator and/or the plurality of applications.

When the identifier of the initiator included in the installation credential does not indicate the initiator that requests to install the plurality of applications on the device 1, the package management service in the device 1 determines that the installation credential does not match the initiator.

When an identifier of an application included in the installation credential does not indicate the plurality of applications, the package management service in the device 1 may determine that the installation credential does not match the plurality of applications.

It can be learned that when the installation credential does not match the initiator, and/or the installation credential does not match the plurality of applications, the package management service in the device 1 may determine that the installation credential is invalid.

The installation request 4 is sent through the authorized interface in the device 1, and the installation request 4 includes the invalid installation credential. Therefore, the package management service in the device 1 may determine that an installation initiation behavior generated by the initiator through the authorized interface in the device 1 based on the installation credential is not a trusted installation behavior. In other words, the installation initiation behavior is secure but does not meet a user expectation. Therefore, the package management service in the device 1 may refuse to install the plurality of applications on the device 1 or refuse to update the plurality of applications in the device 1.

Therefore, the package management service in the device 1 may shield the installation request 4.

In conclusion, when the initiator uses the authorized interface, the device 1 may install a plurality of applications on the device 1, and can locally install applications in batches.

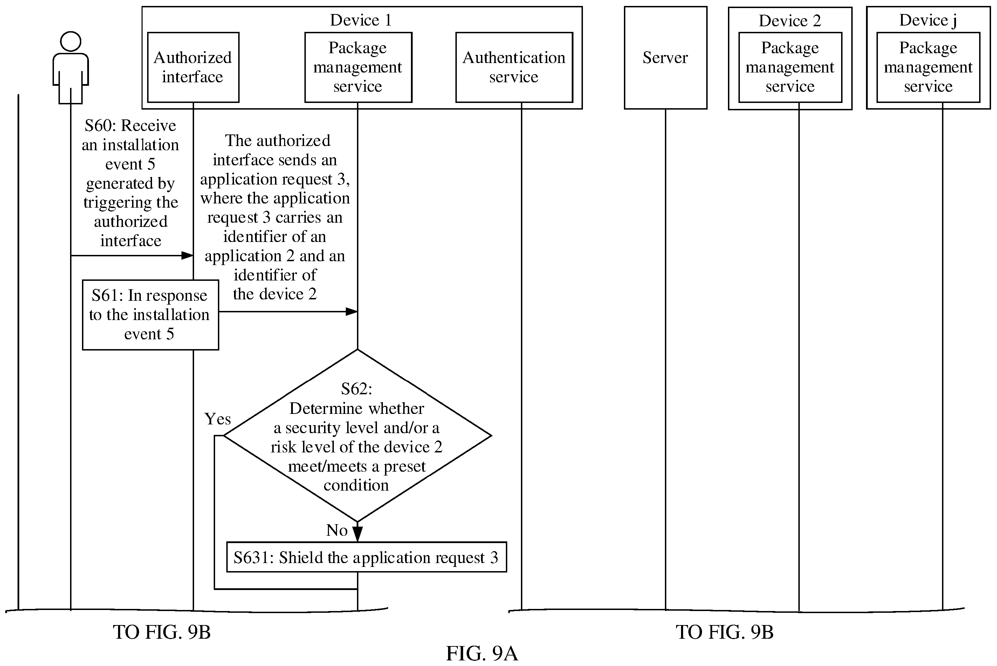

FIG. 9A to FIG. 9D are an interaction diagram of an application installation method according to an embodiment of this application. For ease of description, in FIG. 9A to FIG. 9D, a device to which an initiator initiates installation of an application is referred to as a device 1, and the application is referred to as an application 2. A specific implementation of the application 2 is not limited in this application.

For distributed installation of an application, a device (namely, the device 4 mentioned above) on which the application is installed may be the device 2 in FIG. 2. The device 1, the device 2, and a device j are deployed in a same distributed network or distributed scenario. Herein, j is a positive integer greater than or equal to 3. For example, the device j may be the device 3 in FIG. 2. As shown in FIG. 9A to FIG. 9D, the application installation method in this application may include a phase of applying for an installation credential and an application installation phase.

In the phase of applying for an installation credential, the application installation method in this application may include the following steps.

S60: An authorized interface in the device 1 receives an installation event 5 generated by triggering the authorized interface.

The installation event 5 is generated by triggering the authorized interface by a user. In some examples, the initiator may provide the user with a control corresponding to the authorized interface. This control is different from a trusted control provided by the device 1. An interface corresponding to the control is an authorized interface, and an interface corresponding to the trusted control is not an authorized interface. After the user performs a trigger operation like tapping on the control, the device 1 may generate the installation event 5 based on the trigger operation. It can be learned that the user needs to select the device 2 for installing an application. Therefore, the initiator may request the device 1 to install the application 2 on the device 2 with user perception.

The installation event 5 indicates that the initiator requests, through the authorized interface, the device 1 to install the application 2 on the device 2. A specific implementation of the installation event 5 is not limited in this application.

S61: In response to the installation event 5, the authorized interface in the device 1 sends an application request 3 to a package management service in the device 1 through the authorized interface, where the application request 3 is used to apply for an installation credential for installing the application 2 on the device 2, and the application request 3 carries an identifier of the application 2 and an identifier of the device 2.

After receiving the installation event 5, the authorized interface in the device 1 may send the application request 3 to the package management service in the device 1 through the authorized interface, so that the application request 3 can be used to apply for, from the package management service in the device 1, the installation credential for installing the application 2 on the device 2.

A specific implementation of the application request 3 is not limited in this application.

The installation credential may be used as a unique credential for the authorized interface in the device 1 to initiate, to the package management service in the device 1, an installation request for installing the application 2 on the device 2. A specific implementation of the installation credential is not limited in this application. In some examples, the installation credential may include one or more parameters in the identifier of the application 2, a validity period of the installation credential, an identifier of the initiator, the identifier of the device 2, a hash value of the application 2, a version number of the application 2, an application developer signature of the application 2, and a screen state (for example, a screen-off state or a steady-on state) of the device 1, and the like.

S62: The package management service in the device 1 determines, based on the application request 3, whether a security level and/or a risk level of the device 2 meet/meets a preset condition.

In some examples, after receiving the application request 3, the package management service in the device 1 may directly perform steps after S62 to determine whether to perform user confirmation verification, and does not perform S62 to verify security or a risk of the device 2.

In some examples, after receiving the application request 3, the package management service in the device 1 may first perform S62 to verify security performance or a risk of the device 2, and then perform steps after S62 to request for the installation credential for installing the application 2 on the device 2. For ease of description, the foregoing implementation is used as an example for illustration in FIG. 9A to FIG. 9D.

In some examples, after receiving the application request 3, the package management service in the device 1 may first perform steps after S62 to request for the installation credential for installing the application 2 on the device 2, and then perform S62 before requesting the device 2 to install the application 2 to verify security or a risk of the device 2.

It can be learned that S62 and S631 are optional steps.

For a specific implementation in which the packet management service in the device 1 determines the security level and/or the risk level of the device 2, refer to the descriptions of the embodiment of S22 in FIG. 6A. Details are not described herein again.

When the security level and/or the risk level of the device 2 meet/meets the preset condition, the package management service in the device 1 performs S632 or S633. When the security level and the risk level of the device 2 do not meet the preset condition, the package management service in the device 1 performs S631.

S631: The packet management service in the device 1 shields the application request 3.

When the security level and the risk level of the device 2 do not meet the preset condition, the package management service in the device 1 may determine that the device 2 cannot install or update the application 2. Therefore, the package management service in the device 1 may shield the application request 3.

S632: When the application request 3 indicates that the application 2 needs to be updated, the package management service in the device 1 sends the installation credential to the authorized interface in the device 1.

When the application request 3 indicates that the application 2 needs to be updated, the package management service in the device 1 may determine that the application 2 has been installed on the device 2, so that the package management service in the device 1 may determine to make user confirmation verification exempt.

Therefore, the package management service in the device 1 may send the installation credential to the authorized interface in the device 1.

S633: When the application request 3 indicates that the application 2 needs to be installed, the package management service in the device 1 sends a verification request 3 to a package management service in the device j.

When the application request 3 indicates that the application 2 needs to be installed, the package management service in the device 1 needs to determine whether to perform user confirmation verification.

Therefore, the package management service in the device 1 may send the verification request 3 to the package management service in the device j. The verification request 3 is used to request the package management service in the device j to query whether the application 2 is installed on the device j. A specific implementation of the verification request 3 is not limited in this application.

In other words, the package management service in the device 1 may send the verification request 3 to one or more devices that are located in the same distributed network or distributed scenario as the device 1 and the device 2, so that the device j can provide, for the package management service in the device 1, a basis for determining whether to perform user confirmation verification.

In some examples, the device i is the device 3 in FIG. 2. The package management service in the device 1 may send the verification request 3 to a package management service in the device 3.

S64: The package management service in the device j determines whether the application 2 is installed on the device j.

An implementation of S64 is similar to that of the embodiment of S32 shown in FIG. 7A, and details are not described herein again.

S65: The package management service in the device j sends a verification result 3 to the package management service in the device 1.

The package management service in the device j may send the verification result 3 to the package management service in the device 1, so that the package management service in the device 1 can learn, based on the verification result 3, whether the application 2 is installed on the device j.

In some examples, the device j is the device 3 in FIG. 2. The package management service in the device 3 may send the verification result 3 to the package management service in the device 1.

Therefore, the package management service in the device 1 can learn, based on the verification result 3 sent by one or more devices that are located in the same distributed network or distributed scenario as the device 1 and the device 2, whether the application 2 is installed on a device in the devices. In this way, the package management service in the device 1 may determine whether to perform user confirmation verification.

S661: When the verification result 3 sent by the device j indicates that the application 2 is installed on a device, the package management service in the device 1 sends the installation credential to the authorized interface in the device 1. Therefore, the package management service in the device 1 may determine to make user confirmation verification exempt.

S662: When the package management service in the device 1 does not receive the verification result 3 within duration 31 or the verification results 3 sent by all devices j indicate that the application 2 is not installed on the devices, the package management service sends a verification request 4 to a server.

In some examples, considering various factors such as a network, the device j may not feed back the verification result 3. Based on this, when the package management service in the device 1 does not receive, after the duration 31, the verification result 3 sent by any device j, it may determine that the application 2 is not installed on the device. Therefore, the package management service in the device 1 may send the verification request 4 to the server.

A specific value of the duration 31 is not limited in this application.

In some examples, when the verification results 3 sent by all the devices j indicate that the application 2 is not installed on the devices, the package management service in the device 1 may determine that the application 2 has not been installed on all the devices j. Therefore, the package management service in the device 1 may send the verification request 4 to the server.

The verification request 4 is used to request the server to query whether the application 2 has been installed on a device. The device herein is a device located in the same distributed network or distributed scenario as the device 1 and the device 2. The verification request 4 carries an account used by the device 1 and the device 2, and the account is an account shared by all devices located in the same distributed network or distributed scenario as the device 1 and the device 2. A specific implementation of the verification request 4 is not limited in this application.

Therefore, the package management service in the device 1 may send the verification request 4 to the server, so that the server can provide, for the package management service in the device 1 based on the verification request 4, a basis for determining whether to perform user confirmation verification.

In addition, when the verification result 3 is not received within the duration 31 or the verification results 3 sent by all the devices j indicate that the application 2 is not installed on the devices, in addition to sending the verification request 4 to the server, the package management service in the device 1 may further shield the application request 3. In other words, the package management service in the device 1 may determine that the user does not want to install the application 2 on the device 2.

S67: The server determines whether the application 2 has been installed under a same account.

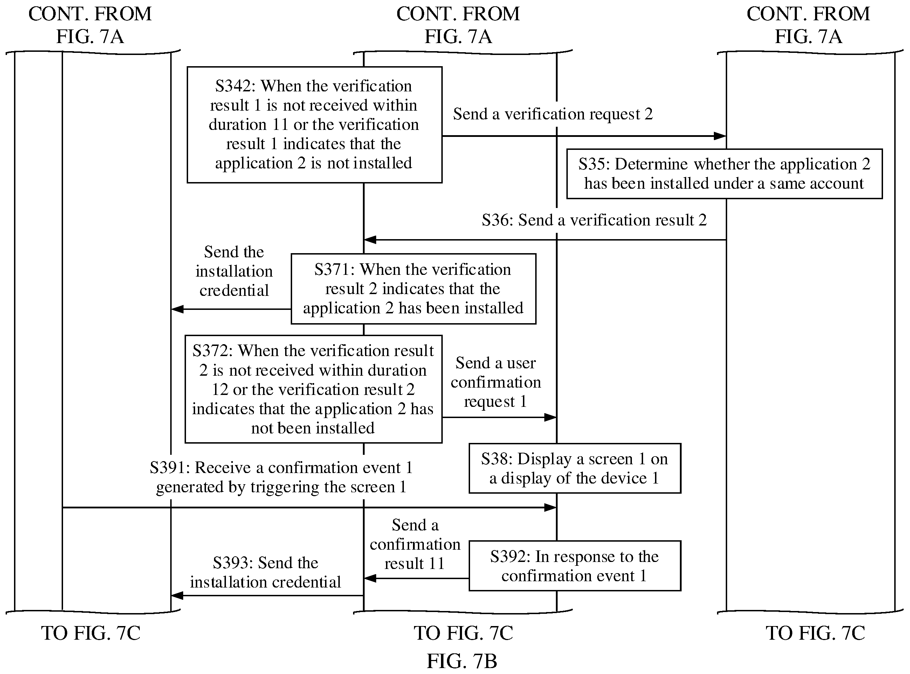

For a specific implementation of S67, refer to the descriptions of the embodiment of S35 shown in FIG. 7B. Details are not described herein again.

S68: The server sends the verification result 4 to the package management service in the device 1.

The server may send the verification result 4 to the package management service in the device 1, so that the package management service in the device 1 can learn, based on the verification result 4, whether the application 2 has been installed on a device.

Therefore, the package management service in the device 1 can learn, based on the verification result 4 sent by the server, whether the application 2 has been installed on a device. In this way, the package management service in the device 1 can determine whether to perform user confirmation verification.

S691: When the verification result 4 indicates that the application 2 has been installed on a device, the package management service in the device 1 sends the installation credential to the authorized interface in the device 1.

In this way, the package management service in the device 1 may determine that the user has previously requested to install the application 2 on the device j, and the package management service in the device 1 may determine to make user confirmation verification exempt.

S692: When the package management service in the device 1 does not receive the verification result 4 within duration 32 or the verification result 4 indicates that the application 2 has not been installed on the device, the package management service in the device 1 sends a user confirmation request 3 to an authentication service in the device 1.

In some examples, considering various factors such as a network, the server may not feed back the verification result 4. Based on this, when the package management service in the device 1 does not receive, after the duration 32, the verification result 4 sent by the server, it may be determined that the application 2 has not been installed on the device Therefore, the package management service in the device 1 may determine that user confirmation verification needs to be performed. Therefore, the packet management service in the device 1 may send the user confirmation request 3 to the authentication service in the device 1.

A specific value of the duration 32 is not limited in this application.

In some examples, when the verification result 4 sent by the server indicates that the application 2 has not been installed on the device, the package management service in the device 1 may determine that the user confirmation verification needs to be performed. Therefore, the packet management service in the device 1 may send the user confirmation request 3 to the authentication service in the device 1.

The user confirmation request 3 is used to request the authentication service in the device 1 to confirm, by the user, whether to install the application 2 on the device 2. A specific implementation of the user confirmation request 3 is not limited in this application.

It can be learned that the package management service in the device 1 may invoke the authentication service in the device 1 to perform user confirmation verification.

In addition, when the verification result 4 is not received within the duration 32 or the verification result 4 indicates that the application 2 has not been installed on the device, in addition to sending the user confirmation request 3 to the authentication service in the device 1, the package management service in the device 1 may further shield the application request 3. In other words, the package management service in the device 1 may determine that the user does not want to install the application 2 on the device 2.

S70: The authentication service in the device 1 displays a screen 3 on a display of the device 1 based on the user confirmation request 3.

After receiving the user confirmation request 3, the authentication service in the device 1 may display the screen 3 on the display of the device 1. The screen 3 is used to request the user to confirm whether to install the application 2 on the device 2. In some examples, for the screen 3, refer to the window 300 shown in FIG. 3A, or for the screen 3, refer to the user interface 12 shown in FIG. 3B.

S711: The authentication service in the device 1 receives a confirmation event 3 generated by triggering the screen 3.

The confirmation event 3 is generated by triggering the screen 3 by the user. In some examples, the screen 3 is the window 300 shown in FIG. 3A. After the user performs a trigger operation like tapping on the control 302, the authentication service in the device 1 may generate the confirmation event 3 based on the trigger operation. The confirmation event 3 indicates that the user requires to install the application 2 on the device 2. A specific implementation of the confirmation event 3 is not limited in this application.

S712: The authentication service in the device 1 sends a confirmation result 31 to the packet management service in the device 1 in response to the confirmation event 3.

After receiving the confirmation event 3, the authentication service in the device 1 may obtain the confirmation result 31. The confirmation result 31 indicates that the user requires to install the application 2 on the device 2. A specific implementation of the confirmation result 31 is not limited in this application.

Therefore, after confirmation by the user, the authentication service in the device 1 may send the confirmation result 31 to the package management service in the device 1, so that the package management service in the device 1 determines that the user requires to install the application 2 on the device 2.

S713: The package management service in the device 1 sends the installation credential to the authorized interface in the device 1 based on the confirmation result 31.

After receiving the confirmation result 31, the package management service in the device 1 may determine that the user requires to install the application 2 on the device 2. Therefore, after confirmation by the user, the package management service in the device 1 may send the installation credential to the authorized interface in the device 1.

S721: When the authentication service in the device 1 does not receive the confirmation event 3 within duration 33 or receives a rejection event 3, the authentication service in the device 1 sends a confirmation result 32 to the packet management service in the device 1.

In some examples, considering various factors such as a network, the user may not give a feedback or a user feedback may time out. Based on this, when the authentication service in the device 1 does not receive, after the duration 33, the confirmation event 3 generated by triggering the screen 3, it may be determined that the user does not want to install the application 2 on the device 2. Therefore, after confirmation by the user, the authentication service in the device 1 may send the confirmation result 32 to the package management service in the device 1.

A specific value of the duration 33 is not limited in this application.

In some examples, when receiving the rejection event 3 generated by triggering the screen 3, the authentication service in the device 1 may determine that the user does not want to install the application 2 on the device 2. Therefore, after confirmation by the user, the authentication service in the device 1 may send the confirmation result 32 to the package management service in the device 1.

The rejection event 3 is generated by triggering the screen 3 by the user. In some examples, the screen 3 is the window 300 shown in FIG. 3A. After the user performs a trigger operation like tapping on the control 303, the authentication service in the device 1 may generate the rejection event 3 based on the trigger operation. The rejection event 3 indicates that the user does not want to install the application 2 on the device 2. A specific implementation of the rejection event 3 is not limited in this application.

The confirmation result 32 indicates that the user does not want to install the application 2 on the device 2. A specific implementation of the confirmation result 32 is not limited in this application.

Therefore, after confirmation by the user, the authentication service in the device 1 may send the confirmation result 32 to the package management service in the device 1, so that the package management service in the device 1 can determine that the user does not want to install the application 2 on the device 2.

S722: The package management service in the device 1 shields the application request 3 based on the confirmation result 32.

After receiving the confirmation result 32, the package management service in the device 1 may determine that the user does not want to install the application 2 on the device 2. Therefore, the package management service in the device 1 may shield the application request 3.

In conclusion, the authorized interface in the device 1 may receive the installation credential from the package management service in the device 1 in any one of cases in which the device 2 needs to update the application 2, the application 2 is installed on devices in a same distributed network or distributed scenario, the installation information of the application 2 stored in the server indicates that the application 2 has been installed on a device, and it is determined that the user requires to install the application 2 on the device 2.

It should be understood that, other than the foregoing implementation, the package management service in the device 1 may alternatively determine, by using both the device j and the server, whether to perform user confirmation verification. Alternatively, the package management service in the device 1 may further determine, only by using the device j or the server, whether to perform user confirmation verification. Alternatively, the package management service in the device 1 may first use the device j and then use the server to determine whether to perform user confirmation verification.

In the application installation phase, the application installation method in this application may include the following steps.

S73: The authorized interface in the device 1 sends an installation request 51 to the package management service in the device 1, where the installation request 51 is used to request to install the application 2 on the device 2, and the installation request 51 carries the installation credential, the identifier of the application 2, and the identifier of the initiator.

After receiving the installation credential in the phase of applying for the installation credential, the authorized interface in the device 1 may send the installation request 51 to the package management service in the device 1 at any time point within the validity period of the installation credential, so that the installation request 51 can be used to request the package management service in the device 1 to install the application 2 on the device 2. In this way, application installation time is controllable, misuse of the installation credential by the initiator is avoided, thereby ensuring validity and security of application installation.

A specific implementation of the installation request 51 is not limited in this application. In addition, in addition to the installation credential, the identifier of the application 2, and the identifier of the initiator, the installation request 51 may further include the identifier of the device 2. The installation credential does not include the screen state of the device 1.

In addition, when the validity period of the installation credential does not exist, the authorized interface in the device 1 may send the installation request 51 to the package management service in the device 1 at any time point.

S74: When the installation credential matches both the initiator and the application 2, the package management service in the device 1 sends an installation request 52 to a package management service in the device 2, where the installation request 52 is used to request to install the application 2 on the device 2, and the installation request 52 carries the identifier of the application 2.

After receiving the installation request 51, the package management service in the device 1 needs to verify validity of the installation credential, to ensure that the application 2 is installed on the device 2, instead of installation of the application 2 on another device or installation of another application on the device 2. This avoids a phenomenon that the initiator uses the installation credential without authorization, thereby ensuring validity and security of application installation.

In some examples, the package management service in the device 1 may determine whether the installation credential matches the initiator and the application 2, to verify the validity of the installation credential.

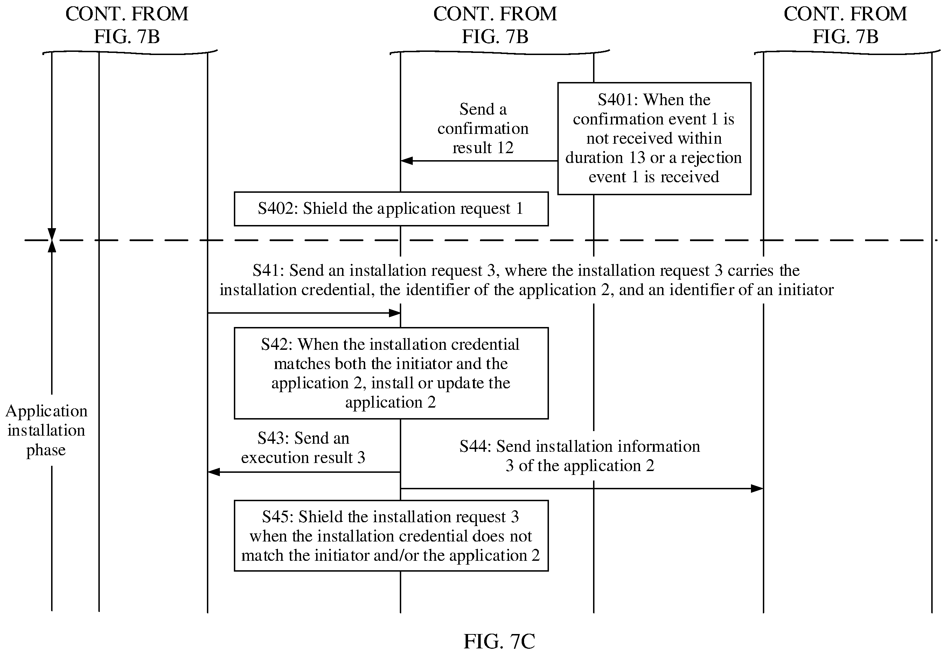

For whether the installation credential matches the initiator and the application 2, refer to the descriptions of the embodiment of S42 shown in FIG. 7C. Details are not described herein again.

When the installation credential matches both the initiator and the application 2, the package management service in the device 1 may determine that the installation credential is valid. The installation request 51 is sent through the authorized interface in the device 1, and the installation request 51 includes the valid installation credential. Therefore, the package management service in the device 1 may determine that an installation initiation behavior generated by the initiator through the authorized interface in the device 1 based on the installation credential is a trusted installation behavior. In other words, the installation initiation behavior meets a user expectation and is secure. Therefore, the package management service in the device 1 may determine that the user requires to install the application 2 on the device 2.

Therefore, the package management service in the device 1 may send the installation request 52 to the package management service in the device 2, so that the installation request 52 can be used to request the package management service in the device 1 to install the application 2 on the device 2.

A specific implementation of the installation request 52 is not limited in this application. In addition, in addition to the identifier of the application 2, the installation request 52 may further include the identifier of the device 2.

S75: The package management service in the device 2 determines, based on the installation request 52, whether the device 2 is allowed to install the application 2.

After receiving the installation request 52, the package management service in the device 2 may determine whether the device 2 is allowed to install the application 2.

When the device 2 is allowed to install the application 2, the package management service in the device 2 performs S761. When the device 2 is not allowed to install the application 2, the package management service in the device 2 performs S762.

S761: The package management service in the device 2 installs or updates the application 2.

Therefore, the package management service in the device 2 may install the application 2 on the device 2 or update the application 2 in the device 2.

S762: The package management service in the device 2 shields the installation request 52.

The package management service in the device 2 may refuse to install the application 2 on the device 2 or refuse to update the application 2 in the device 2. Therefore, the package management service in the device 2 may shield the installation request 52.

S77: The package management service in the device 2 sends an execution result 5 to the package management service in the device 1.

After the package management service in the device 2 completes S761, the execution result 5 may be obtained. The execution result 5 may indicate that the device 2 has installed or updated the application 2.

After the package management service in the device 2 completes S762, the execution result 5 may be obtained. The execution result 5 may indicate that the device 2 refuses to install or update the application 2.

It can be learned that the execution result 5 may indicate whether the device 2 installs or updates the application 2. A specific implementation of the execution result 5 is not limited in this application.

Therefore, the package management service in the device 2 may send the execution result 5 to the package management service in the device 1, so that the device 1 can learn, based on the execution result 5, whether the device 2 installs or updates the application 2.

S781: The package management service in the device 1 sends an execution result 5 to the authorized interface in the device 1 through the authorized interface.

S781 is an optional step.

After receiving the execution result 5, the package management service in the device 1 may send the execution result 5 to the authorized interface in the device 1 through the authorized interface, so that the authorized interface can learn, based on the execution result 5, whether the device 2 installs or updates the application 2.

In addition, the device 1 may further notify the user that the device 2 has installed or updated the application 2. In some examples, the device 1 may display a prompt 53 to the user, where the prompt 53 is used to remind the user that the device 2 has installed or updated the application 2. The prompt 53 may be represented in a form of text, vibration, ringing, indicator blinking, or the like.

In addition, the device 1 may further notify the user that the device 2 has installed or updated the application 2. In some examples, a screen layout of a control corresponding to the authorized interface may also adaptively change, for example, change from a download prompt to a start prompt.

S782: The package management service in the device 1 sends installation information 5 of the application 2 to the server.

The installation information 5 of the application 2 may include one or more parameters in the initiator, a package name of the application 2, installation time of the application 2, an application developer public key of the application 2, a version number of the application 2, an exemption period of the application 2, the identifier of the device 2, and the like.

After receiving the execution result 5, the package management service in the device 1 may send the installation information 5 of the application 2 to the server, so that the server can store the installation information 5 of the application 2 under a same account. Therefore, another device located in the same distributed network or distributed scenario as the device 1 and the device 2 can learn of the installation information 5 of the application 2. This helps the another device determine, when installing the application 2, whether to perform user confirmation verification.

It should be understood that there is no time sequence for S781 and S782, and S781 and S782 may be performed simultaneously or sequentially.

S79: The package management service in the device 1 shields the installation request 51 when the installation credential does not match the initiator and/or the application 2.

For a specific implementation in which the installation credential does not match the initiator and/or the application 2, refer to the descriptions of S45 shown in FIG. 7C. Details are not described herein again.

It can be learned that when the installation credential does not match the initiator, and/or the installation credential does not match the application 2, the package management service in the device 1 may determine that the installation credential is invalid.

The installation request 51 is sent through the authorized interface in the device 1, and the installation request 51 includes the invalid installation credential. Therefore, the package management service in the device 1 may determine that an installation initiation behavior generated by the initiator through the authorized interface in the device 1 based on the installation credential is not a trusted installation behavior. In other words, the installation initiation behavior is secure but does not meet a user expectation. Therefore, the package management service in the device 1 may refuse to install the application 2 on the device 2 or refuse to update the application 2 in the device 2.

Therefore, the package management service in the device 1 may shield the installation request 51.

In conclusion, when the initiator uses the authorized interface, the device 1 may install a single application on the device 2, and can install the single application in a distributed manner.

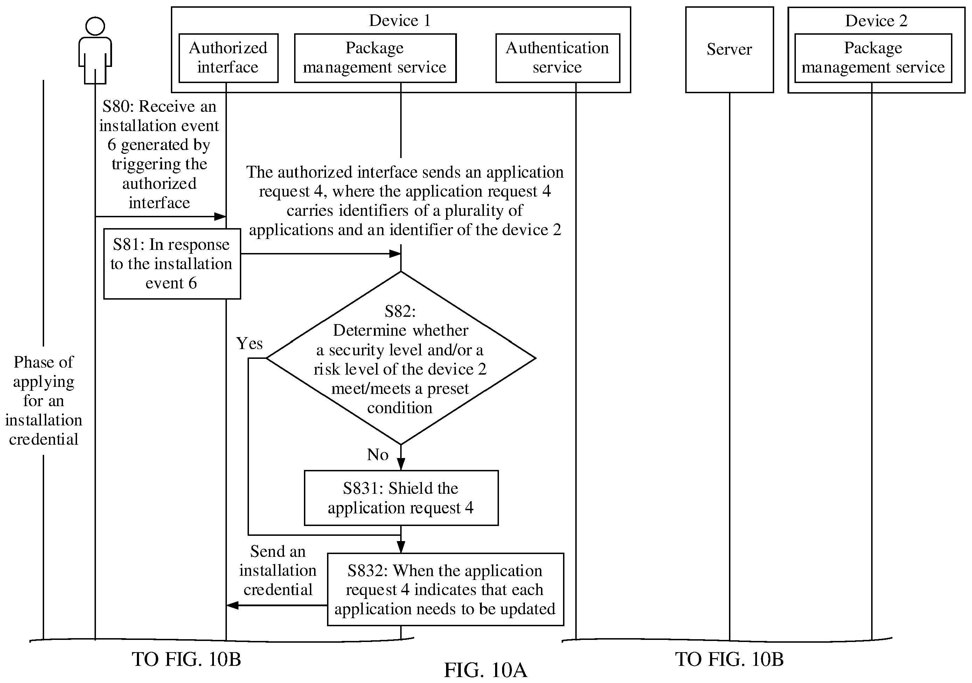

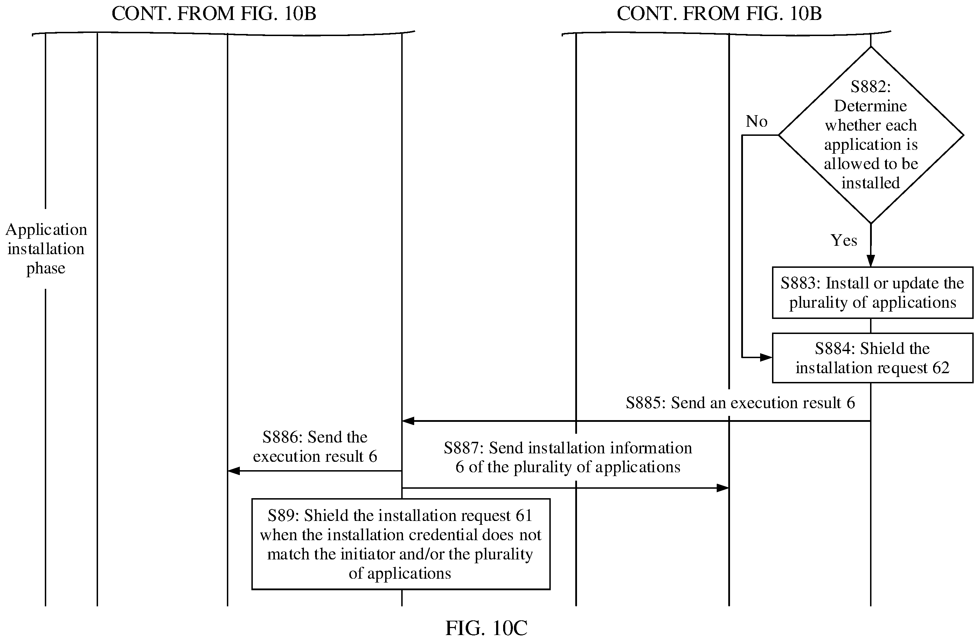

FIG. 10A to FIG. 10C are an interaction diagram of an application installation method according to an embodiment of this application. For ease of description, in FIG. 10A to FIG. 10C, a device to which an initiator initiates installation of a plurality of applications is referred to as a device 1.

For distributed installation of the plurality of applications, a device (namely, the device 4 mentioned above) on which the applications are installed may be the device 2 in FIG. 2. The device 1 and the device 2 are deployed in a same distributed network or distributed scenario. As shown in FIG. 10A to FIG. 10C, the application installation method in this application may include a phase of applying for an installation credential and an application installation phase.

In the phase of applying for an installation credential, the application installation method in this application may include the following steps.

S80: An authorized interface in the device 1 receives an installation event 6 generated by triggering the authorized interface.

The installation event 6 is generated by triggering the authorized interface by a user. In some examples, the initiator may provide the user with a control corresponding to the authorized interface. This control is different from a trusted control provided by the device 1. An interface corresponding to the control is an authorized interface, and an interface corresponding to the trusted control is not an authorized interface. After the user performs a trigger operation like tapping on the control, the device 1 may generate the installation event 6 based on the trigger operation. It can be learned that the user needs to select the device 2 for installing an application. Therefore, the initiator may request the device 1 to install the plurality of applications on the device 2 with user perception.

The installation event 6 indicates that the initiator requests, through the authorized interface, the device 1 to install the plurality of applications on the device 2. A specific implementation of the installation event 6 is not limited in this application.

S81: In response to the installation event 6, the authorized interface in the device 1 sends an application request 4 to a package management service in the device 1 through the authorized interface, where the application request 4 is used to apply for an installation credential for installing the plurality of applications on the device 2, and the application request 4 carries identifiers of the plurality of applications and an identifier of the device 2.

After receiving the installation event 6, the authorized interface in the device 1 may send the application request 4 to the package management service in the device 1 through the authorized interface, so that the application request 4 can be used to apply for, from the package management service in the device 1, the installation credential for installing the plurality of applications on the device 2.

A specific implementation of the application request 4 is not limited in this application. In the application request 4, identifiers of the plurality of applications may include identifiers of the applications, and/or include an identifier of an application list that includes all the applications.

The installation credential may be used as a unique credential for the authorized interface in the device 1 to initiate, to the package management service in the device 1, an installation request for installing the plurality of applications on the device 2. A specific implementation of the installation credential is not limited in this application. In some examples, the installation credential may include one or more parameters in an identifier of each application, a validity period of the installation credential, an identifier of the initiator, the identifier of the device 2, a hash value of each application, a version number of each application, an application developer signature of each application, and a screen state (for example, a screen-off state or a steady-on state) of the device 1, and the like.

S82: The package management service in the device 1 determines, based on the application request 4, whether a security level and/or a risk level of the device 2 meet/meets a preset condition.

In some examples, after receiving the application request 4, the package management service in the device 1 may directly perform steps after S82 to determine whether to perform user confirmation verification, and does not perform S82 to verify security or a risk of the device 2.

In some examples, after receiving the application request 4, the package management service in the device 1 may first perform S82 to verify security performance or a risk of the device 2, and then perform steps after S92 to request for the installation credential for installing the plurality of applications on the device 2. For ease of description, the foregoing implementation is used as an example for illustration in FIG. 10A to FIG. 10C.

In some examples, after receiving the application request 4, the package management service in the device 1 may first perform steps after S82 to request for the installation credential for installing the plurality of applications on the device 2, and then perform S82 before requesting the device 2 to install the plurality of applications to verify security or a risk of the device 2.

It can be learned that S82 and S831 are optional steps.

For a specific implementation in which the packet management service in the device 1 determines the security level and/or the risk level of the device 2, refer to the descriptions of the embodiment of S22 in FIG. 6A. Details are not described herein again.

When the security level and/or the risk level of the device 2 meet/meets the preset condition, the package management service in the device 1 performs S832 or S833. When the security level and the risk level of the device 2 do not meet the preset condition, the package management service in the device 1 performs S831.

S831: The packet management service in the device 1 shields the application request 4.

When the security level and the risk level of the device 2 do not meet the preset condition, the package management service in the device 1 may determine that the device 2 cannot install or update the plurality of applications. Therefore, the package management service in the device 1 may shield the application request 4.

S832: When the application request 4 indicates that each application needs to be updated, the package management service in the device 1 sends the installation credential to the authorized interface in the device 1.

When the application request 4 indicates that the application 2 needs to be updated, the package management service in the device 1 may determine that each of the plurality of applications has been installed on the device 2, so that the package management service in the device 1 may determine to make user confirmation verification exempt.

Therefore, the package management service in the device 1 may send the installation credential to the authorized interface in the device 1.

S833: When the application request 4 indicates that at least one application needs to be installed, the package management service in the device 1 sends a user confirmation request 4 to the authentication service in the device 1.

When the application request 3 indicates that one or more applications need to be installed, the package management service in the device 1 may determine that user confirmation verification needs to be performed. Therefore, the package management service in the device 1 may send the user confirmation request 4 to the authentication service in the device 1, and can invoke the authentication service in the device 1 to perform user confirmation verification.

The user confirmation request 4 is used to request the authentication service in the device 1 to confirm, by the user, whether to install the plurality of applications on the device 2. A specific implementation of the user confirmation request 4 is not limited in this application.

S84: The authentication service in the device 1 displays a screen 4 on a display of the device 1 based on the user confirmation request 4.

After receiving the user confirmation request 4, the authentication service in the device 1 may display the screen 4 on the display of the device 1. The screen 4 is used to confirm to the user whether to install a plurality of applications on the device 2. **In** some examples, for the screen 4, refer to the window 300 shown in FIG. 3A, or for the screen 4, refer to the user interface 12 shown in FIG. 3B.

S851: The authentication service in the device 1 receives a confirmation event 4 generated by triggering the screen 4.

The confirmation event 4 is generated by triggering the screen 4 by the user. **In** some examples, the screen 4 is the user interface 12 shown in FIG. 3B. After the user performs a trigger operation like tapping on the control 306, the device 1 may generate the confirmation event 4 based on the trigger operation. The confirmation event 4 indicates that the user confirms to install the plurality of applications on the device 2. A specific implementation of the confirmation event 4 is not limited in this application.

S852: The authentication service in the device 1 sends a confirmation result 41 to the packet management service in the device 1 in response to the confirmation event 4.

After receiving the confirmation event 4, the authentication service in the device 1 may obtain the confirmation result 41. The confirmation result 41 indicates that the user requires to install the plurality of applications on the device 2. A specific implementation of the confirmation result 41 is not limited in this application.

Therefore, after confirmation by the user, the authentication service in the device 1 may send the confirmation result 41 to the package management service in the device 1, so that the package management service in the device 1 determines that the user requires to install the plurality of applications on the device 2.

S853: The package management service in the device 1 sends the installation credential to the authorized interface in the device 1 based on the confirmation result 41.

After receiving the confirmation result 41, the package management service in the device 1 may determine that the user requires to install the plurality of applications on the device 2. Therefore, after confirmation by the user, the package management service in the device 1 may send the installation credential to the authorized interface in the device 1.

S861: When the authentication service in the device 1 does not receive the confirmation event 4 within duration 4 or receives a rejection event 4, the authentication service in the device 1 sends a confirmation result 42 to the packet management service in the device 1.

In some examples, considering various factors such as a network, the user may not give a feedback or a user feedback may time out. Based on this, when the authentication service in the device 1 does not receive, after the duration 4, the confirmation event 4 generated by triggering the screen 4, it may be determined that the user does not want to install the plurality of applications on the device 2. Therefore, after confirmation by the user, the authentication service in the device 1 may send the confirmation result 42 to the package management service in the device 1.

A specific value of the duration 4 is not limited in this application.

In some examples, when receiving the rejection event 4 generated by triggering the screen 4, the authentication service in the device 1 may determine that the user does not want to install the plurality of applications on the device 2. Therefore, after confirmation by the user, the authentication service in the device 1 may send the confirmation result 42 to the package management service in the device 1.

The rejection event 4 is generated by triggering the screen 4 by the user. In some examples, the screen 4 is the user interface 12 shown in FIG. 3B. After the user performs a trigger operation like tapping on the control 307, the authentication service in the device 1 may generate the rejection event 4 based on the trigger operation. The rejection event 4 indicates that the user does not want to install the plurality of applications on the device 2. A specific implementation of the rejection event 4 is not limited in this application.

The confirmation result 42 indicates that the user does not want to install the plurality of applications on the device 2. A specific implementation of the confirmation result 42 is not limited in this application.

Therefore, after confirmation by the user, the authentication service in the device 1 may send the confirmation result 42 to the package management service in the device 1, so that the package management service in the device 1 can determine that the user does not want to install the plurality of applications on the device 2.

S862: The package management service in the device 1 shields the application request 4 based on the confirmation result 42.

After receiving the confirmation result 42, the package management service in the device 1 may determine that the user does not want to install the plurality of applications on the device 2. Therefore, the package management service in the device 1 may shield the application request 4.

In conclusion, the authorized interface in the device 1 may receive the installation credential from the package management service in the device 1 in any one of cases in which the device 2 needs to update each of the plurality of applications and determines that the user requires to install the plurality of applications on the device 2.

In the application installation phase, the application installation method in this application may include the following steps.

S87: The authorized interface in the device 1 sends an installation request 61 to the package management service in the device 1, where the installation request 61 is used to request to install the plurality of applications on the device 2, and the installation request 61 carries the installation credential, the identifiers of the plurality of applications, and the identifier of the initiator.

After receiving the installation credential in the phase of applying for the installation credential, the authorized interface in the device 1 may send the installation request 61 to the package management service in the device 1 at any time point within the validity period of the installation credential, so that the installation request 61 can be used to request the package management service in the device 1 to install the plurality of applications on the device 2. In this way, application installation time is controllable, misuse of the installation credential by the initiator is avoided, thereby ensuring validity and security of application installation.

A specific implementation of the installation request 61 is not limited in this application. In the installation request 61, the identifiers of the plurality of applications may include identifiers of the applications, and/or include an identifier of an application list that includes all the applications. In addition, in addition to the installation credential, the identifiers of the plurality of applications, and the identifier of the initiator, the installation request 61 may further include the identifier of the device 2. The installation credential does not include the screen state of the device 1.

Certainly, when the validity period of the installation credential does not exist, the authorized interface in the device 1 may send the installation request 61 to the package management service in the device 1 at any time point.

S881: When the installation credential matches both the initiator and the plurality of applications, the package management service in the device 1 sends an installation request 62 to a package management service in the device 2, where the installation request 62 is used to request to install the plurality of applications on the device 2, and the installation request 62 carries the identifiers of the plurality of applications.

After receiving the installation request 61, the package management service in the device 1 needs to verify validity of the installation credential, to ensure that the plurality of applications are installed on the device 2, instead of installation of the plurality of applications on another device or installation of another application on the device 2. This avoids a phenomenon that the initiator uses the installation credential without authorization, thereby ensuring validity and security of application installation.

In some examples, the package management service in the device 1 may determine whether the installation credential matches the initiator and the plurality of applications, to verify the validity of the installation credential.

For whether the installation credential matches the initiator and the plurality of applications, refer to the descriptions of the embodiment of S56 shown in FIG. 8B. Details are not described herein again.

When the installation credential matches both the initiator and the plurality of applications, the package management service in the device 1 may determine that the installation credential is valid. The installation request 61 is sent through the authorized interface in the device 1, and the installation request 61 includes the valid installation credential. Therefore, the package management service in the device 1 may determine that an installation initiation behavior generated by the initiator through the authorized interface in the device 1 based on the installation credential is a trusted installation behavior. In other words, the installation initiation behavior meets a user expectation and is secure. Therefore, the package management service in the device 1 may determine that the user requires to install the plurality of applications on the device 2.

Therefore, the package management service in the device 1 may send the installation request 62 to the package management service in the device 2, so that the installation request 62 can be used to request the package management service in the device 1 to install the plurality of applications on the device 2.

A specific implementation of the installation request 62 is not limited in this application. In addition, in addition to the identifiers of the plurality of applications, the installation request 62 may further include the identifier of the device 2.

S882: The package management service in the device 2 determines, based on the installation request 62, whether the device 2 is allowed to install the plurality of applications.

After receiving the installation request 62, the package management service in the device 2 may determine whether the device 2 is allowed to install the plurality of applications.

When the device 2 is allowed to install the plurality of applications, the package management service in the device 2 performs S883. When the device 2 is not allowed to install one or more applications, the package management service in the device 2 performs S884.

S883: The package management service in the device 2 installs or updates the plurality of applications.

Therefore, the package management service in the device 2 may install each of the plurality of applications on the device 2 or update each of the plurality of applications in the device 2.

S884: The package management service in the device 2 shields the installation request 62.

The package management service in the device 2 may refuse to install the plurality of applications on the device 2 or refuse to update the plurality of applications in the device 2. Therefore, the package management service in the device 2 may shield the installation request 62.

S885: The package management service in the device 2 sends an execution result 6 to the package management service in the device 1.

After the package management service in the device 2 completes S883, the execution result 6 may be obtained. The execution result 6 may indicate that the device 2 has installed or updated the plurality of applications.

After the package management service in the device 2 completes S884, the execution result 6 may be obtained. The execution result 6 may indicate that the device 2 refuses to install or update the plurality of applications.

It can be learned that the execution result 6 may indicate whether the device 2 installs or updates the plurality of applications. A specific implementation of the execution result 6 is not limited in this application.

Therefore, the package management service in the device 2 may send the execution result 6 to the package management service in the device 1, so that the device 1 can learn, based on the execution result 6, whether the device 2 installs or updates the plurality of applications.

S886: The package management service in the device 1 sends an execution result 6 to the authorized interface in the device 1 through the authorized interface.

S886 is an optional step.

After receiving the execution result 6, the package management service in the device 1 may send the execution result 6 to the authorized interface in the device 1 through the authorized interface, so that the authorized interface can learn, based on the execution result 6, whether the device 2 installs or updates the plurality of applications.

In addition, the device 1 may further notify the user that the device 2 has installed or updated the plurality of applications. In some examples, the device 1 may display a prompt 63 to the user, where the prompt 63 is used to remind the user that the device 2 has installed or updated the plurality of applications. The prompt 63 may be represented in a form of text, vibration, ringing, indicator blinking, or the like.

In addition, the device 1 may further notify the user that the device 2 has installed or updated the plurality of applications. In some examples, a screen layout of a control corresponding to the authorized interface may also adaptively change, for example, change from a download prompt to a start prompt.

S887: The package management service in the device 1 sends installation information 6 of the plurality of applications to a server.

The installation information 6 of the plurality of applications may include one or more parameters in the initiator, a package name of each application, installation time of each application, an application developer public key of each application, a version number of each application, an exemption period of each application, the identifier of the device 2, and the like.

After receiving the execution result 6, the package management service in the device 1 may send the installation information 6 of the plurality of applications to the server, so that the server can store the installation information 6 of the plurality of applications under a same account. Therefore, another device located in the same distributed network or distributed scenario as the device 1 and the device 2 can learn of the installation information 6 of the plurality of applications. This helps the another device determine, when installing any one of the plurality of applications, whether to perform user confirmation verification.

It should be understood that there is no time sequence for S886 and S887, and S886 and S887 may be performed simultaneously or sequentially.

S89: The package management service in the device 1 shields the installation request 61 when the installation credential does not match the initiator and/or the plurality of applications.

For a specific implementation in which the installation credential does not match the initiator and/or the plurality of applications, refer to the descriptions of S59 shown in FIG. 8B. Details are not described herein again.

It can be learned that when the installation credential does not match the initiator, and/or the installation credential does not match the plurality of applications, the package management service in the device 1 may determine that the installation credential is invalid.

The installation request 61 is sent through the authorized interface in the device 1, and the installation request 61 includes the invalid installation credential. Therefore, the package management service in the device 1 may determine that an installation initiation behavior generated by the initiator through the authorized interface in the device 1 based on the installation credential is not a trusted installation behavior. In other words, the installation initiation behavior is secure but does not meet a user expectation. Therefore, the package management service in the device 1 may refuse to install the plurality of applications on the device 2 or refuse to update the plurality of applications in the device 2.

Therefore, the package management service in the device 1 may shield the installation request 61.

In conclusion, when the initiator uses the authorized interface, the device 1 may install a plurality of applications on the device 2, and can install applications in a distributed manner in batches.

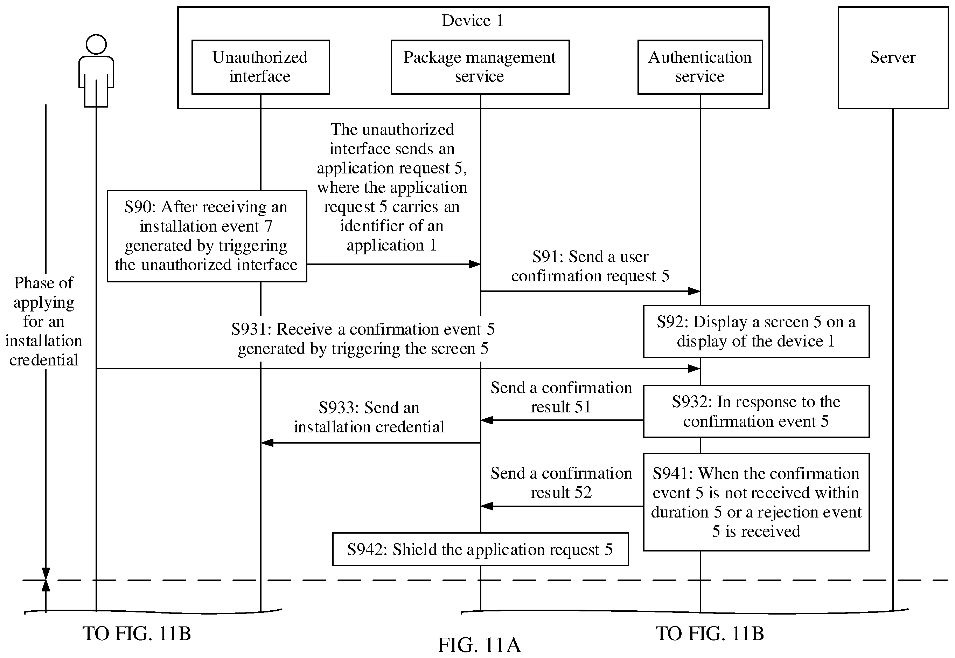

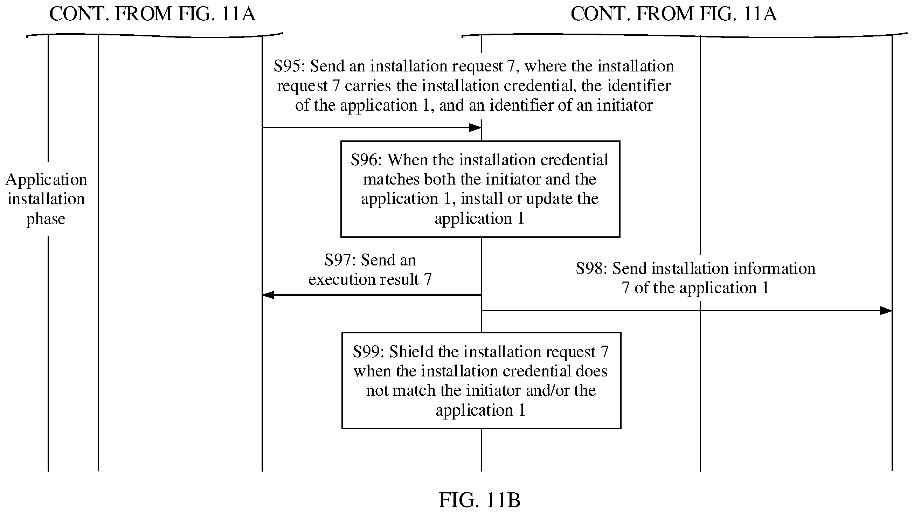

With reference to FIG. 11A and FIG. 11B, the following describes a specific implementation in which the initiator initiates local installation of an application to the device through an unauthorized interface.

FIG. 11A and FIG. 11B are an interaction diagram of an application installation method according to an embodiment of this application. For ease of description, in FIG. 11A and FIG. 11B, a device to which an initiator initiates installation of one or more applications is referred to as a device 1, and the one or more applications each may be referred to as an application 1. A specific implementation of the application 1 is not limited in this application.

For local installation of the one or more applications, a device (namely, the device 4 mentioned above) for installing the application 1 is the device 1. As shown in FIG. 11A and FIG. 11B, the application installation method in this application may include the following steps.

In a phase of applying for an installation credential, the application installation method in this application may include the following steps.

S90: After receiving an installation event 7 generated by triggering an unauthorized interface, the unauthorized interface in the device 1 sends an application request 5 to a package management service in the device 1 through the unauthorized interface, where the application request 5 is used to apply for an installation credential for installing the application 1 on the device 1, and the application request 5 carries an identifier of the application 1.

The installation event 7 is generated by triggering the unauthorized interface by the initiator. In some examples, after the initiator like an advertisement or a browser performs a trigger operation like invoking on the unauthorized interface set on the device 1, the device 1 may generate the installation event 7 based on the trigger operation. It can be learned that the initiator may request the device 1 to install the application 1 on the device 1 without user perception.

The installation event 7 indicates that the initiator requests, through the unauthorized interface, the device 1 to install the application 1 on the device 1. A specific implementation of the installation event 7 is not limited in this application.

After receiving the installation event 7, the unauthorized interface in the device 1 may send the application request 5 to the package management service in the device 1 through the unauthorized interface, so that the application request 5 can be used to apply for, from the package management service, the installation credential for installing the application 1 on the device 1.

A specific implementation of the application request 5 is not limited in this application. In the application request 5, if the application 1 includes one application, the identifier of the application 1 may be an identifier of the application. If the application 1 includes a plurality of applications, the identifier of the application 1 may include identifiers of the applications, and/or include an identifier of an application list that includes all the applications.

In the application request 5, the identifier of the device 1 may include one or more manners such as a name of the device 1, a version number of the device 1, a device number of the device 1, and an identifier of the device 1 in a same distributed network or distributed scenario.

In addition, in addition to the identifier of the application 1, the application request 5 may further include the identifier of the device 1.

The installation credential may be used as a unique credential for the unauthorized interface in the device 1 to initiate, to the package management service in the device 1, an installation request for installing the application 1 on the device 1. A specific implementation of the installation credential is not limited in this application. In some examples, the installation credential may include one or more parameters in the identifier of the application 1, a validity period of the installation credential, an identifier of the initiator, the identifier of the device 1, a hash value of the application 1, a version number of the application 1, an application developer signature of the application 1, and a screen state (for example, a screen-off state or a steady-on state) of the device 1, and the like.

S91: After receiving the application request 5, the package management service in the device 1 sends a user confirmation request 5 to an authentication service in the device 1.

The application request 5 is sent through the unauthorized interface in the device 1. Therefore, the package management service in the device 1 may determine that an installation initiation behavior generated by the initiator through the unauthorized interface in the device 1 may be a trusted installation behavior or may not be a trusted installation behavior.

In some examples, the package management service in the device 1 may determine that the installation initiation behavior does not meet a user expectation and is insecure. Therefore, the package management service in the device 1 may shield the application request 5. It should be noted that FIG. 11A and FIG. 11B do not show the foregoing manner.

In some examples, the package management service in the device 1 may determine that the installation initiation behavior is secure, but does not necessarily meet a user expectation. Therefore, the package management service in the device 1 may determine that user confirmation verification needs to be performed. In this way, the package management service in the device 1 may send the user confirmation request 5 to the authentication service in the device 1, and can invoke the authentication service in the device 1 to perform user confirmation verification.

The user confirmation request 5 is used to request the authentication service in the device 1 to confirm, by the user, whether to install the application 1 on the device 1. A specific implementation of the user confirmation request 5 is not limited in this application.

S92: The authentication service in the device 1 displays a screen 5 on a display of the device 1 based on the user confirmation request 5.

After receiving the user confirmation request 5, the authentication service in the device 1 may display the screen 5 on the display of the device 1. The screen 5 is used to confirm to the user whether to install the application 1 on the device 1. In some examples, for the screen 5, refer to the window 300 shown in FIG. 3A, or for the screen 5, refer to the user interface 12 shown in FIG. 3B.

S931: The authentication service in the device 1 receives a confirmation event 5 generated by triggering the screen 5.

The confirmation event 5 is generated by triggering the screen 5 by the user. In some examples, the screen 5 is the window 300 shown in FIG. 3A. After the user performs a trigger operation like tapping on the control 302, the device 1 may generate the confirmation event 5 based on the trigger operation. The confirmation event 5 indicates that the user confirms to install the application 1 on the device 1. A specific implementation of the confirmation event 5 is not limited in this application.

S932: The authentication service in the device 1 sends a confirmation result 51 to the packet management service in the device 1 in response to the confirmation event 5.

After receiving the confirmation event 5, the authentication service in the device 1 may obtain the confirmation result 51. The confirmation result 51 indicates that the user requires to install the application 1 on the device 1. A specific implementation of the confirmation result 51 is not limited in this application.

Therefore, after confirmation by the user, the authentication service in the device 1 may send the confirmation result 51 to the package management service in the device 1, so that the package management service in the device 1 determines that the user requires to install the application 1 on the device 1.

S933: The package management service in the device 1 sends the installation credential to the unauthorized interface in the device 1 based on the confirmation result 51.

After receiving the confirmation result 51, the package management service in the device 1 may determine that the user requires to install the application 1 on the device 1. Therefore, after confirmation by the user, the package management service in the device 1 may send the installation credential to the unauthorized interface in the device 1.

S941: When the authentication service in the device 1 does not receive the confirmation event 5 within duration 5 or receives a rejection event 5, the authentication service in the device 1 sends a confirmation result 52 to the packet management service in the device 1.

In some examples, considering various factors such as a network, the user may not give a feedback or a user feedback may time out. Based on this, when the authentication service in the device 1 does not receive, after the duration 5, the confirmation event 5 generated by triggering the screen 5, it may be determined that the user does not want to install the application 1 on the device 1. Therefore, after confirmation by the user, the authentication service in the device 1 may send the confirmation result 52 to the package management service in the device 1.

A specific value of the duration 5 is not limited in this application.

In some examples, when receiving the rejection event 5 generated by triggering the screen 5, the authentication service in the device 1 may determine that the user does not want to install the application 1 on the device 1. Therefore, after confirmation by the user, the authentication service in the device 1 may send the confirmation result 52 to the package management service in the device 1.

The rejection event 5 is generated by triggering the screen 5 by the user. In some examples, the screen 5 is the window 300 shown in FIG. 3A. After the user performs a trigger operation like tapping on the control 303, the authentication service in the device 1 may generate the rejection event 5 based on the trigger operation. The rejection event 5 indicates that the user does not want to install the application 1 on the device 1. A specific implementation of the rejection event 5 is not limited in this application.

The confirmation result 52 indicates that the user does not want to install the application 1 on the device 1. A specific implementation of the confirmation result 52 is not limited in this application.

Therefore, after confirmation by the user, the authentication service in the device 1 may send the confirmation result 52 to the package management service in the device 1, so that the package management service in the device 1 can determine that the user does not want to install the application 1 on the device 1.

S942: The package management service in the device 1 shields the application request 5 based on the confirmation result 52.

After receiving the confirmation result 52, the package management service in the device 1 may determine that the user does not want to install the application 1 on the device 1. Therefore, after confirmation by the user, the package management service in the device 1 may shield the application request 5.

In conclusion, the unauthorized interface in the device 1 may receive the installation credential from the package management service in the device 1 in any one of cases in which the device 1 needs to update each of the applications 1 and determines that the user requires to install the application 1 on the device 1.

In the application installation phase, the application installation method in this application may include the following steps.

S95: The unauthorized interface in the device 1 sends an installation request 7 to the package management service in the device 1, where the installation request 7 is used to request to install the application 1 on the device 1, and the installation request 7 carries the installation credential, the identifier of the application 1, and the identifier of the initiator.

After receiving the installation credential in the phase of applying for the installation credential, the unauthorized interface in the device 1 may send the installation request 7 to the package management service in the device 1 at any time point within the validity period of the installation credential, so that the installation request 7 can be used to request the package management service in the device 1 to install the application 1 on the device 1. In this way, application installation time is controllable, misuse of the installation credential by the initiator is avoided, thereby ensuring validity and security of application installation.

A specific implementation of the installation request 7 is not limited in this application. In the installation request 7, if the application 1 includes one application, the identifier of the application 1 may be an identifier of the application. If the application 1 includes a plurality of applications, the identifier of the application 1 may include identifiers of the applications, and/or include an identifier of an application list that includes all the applications. In addition, in addition to the installation credential, the identifiers of the plurality of applications, and the identifier of the initiator, the installation request 7 may further include the identifier of the device 1. The installation credential does not include the screen state of the device 1.

Certainly, when the validity period of the installation credential does not exist, the unauthorized interface in the device 1 may send the installation request 7 to the package management service in the device 1 at any time point.

S96: When the installation credential matches both the initiator and the application 1, the package management service in the device 1 installs or updates the application 1.

After receiving the installation request 7, the package management service in the device 1 needs to verify validity of the installation credential, to ensure that the application 1 is installed on the device 1, instead of installation of the application 1 on another device or installation of another application on the device 1. This avoids a phenomenon that the initiator uses the installation credential without authorization, thereby ensuring validity and security of application installation.

In some examples, the package management service in the device 1 may determine whether the installation credential matches the initiator and the application 1, to verify the validity of the installation credential.

When the identifier of the initiator included in the installation credential indicates the initiator that requests to install the application 1 on the device 1, and an identifier of an application included in the installation credential indicates the application 1, the package management service in the device 1 may determine that the installation credential matches both the initiator and the application 1. Therefore, the package management service in the device 1 may determine that the installation credential is valid.

The installation request 7 is sent through the unauthorized interface in the device 1, and the installation request 7 includes the valid installation credential. Therefore, the package management service in the device 1 may determine that an installation initiation behavior generated by the initiator through the unauthorized interface in the device 1 based on the installation credential is a trusted installation behavior. In other words, the installation initiation behavior meets a user expectation and is secure. Therefore, the package management service in the device 1 may determine that the user requires to install the application 1 on the device 1.

Therefore, the package management service in the device 1 may install each of the applications 1 on the device 1 or update each of the applications 1 in the device 1.

S97: The package management service in the device 1 sends an execution result 7 to the unauthorized interface in the device 1 through the unauthorized interface.

S97 is an optional step.

After the package management service in the device 1 completes S96, the execution result 7 may be obtained. The execution result 7 may indicate that the device 1 has installed or updated the application 1. A specific implementation of the execution result 7 is not limited in this application.

Therefore, the package management service in the device 1 may send the execution result 7 to the unauthorized interface in the device 1 through the unauthorized interface, so that the unauthorized interface can learn, based on the execution result 7, that the device 1 has installed or updated the application 1.

In addition, the device 1 may further notify the user that the device 1 has installed or updated the application 1. In some examples, the device 1 may display a prompt 73 to the user, where the prompt 73 is used to remind the user that the device 1 has installed or updated the application 1. The prompt 73 may be represented in a form of text, vibration, ringing, indicator blinking, or the like.

S98: The package management service in the device 1 sends installation information 7 of the application 1 to a server.

The installation information 7 of the application 1 may include one or more parameters in the initiator, a package name of each application, installation time of each application, an application developer public key of each application, a version number of each application, an exemption period of each application, the identifier of the device 1, and the like.

After completing S96, the package management service in the device 1 may send the installation information 7 of the application 1 to the server, so that the server can store the installation information 7 of the application 1 under a same account. Therefore, another device located in the same distributed network or distributed scenario as the device 1 can learn of the installation information 7 of the application 1. This helps the another device determines, when installing any one of applications 1, whether to perform user confirmation verification.

It should be understood that there is no time sequence for S97 and S98, and S97 and S98 may be performed simultaneously or sequentially.

S99: The package management service in the device 1 shields the installation request 7 when the installation credential does not match the initiator and/or the application 1.

When the identifier of the initiator included in the installation credential does not indicate the initiator that requests to install the application 1 on the device 1, the package management service in the device 1 determines that the installation credential does not match the initiator.

When an identifier of an application included in the installation credential does not indicate the application 1, the package management service in the device 1 may determine that the installation credential does not match the application 1.

It can be learned that when the installation credential does not match the initiator, and/or the installation credential does not match the application 1, the package management service in the device 1 may determine that the installation credential is invalid.

The installation request 7 is sent through the unauthorized interface in the device 1, and the installation request 7 includes the invalid installation credential. Therefore, the package management service in the device 1 may determine that an installation initiation behavior generated by the initiator through the unauthorized interface in the device 1 based on the installation credential is not a trusted installation behavior. In other words, the installation initiation behavior is secure but does not meet a user expectation. Therefore, the package management service in the device 1 may refuse to install the application 1 on the device 1 or refuse to update the application 1 in the device 1.

Therefore, the package management service in the device 1 may shield the installation request 7.

In conclusion, when the initiator uses the unauthorized interface, the device may refuse to install one or more applications on the device 1. Alternatively, the device 1 may install one or more applications on the device 1, and can locally install a single application or can install applications in a distributed manner in batches.

Based on some of the foregoing embodiments, the following describes an application installation method provided in this application.

For example, this application provides an application installation method.

The application installation method provided in this application may be performed by a first device. An authorized first interface and a first functional module used to manage an application installation process may be disposed in the first device. In some examples, the first device may be the device 1 mentioned above. The first interface may be the authorized interface in the first device mentioned above. The first functional module is the package management service in the first device mentioned above.

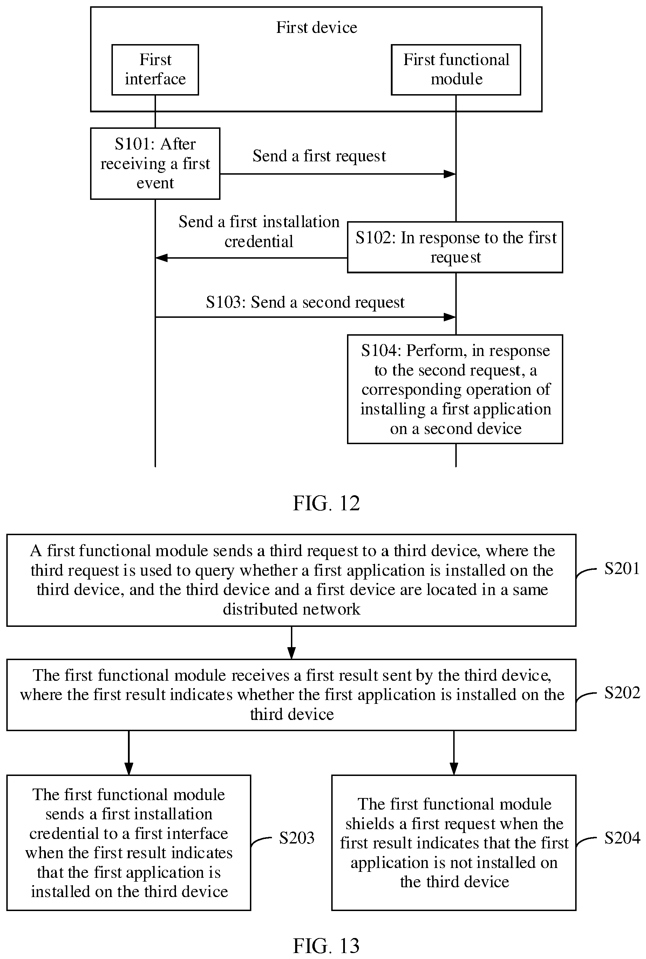

FIG. 12 is an interaction diagram of an application installation method according to an embodiment of this application.

As shown in FIG. 12, the application installation method in this application may include the following steps.

S101: The first interface sends a first request to the first functional module after receiving a first event, where the first event indicates that an initiator requests to install a first application on a second device, the first request is used to apply for a first installation credential, the first installation credential is used to allow the initiator to request, through the first interface, the first functional module to install the first application on the second device, and the initiator is a channel for requesting to install an application on a device.

S102: The first functional module sends the first installation credential to the first interface in response to the first request.

S103: The first interface sends a second request to the first functional module, where the second request is used to request to install the first application on the second device, and the second request carries the first installation credential.

S104: The first functional module performs, in response to the second request, a corresponding operation of installing the first application on the second device.

For the second device, refer to the device 4 mentioned above. The first application may include one or more applications.

When the second device is the first device, and the first application includes one application, the first event may be the installation event 3 mentioned in the embodiment shown in FIG. 7A to FIG. 7C, the first request may be the application request 1 mentioned in the embodiment shown in FIG. 7A to FIG. 7C, the first application may be the application 2 mentioned in the embodiment shown in FIG. 7A to FIG. 7C, the first installation credential may be the installation credential mentioned in the embodiment shown in FIG. 7A to FIG. 7C, and the second request may be the installation request 3 mentioned in the embodiment shown in FIG. 7A to FIG. 7C. For a specific implementation of S101, refer to the descriptions of the embodiment of S30 shown in FIG. 7A. For a specific implementation of S102, refer to the descriptions of the embodiment of S311, S312 to S341, S342 to S371, or S372 to S393 shown in FIG. 7A to FIG. 7C. For a specific implementation of S103, refer to the descriptions of the embodiment of S41 shown in FIG. 7C. For a specific implementation of S104, refer to the descriptions of the embodiment of S42 shown in FIG. 7C.

When the second device is the first device, and the first application includes a plurality of applications, the first event may be the installation event 4 mentioned in the embodiment shown in FIG. 8A and FIG. 8B, the first request may be the application request 2 mentioned in the embodiment shown in FIG. 8A and FIG. 8B, the first application may be the plurality of applications mentioned in the embodiment shown in FIG. 8A and FIG. 8B, the first installation credential may be the installation credential mentioned in the embodiment shown in FIG. 8A and FIG. 8B, and the second request may be the installation request 4 mentioned in the embodiment shown in FIG. 8A and FIG. 8B. For a specific implementation of S101, refer to the descriptions of the embodiment of S50 shown in FIG. 8A. For a specific implementation of S102, refer to the descriptions of the embodiment of S511 and S512 to S533 shown in FIG. 8A. For a specific implementation of S103, refer to the descriptions of the embodiment of S55 shown in FIG. 8B. For a specific implementation of S104, refer to the descriptions of the embodiment of S56 shown in FIG. 8B.

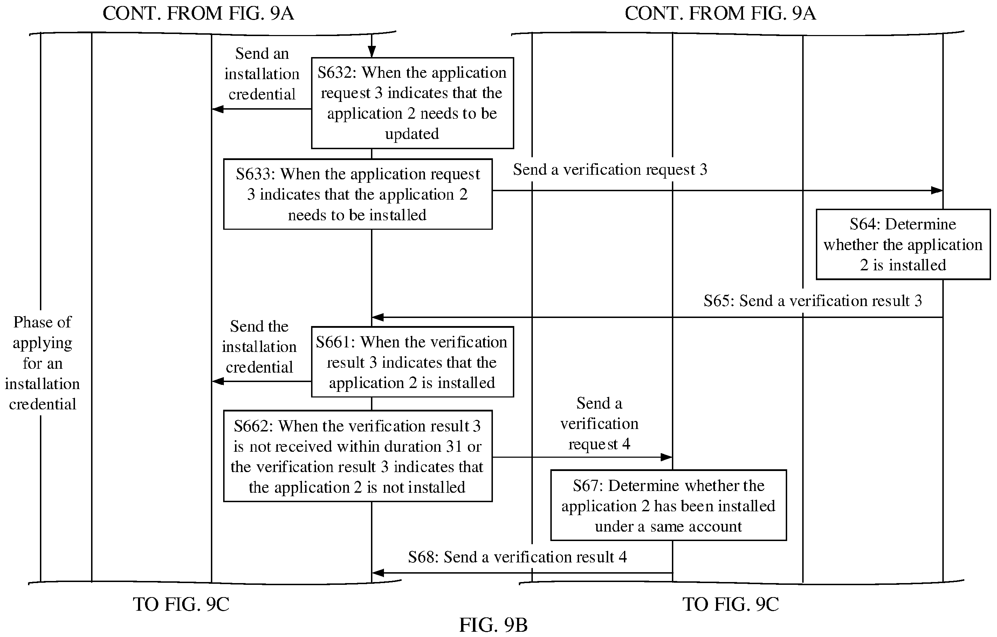

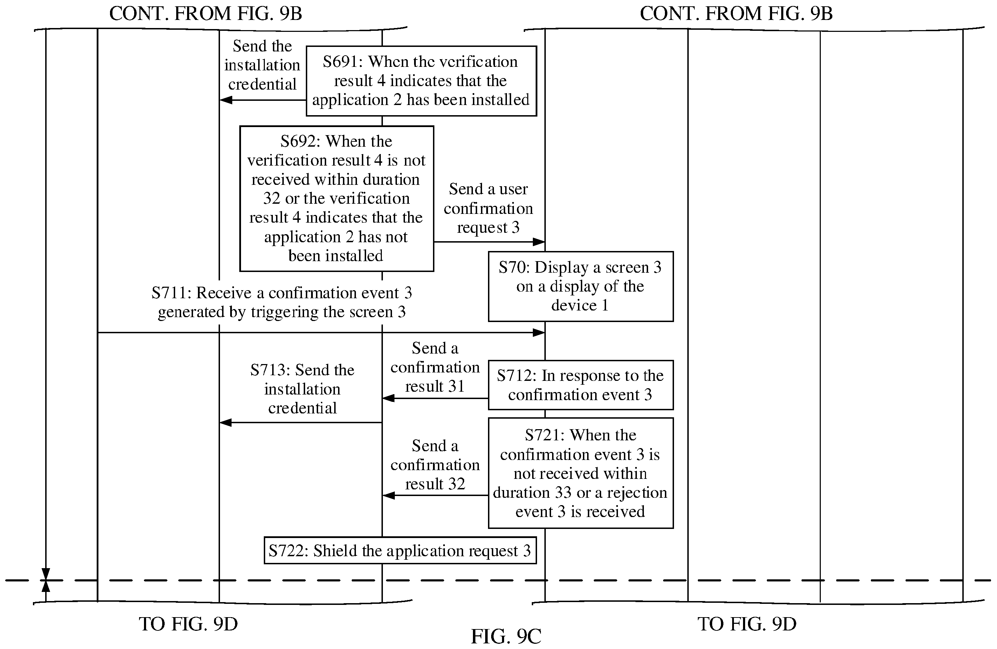

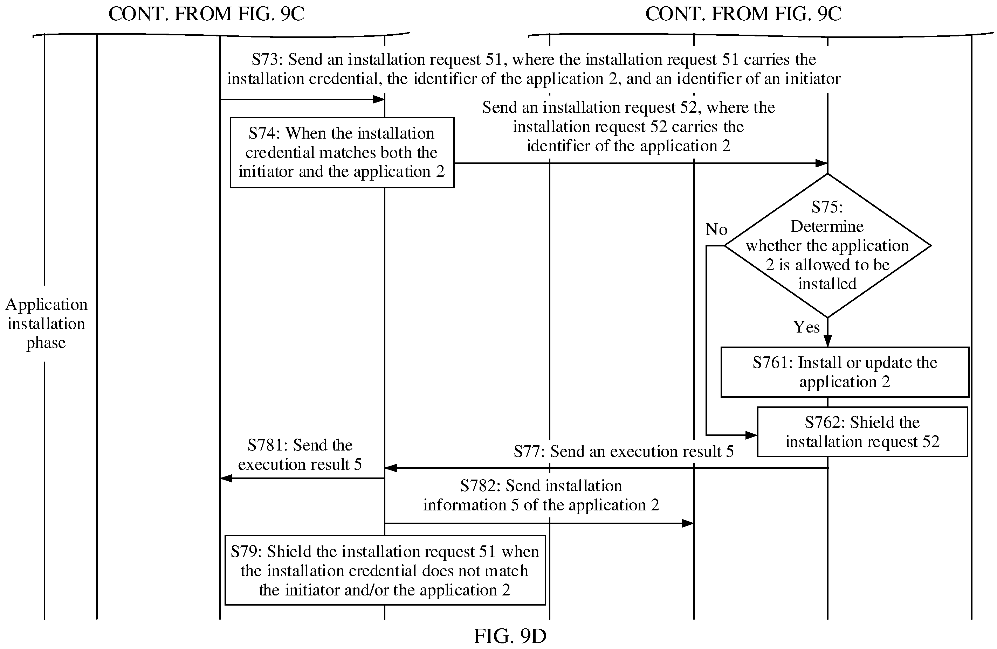

When the second device is not the first device, and the first application includes one application, the first event may be the installation event 5 mentioned in the embodiment shown in FIG. 9A to FIG. 9D, the first request may be the application request 3 mentioned in the embodiment shown in FIG. 9A to FIG. 9D, the first application may be the application 2 mentioned in the embodiment shown in FIG. 9A to FIG. 9D, the first installation credential may be the installation credential mentioned in the embodiment shown in FIG. 9A to FIG. 9D, and the second request may be the installation request 51 mentioned in the embodiment shown in FIG. 9A to FIG. 9D. For a specific implementation of S101, refer to the descriptions of the embodiment of S60 and S61 shown in FIG. 9A. For a specific implementation of S102, refer to the descriptions of the embodiment of S632, S633 to S661, S662 to S691, or S692 to S713 shown in FIG. 9B and FIG. 9C. For a specific implementation of S103, refer to the descriptions of the embodiment of S73 shown in FIG. 9D. For a specific implementation of S104, refer to the descriptions of the embodiment of S74 shown in FIG. 9D.

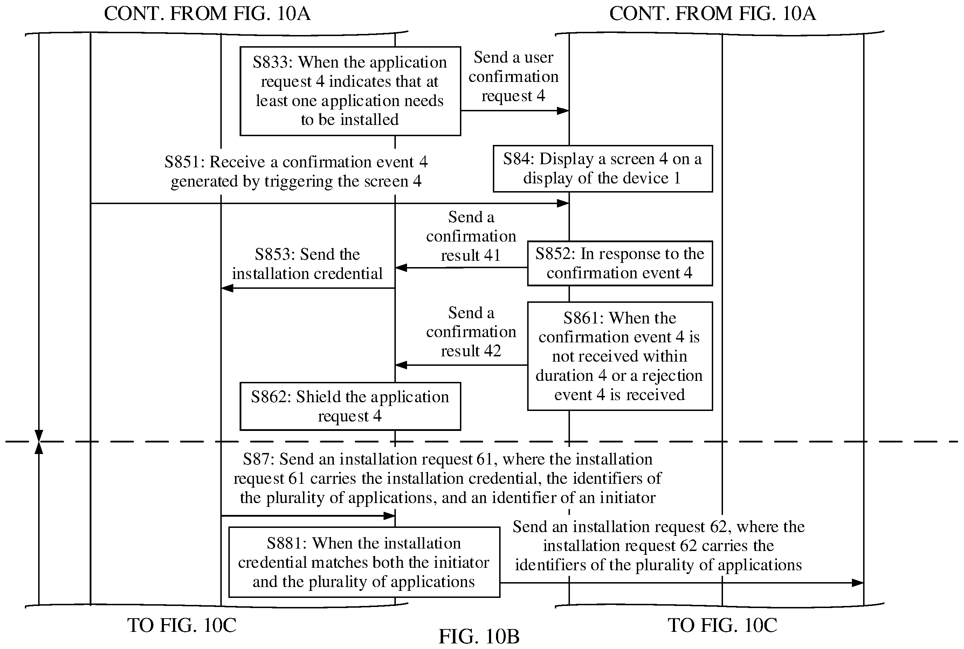

When the second device is not the first device, and the first application includes a plurality of applications, the first event may be the installation event 6 mentioned in the embodiment shown in FIG. 10A to FIG. 10C, the first request may be the application request 4 mentioned in the embodiment shown in FIG. 10A to FIG. 10C, the first application may be the plurality of applications mentioned in the embodiment shown in FIG. 10A to FIG. 10C, the first installation credential may be the installation credential mentioned in the embodiment shown in FIG. 10A to FIG. 10C, and the second request may be the installation request 61 mentioned in the embodiment shown in FIG. 10A to FIG. 10C. For a specific implementation of S101, refer to the descriptions of the embodiment of S80 and S81 shown in FIG. 10A. For a specific implementation of S102, refer to the descriptions of the embodiment of S832 or S833 to S853 shown in FIG. 10A and FIG. 10B. For a specific implementation of S103, refer to the descriptions of the embodiment of S87 shown in FIG. 10B. For a specific implementation of S104, refer to the descriptions of the embodiment of S881 shown in FIG. 10B.

According to the application installation method provided in this application, the first functional module may manage the initiator that requests, through the first interface, to install the first application on the second device, and the first application that meets a user expectation can be installed on the second device by applying for the installation credential, so that an application installation process is known and controllable, and local installation or distributed installation of the application is implemented. This ensures security of installing the application and improves user experience of installing the application.

Based on the description of the foregoing embodiment, the first functional module may determine, in one or more manners such as a distributed device, a server, or user confirmation, whether to send the first installation credential to the first interface. Therefore, flexibility of authorizing, by the first functional module, an installation credential to the initiator is improved.

With reference to FIG. 13 to FIG. 15, the following describes in detail three manners, namely, a distributed device, a server, or user confirmation, used by the first functional module.

FIG. 13 is a schematic flowchart of an application installation method according to an embodiment of this application.

As shown in FIG. 13, the application installation method in this application may include the following steps.

S201: A first functional module sends a third request to a third device, where the third request is used to query whether a first application is installed on the third device, and the third device and a first device are located in a same distributed network.

S202: The first functional module receives a first result sent by the third device, where the first result indicates whether the first application is installed on the third device.

S203: The first functional module sends a first installation credential to a first interface when the first result indicates that the first application is installed on the third device.

S204: The first functional module shields the first request when the first result indicates that the first application is not installed on the third device.

The third device is a distributed device of the first device. The third device may be one or more devices.

When the second device is the first device and the first application includes one application, the third request may be the verification request 1 mentioned in the embodiment shown in FIG. 7A to FIG. 7C, the third device may be the device i mentioned in the embodiment shown in FIG. 7A to FIG. 7C, and the first result may be the verification result 1 mentioned in the embodiment shown in FIG. 7A to FIG. 7C. For a specific implementation of S201, refer to the descriptions of the embodiment of S312 shown in FIG. 7A. For a specific implementation of S202, refer to the descriptions of the embodiment of S33 shown in FIG. 7A. For a specific implementation of S203, refer to the descriptions of the embodiment of S341 shown in FIG. 7A. For a specific implementation of S204, refer to the descriptions of the embodiment of S342 shown in FIG. 7B.

When the second device is not the first device, and the first application includes one application, the third request may be the verification request 3 mentioned in the embodiment shown in FIG. 9A to FIG. 9D, the third device may be the device j mentioned in the embodiment shown in FIG. 9A to FIG. 9D, and the first result may be the verification result 3 mentioned in the embodiment shown in FIG. 9A to FIG. 9D. For a specific implementation of S201, refer to the descriptions of the embodiment of S633 shown in FIG. 9B. For a specific implementation of S202, refer to the descriptions of the embodiment of S65 shown in FIG. 9B. For a specific implementation of S203, refer to the descriptions of the embodiment of S661 shown in FIG. 9B. For a specific implementation of S204, refer to the descriptions of the embodiment of S622 shown in FIG. 9B.

In conclusion, the first functional module may query one or more devices located in the same distributed network as the first device whether the first application is installed on a device, to determine whether to send the first installation credential, so that confirmation in another manner like the server or user confirmation can be exempted. This reduces interaction complexity.

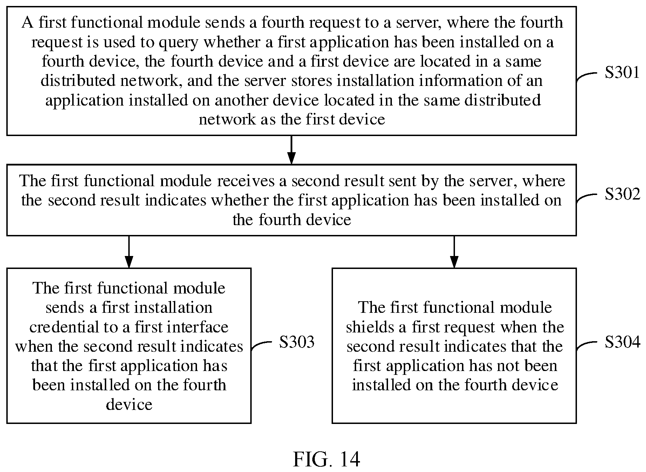

FIG. 14 is a schematic flowchart of an application installation method according to an embodiment of this application.

As shown in FIG. 14, the application installation method in this application may include the following steps.

S301: A first functional module sends a fourth request to a server, where the fourth request is used to query whether a first application has been installed on a fourth device, the fourth device and a first device are located in a same distributed network, and the server stores installation information of an application installed on another device located in the same distributed network as the first device.

S302: The first functional module receives a second result sent by the server, where the second result indicates whether the first application has been installed on the fourth device.

S303: The first functional module sends a first installation credential to a first interface when the second result indicates that the first application has been installed on the fourth device.

S304: The first functional module shields a first request when the second result indicates that the first application has not been installed on the fourth device.

For the server, refer to the foregoing server. The fourth device and the first device are located in a same distributed network. The fourth device is a distributed device of the first device. The fourth device may be one or more devices. The server stores installation information of an application installed on one or more devices located in the same distributed network as the first device.

When the second device is the first device, and the first application includes one application, the fourth request may be the verification request 2 mentioned in the embodiment shown in FIG. 7A to FIG. 7C, the fourth device may be the device that is in the server and that stores the installation information of the first application mentioned in the embodiment shown in FIG. 7A to FIG. 7C, and the second result may be the verification result 2 mentioned in the embodiment shown in FIG. 7A to FIG. 7C. For a specific implementation of S301, refer to the descriptions of the embodiment of S342 shown in FIG. 7B. For a specific implementation of S302, refer to the descriptions of the embodiment of S36 shown in FIG. 7B. For a specific implementation of S303, refer to the descriptions of the embodiment of S371 shown in FIG. 7B. For a specific implementation of S304, refer to the descriptions of the embodiment of S372 shown in FIG. 7B.

When the second device is not the first device, and the first application includes one application, the fourth request may be the verification request 4 mentioned in the embodiment shown in FIG. 9A to FIG. 9D, the fourth device may be the device that is in the server and that stores the installation information of the first application mentioned in the embodiment shown in FIG. 9A to FIG. 9D, and the second result may be the verification result 4 mentioned in the embodiment shown in FIG. 9A to FIG. 9D. For a specific implementation of S301, refer to the descriptions of the embodiment of S662 shown in FIG. 9B. For a specific implementation of S302, refer to the descriptions of the embodiment of S68 shown in FIG. 9B. For a specific implementation of S303, refer to the descriptions of the embodiment of S691 shown in FIG. 9C. For a specific implementation of S304, refer to the descriptions of the embodiment of S692 shown in FIG. 9C.

In conclusion, the first functional module may query, by using the server, one or more devices (for example, the fourth device) located in the same distributed network as the first device whether the first application has been installed on a device, to determine whether to send the first installation credential, so that confirmation in another manner like the distributed device or user confirmation can be exempted. This reduces interaction complexity.

Based on the foregoing description, the second functional module of a screen for performing user confirmation verification may be further disposed in the first device. In some examples, the second functional module is an authentication service in the first device.

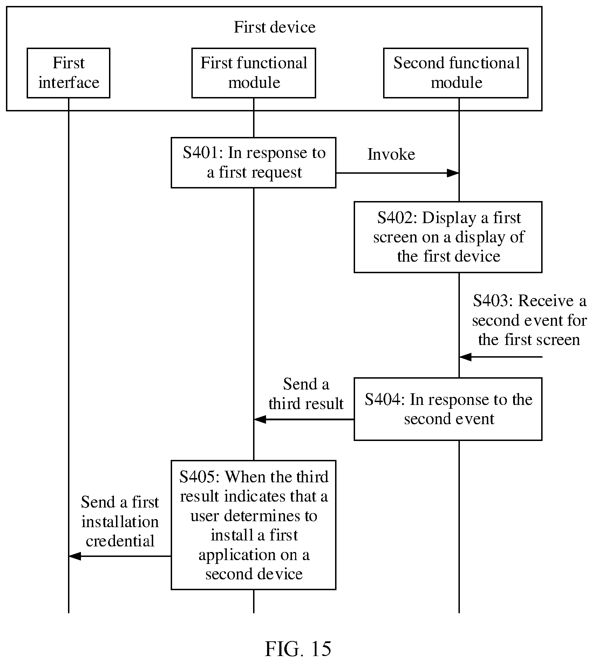

FIG. 15 is an interaction diagram of an application installation method according to an embodiment of this application.

As shown in FIG. 15, the application installation method in this application may include the following steps.

S401: A first functional module invokes a second functional module in response to a first request.

S402: The second functional module displays a first screen on a display of a first device, where the first screen is used to determine whether a user installs a first application on a second device.

S403: The second functional module receives a second event for the first screen, where the second event is used to describe whether the user determines to install the first application on the second device.

S404: The second functional module sends a third result to the first functional module in response to the second event, where the third result indicates whether the user determines to install the first application on the second device.

S405: The first functional module sends a first installation credential to the first interface when the third result indicates that the user determines to install the first application on the second device.

When the second device is the first device, and the first application includes one application, the first screen may be the screen 2 mentioned in the embodiment shown in FIG. 7A to FIG. 7C, the second event may be the confirmation event 2 mentioned in the embodiment shown in FIG. 7A to FIG. 7C, and the third result may be the confirmation result 21 mentioned in the embodiment shown in FIG. 7A to FIG. 7C. For a specific implementation of S401, refer to the descriptions of the embodiment of S372 shown in FIG. 7B. For a specific implementation of S402, refer to the descriptions of the embodiment of S38 shown in FIG. 7B. For a specific implementation of S403, refer to the descriptions of the embodiment of S391 shown in FIG. 7B. For a specific implementation of S404, refer to the descriptions of the embodiment of S392 shown in FIG. 7B. For a specific implementation of S405, refer to the descriptions of the embodiment of S393 shown in FIG. 7B.

When the second device is the first device, and the first application includes a plurality of applications, the first screen may be the screen 3 mentioned in the embodiment shown in FIG. 8A and FIG. 8B, the second event may be the confirmation event 3 mentioned in the embodiment shown in FIG. 8A and FIG. 8B, and the third result may be the confirmation result 31 mentioned in the embodiment shown in FIG. 8A and FIG. 8B. For a specific implementation of S401, refer to the descriptions of the embodiment of S512 shown in FIG. 8A. For a specific implementation of S402, refer to the description of the embodiment of S52 shown in FIG. 8A. For a specific implementation of S403, refer to the descriptions of the embodiment of S531 shown in FIG. 8A. For a specific implementation of S404, refer to the descriptions of the embodiment of S532 shown in FIG. 8A. For a specific implementation of S405, refer to the descriptions of the embodiment of S533 shown in FIG. 8A.

When the second device is not the first device, and the first application includes one application, the first screen may be the screen 4 mentioned in the embodiment shown in FIG. 9A to FIG. 9D, the second event may be the confirmation event 4 mentioned in the embodiment shown in FIG. 9A to FIG. 9D, and the third result may be the confirmation result 41 mentioned in the embodiment shown in FIG. 9A to FIG. 9D. For a specific implementation of S401, refer to the descriptions of the embodiment of S692 shown in FIG. 9C. For a specific implementation of S402, refer to the descriptions of the embodiment of S70 shown in FIG. 9C. For a specific implementation of S403, refer to the descriptions of the embodiment of S711 shown in FIG. 9C. For a specific implementation of S404, refer to the descriptions of the embodiment of S712 shown in FIG. 9C. For a specific implementation of S405, refer to the descriptions of the embodiment of S713 shown in FIG. 9C.

When the second device is not the first device, and the first application includes a plurality of applications, the first screen may be the installation event 6 mentioned in the embodiment shown in FIG. 10A to FIG. 10C, the second event may be the application request 4 mentioned in the embodiment shown in FIG. 10A to FIG. 10C, and the third result may be the installation request 61 mentioned in the embodiment shown in FIG. 10A to FIG. 10C. For a specific implementation of S401, refer to the descriptions of the embodiment of S833 shown in FIG. 10B. For a specific implementation of S402, refer to the descriptions of the embodiment of S84 shown in FIG. 10B. For a specific implementation of S403, refer to the descriptions of the embodiment of S851 shown in FIG. 10B. For a specific implementation of S404, refer to the descriptions of the embodiment of S852 shown in FIG. 10B. For a specific implementation of S405, refer to the descriptions of the embodiment of S853 shown in FIG. 10B.

In conclusion, the first functional module invokes the second functional module, and determines whether to send the first installation credential by querying the user, by using the first screen, whether to install the first application on the second device, so that the user knows and controls an application installation process, and the user actively confirms necessity, validity, and security of the installation.

It can be learned that, based on one or more of the foregoing manners, the first functional module may verify whether the first application meets a user expectation. Therefore, the first functional module may authorize an installation credential to the initiator.

In addition to the managing the initiator, the first functional module may further manage the second device.

In some examples, when the first device is not the second device, the first functional module may send the first installation credential to the first interface when a security level and/or a risk level of the second device meet/meets a first preset condition.

For the first preset condition, refer to the verification rule of the security level or risk level mentioned above. Details are not described herein again.

Therefore, before authorizing the installation credential to the initiator, the first functional module may check the security level and/or the risk level of the second device, to ensure security of installing an application on the second device.

Based on the description of the foregoing embodiment, the first functional module may further verify validity and/or a validity period of the first installation credential. This can avoid using the first installation credential by the initiator without authorization, thereby ensuring validity and security of installing the first application.

For example, the first installation credential may include an identifier of the first application, a validity period of the first installation credential, an identifier of the initiator, and an identifier of the second device.

In some examples, when an application indicated by the first installation credential is the first application, and a device indicated by the first installation credential is the second device, the first functional module may perform a corresponding operation of installing the first application on the second device.

Therefore, the first functional module may verify validity of the installation credential, to determine whether to perform a corresponding operation of installing the first application on the second device. This avoids a phenomenon that the initiator uses the installation credential without authorization to request to install an application that does not meet a user expectation.

In some examples, when a receiving time point of the second request is within the validity period of the first installation credential, the first functional module may perform a corresponding operation of installing the first application on the second device.

Therefore, the first functional module may verify the validity period of the installation credential, to determine whether to perform a corresponding operation of installing the first application on the second device. This avoids a phenomenon that the initiator uses the installation credential without authorization to request to install an application that does not meet a user expectation.

Based on the description of the foregoing embodiment, in addition to the first interface, a second interface corresponding to the trusted first control may be further disposed in the first device. In some examples, the first control corresponding to the second interface may be a trusted control in the first device.

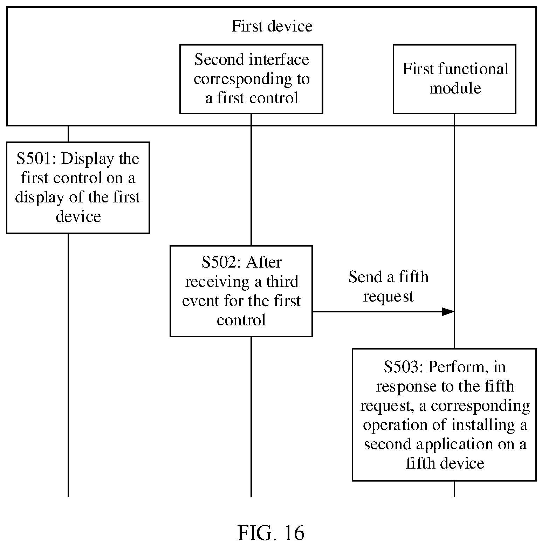

FIG. 16 is an interaction diagram of an application installation method according to an embodiment of this application.

As shown in FIG. 16, the application installation method in this application may include the following steps.

S501: A first device displays a first control on a display of the first device, where the first control is used to trigger installation of a second application on a fifth device.

S502: After receiving a third event for the first control, a second interface sends a fifth request to a first functional module, where the third event indicates that an initiator requests to install the second application on the fifth device, and the fifth request is used to request to install the second application on the fifth device.

S503: The first functional module performs, in response to the fifth request, a corresponding operation of installing the second application on the fifth device.

For the fifth device, refer to the device 4 mentioned above. The second application may include one or more applications.

When the fifth device is the first device, the first control may be the trusted control mentioned in the embodiment shown in FIG. 5, the second application may be the application 1 mentioned in the embodiment shown in FIG. 5, the third event may be the installation event 1 mentioned in the embodiment shown in FIG. 5, and the fifth request may be the installation request 1 mentioned in the embodiment shown in FIG. 5. For a specific implementation of S501, refer to the descriptions of the embodiment of S10 shown in FIG. 5. For a specific implementation of S502, refer to the descriptions of the embodiment of S11 shown in FIG. 5. For a specific implementation of S503, refer to the descriptions of the embodiment of S12 shown in FIG. 5.

When the fifth device is not the first device, the first control may be the trusted control mentioned in the embodiment shown in FIG. 6A and FIG. 6B, the second application may be the application 1 mentioned in the embodiment shown in FIG. 6A and FIG. 6B, the third event may be the installation event 2 mentioned in the embodiment shown in FIG. 6A and FIG. 6B, and the fifth request may be the installation request 21 mentioned in the embodiment shown in FIG. 6A and FIG. 6B. For a specific implementation of S501, refer to the descriptions of the embodiment of S20 shown in FIG. 6A. For a specific implementation of S502, refer to the descriptions of the embodiment of S21 shown in FIG. 6A. For a specific implementation of S503, refer to the descriptions of the embodiment of S23 shown in FIG. 6A.

In conclusion, the first functional module may manage the initiator that requests, through the second interface corresponding to the first control, to install the second application on the fifth device, without applying for an installation credential, and the second application that meets a user expectation can be quickly installed on the fifth device, so that an application installation process is known and controllable, and local installation or distributed installation of the application is implemented. This ensures security of installing the application and improves user experience of installing the application.

In some examples, when the fifth device is not the first device, the first functional module may perform a corresponding operation of installing the second application on the fifth device when a security level and/or a risk level of the fifth device meet/meets a second preset condition.

For the first preset condition, refer to the verification rule of the security level or risk level mentioned above. Details are not described herein again.

Therefore, before executing the corresponding operation of installing the second application on the fifth device, the first functional module may check the security level and/or the risk level of the fifth device, to ensure security of installing an application on the fifth device.

Based on the description of the foregoing embodiment, in addition to the first interface, or the first interface and the second interface, a third interface and the second functional module of a screen for performing user confirmation verification may be further disposed in the first device. In some examples, the third interface may be an unauthorized interface in the first device. The second functional module may be an authentication service in the first device.

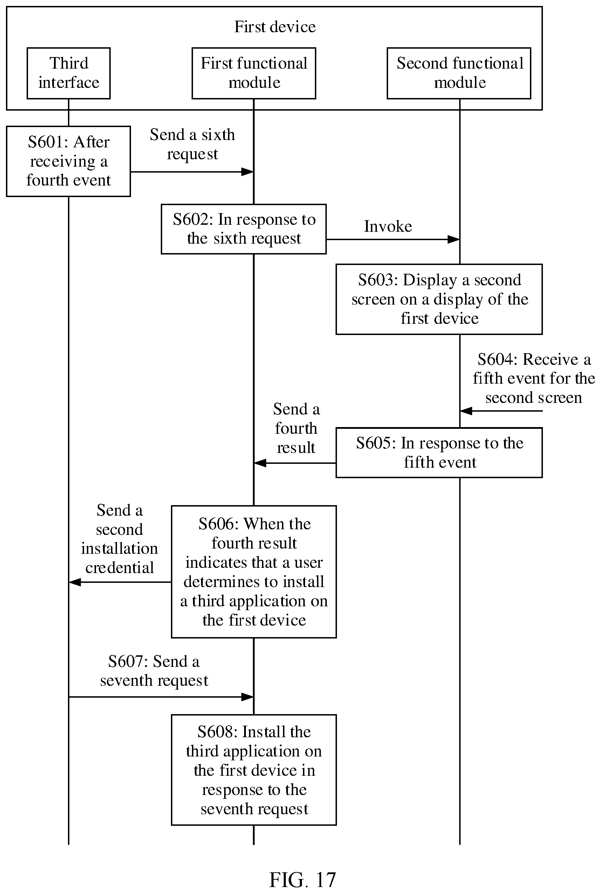

FIG. 17 is an interaction diagram of an application installation method according to an embodiment of this application.

As shown in FIG. 17, the application installation method in this application may include the following steps.

S601: A third interface sends a sixth request to a first functional module after receiving a fourth event, where the fourth event indicates that an initiator requests to install a third application on a first device, the sixth request is used to apply for a second installation credential, and the second installation credential is used to allow the initiator to request, through the third interface, the first functional module to install the third application on the first device.

S602: The first functional module invokes a second functional module in response to the sixth request.

S603: The second functional module displays a second screen on a display of the first device, where the second screen is used to determine whether a user installs the third application on the first device.

S604: The second functional module receives a fifth event for the second screen, where the fifth event is used to describe whether the user determines to install the third application on the first device.

S605: The second functional module sends a fourth result to the first functional module in response to the fifth event, where the fourth result indicates whether the user determines to install the third application on the first device.

S606: The first functional module sends a second installation credential to the third interface when the fourth result indicates that the user determines to install the third application on the first device.

S607: The third interface sends a seventh request to the first functional module, where the seventh request is used to request to install the third application on the first device, and the seventh request carries the second installation credential.

S608: The first functional module installs the third application on the first device in response to the seventh request.

The third application may include one or more applications.

The fourth event may be the installation event 7 mentioned in the embodiment shown in FIG. 11A and FIG. 11B, the sixth request may be the application request 5 mentioned in the embodiment shown in FIG. 11A and FIG. 11B, the third application may be the application 1 mentioned in the embodiment shown in FIG. 11A and FIG. 11B, the second installation credential may be the installation credential mentioned in the embodiment shown in FIG. 11A and FIG. 11B, the second screen may be the screen 5 mentioned in the embodiment shown in FIG. 11A and FIG. 11B, the fifth event may be the confirmation event 5 mentioned in the embodiment shown in FIG. 11A and FIG. 11B, and the fourth result may be the confirmation result 5 mentioned in the embodiment shown in FIG. 11A and FIG. 11B, and the seventh request may be the installation request 7 mentioned in the embodiment shown in FIG. 11A and FIG. 11B. For a specific implementation of S601, refer to the descriptions of the embodiment of S90 shown in FIG. 11A. For a specific implementation of S602, refer to the descriptions of the embodiment of S91 shown in FIG. 11A. For a specific implementation of S603, refer to the descriptions of the embodiment of S92 shown in FIG. 11A. For a specific implementation of S604, refer to the descriptions of the embodiment of S931 shown in FIG. 11A. For a specific implementation of S605, refer to the descriptions of the embodiment of S932 shown in FIG. 11A. For a specific implementation of S606, refer to the descriptions of the embodiment of S933 shown in FIG. 11A. For a specific implementation of S607, refer to the descriptions of the embodiment of S95 shown in FIG. 11B. For a specific implementation of S608, refer to the descriptions of the embodiment of S96 shown in FIG. 11B.

In conclusion, the first functional module may manage the initiator that requests, through the third interface, to install the third application on the first device, whether to authorize the installation credential is determined through user confirmation, and the third application that meets a user expectation can be installed on the first device, so that an application installation process is known and controllable, and local installation of the application is implemented. This ensures security of installing the application and improves user experience of installing the application.

In addition, in addition to the foregoing implementation, when receiving the sixth request, the first functional module may determine that the initiator is not allowed to request to install the third application on the first device, that is, the initiator is not authorized with the second installation credential. Therefore, the first functional module may directly refuse to install the third application on the first device.

Based on the description of the foregoing embodiment, the first functional module may verify validity and/or a validity period of the second installation credential. This can avoid using the second installation credential by the initiator without authorization, thereby ensuring validity and security of installing the third application.

For example, the second installation credential may include an identifier of the third application, the validity period of the second installation credential, an identifier of the initiator, and an identifier of the first device.

In some examples, when an application indicated by the second installation credential is the third application, and a device indicated by the second installation credential is the first device, the first functional module may install the third application on the first device.

Therefore, the first functional module may verify validity of the installation credential, to determine whether to perform a corresponding operation of installing the third application on the first device. This avoids a phenomenon that the initiator uses the installation credential without authorization to request to install an application that does not meet a user expectation.

In some examples, when a receiving time point of the seventh request is within the validity period of the second installation credential, the first functional module may install the third application on the first device.

Therefore, the first functional module may verify the validity period of the installation credential, to determine whether to perform a corresponding operation of installing the third application on the first device. This avoids a phenomenon that the initiator uses the installation credential without authorization to request to install an application that does not meet a user expectation.

For example, this application provides a device, including a memory and a processor. The memory is configured to store an executable program or instructions. The processor is configured to invoke the executable program or the instructions in the memory, so that the device performs the method in the foregoing embodiment.

For example, this application provides a chip system. The chip system is applied to a device including a memory and a sensor. The chip system includes a processor. When the processor executes an executable program or instructions stored in the memory, the device performs the method in the foregoing embodiment.

For example, this application provides a readable storage medium. The readable storage medium stores an executable program or instructions. When the executable program or the instructions are executed by a processor, a device implements the method in the foregoing embodiment.

For example, this application provides a program product, including an executable program or instructions, where the executable program or the instructions are stored in a readable storage medium, at least one processor of a device may read the executable program or the instructions from the readable storage medium, and the at least one processor executes the executable program or the instructions, so that the device implements the method in the foregoing embodiment.

In the foregoing embodiments, all or some of the functions may be implemented by using software, hardware, or a combination of software and hardware. When software is used to implement the embodiments, the embodiments may be implemented completely or partially in a form of a product.

A person of ordinary skill in the art may understand that all or a part of the procedures in the methods in embodiments are implemented. The procedures may be implemented by a computer program instructing relevant hardware. The program may be stored in a computer-readable storage medium. When the program is executed, the procedure of each method embodiment described above may be included. The foregoing storage medium includes: any medium that can store program code, such as a read-only memory (read-only memory, ROM), a random access memory (random access memory, RAM), a magnetic disk, or an optical disc.

## Claims

1. An application installation method, applied to a first device, wherein the first device comprises a first interface and a first functional module; and
the method comprises:
sending, by the first interface, a first request to the first functional module after receiving a first event, wherein the first event indicates that an initiator requests to install a first application on a second device, the first request is used to apply for a first installation credential, and the first installation credential is used to allow the initiator to request, through the first interface, the first functional module to install the first application on the second device;
sending, by the first functional module, the first installation credential to the first interface in response to the first request;
sending, by the first interface, a second request to the first functional module, wherein the second request is used to request to install the first application on the second device, and the second request carries the first installation credential; and
performing, by the first functional module in response to the second request, a corresponding operation of installing the first application on the second device.

2. The method according to claim 1, wherein the sending, by the first functional module, the first installation credential to the first interface comprises:
sending, by the first functional module, a third request to a third device, wherein the third request is used to query whether the first application is installed on the third device, and the third device and the first device are located in a same distributed network;
receiving, by the first functional module, a first result sent by the third device, wherein the first result indicates whether the first application is installed on the third device; and
sending, by the first functional module, the first installation credential to the first interface when the first result indicates that the first application is installed on the third device.

3. The method according to claim 1 or 2, wherein the sending, by the first functional module, the first installation credential to the first interface comprises:
sending, by the first functional module, a fourth request to a server, wherein the fourth request is used to query whether the first application has been installed on a fourth device, the fourth device and the first device are located in the same distributed network, and the server stores installation information of an application installed on another device located in the same distributed network as the first device;
receiving, by the first functional module, a second result sent by the server, wherein the second result indicates whether the first application has been installed on the fourth device; and
sending, by the first functional module, the first installation credential to the first interface when the second result indicates that the first application has been installed on the fourth device.

4. The method according to any one of claims 1 to 3, wherein the first device further comprises a second functional module, and the sending, by the first functional module, the first installation credential to the first interface comprises:
invoking, by the first functional module, the second functional module in response to the first request;
displaying, by the second functional module, a first screen on a display of the first device, wherein the first screen is used to determine whether a user installs the first application on the second device;
receiving, by the second functional module, a second event for the first screen, wherein the second event indicates whether the user determines to install the first application on the second device;
sending, by the second functional module, a third result to the first functional module in response to the second event, wherein the third result indicates whether the user determines to install the first application on the second device; and
sending, by the first functional module, the first installation credential to the first interface when the third result indicates that the user determines to install the first application on the second device.

5. The method according to any one of claims 1 to 4, wherein the sending, by the first functional module, the first installation credential to the first interface comprises:
sending, by the first functional module, the first installation credential to the first interface when a security level and/or a risk level of the second device meet/meets a first preset condition.

6. The method according to any one of claims 1 to 5, wherein the first installation credential comprises an identifier of an application, a validity period of the installation credential, an identifier of the initiator, and an identifier of a device on which an application is to be installed.

7. The method according to claim 6, wherein the performing, by the first functional module in response to the second request, a corresponding operation of installing the first application on the second device comprises:
when an application indicated by the first installation credential is the first application and a device indicated by the first installation credential is the second device, performing, by the first functional module, the corresponding operation of installing the first application on the second device.

8. The method according to claim 6, wherein the performing, by the first functional module in response to the second request, a corresponding operation of installing the first application on the second device comprises:
when a receiving time point of the second request is within the validity period of the first installation credential, performing, by the first functional module, the corresponding operation of installing the first application on the second device.

9. The method according to any one of claims 1 to 8, wherein the first device further comprises a second interface corresponding to a first control, and the method further comprises:
displaying, by the first device, the first control on the display of the first device, wherein the first control is used to trigger installation of a second application on a fifth device;
sending, by the second interface, a fifth request to the first functional module after receiving a third event for the first control, wherein the third event indicates that the initiator requests to install the second application on the fifth device, and the fifth request is used to request to install the second application on the fifth device; and
performing, by the first functional module in response to the fifth request, a corresponding operation of installing the second application on the fifth device.

10. The method according to claim 9, wherein that the first functional module requests the fifth device to install the second application comprises:
when a security level and/or a risk level of the fifth device meet/meets a second preset condition, performing, by the first functional module, the corresponding operation of installing the second application on the fifth device.

11. The method according to any one of claims 1 to 10, wherein the first device further comprises a third interface and the second functional module, and the method further comprises:
sending, by the third interface, a sixth request to the first functional module after receiving a fourth event, wherein the fourth event indicates that the initiator requests to install a third application on the first device, the sixth request is used to apply for a second installation credential, and the second installation credential is used to allow the initiator to request, through the third interface, the first functional module to install the third application on the first device;
invoking, by the first functional module, the second functional module in response to the sixth request;
displaying, by the second functional module, a second screen on the display of the first device, wherein the second screen is used to determine whether the user installs the third application on the first device;
receiving, by the second functional module, a fifth event for the second screen, wherein the fifth event indicates whether the user determines to install the third application on the first device;
sending, by the second functional module, a fourth result to the first functional module in response to the fifth event, wherein the fourth result indicates whether the user determines to install the third application on the first device;
sending, by the first functional module, the second installation credential to the third interface when the fourth result indicates that the user determines to install the third application on the first device;
sending, by the third interface, a seventh request to the first functional module, wherein the seventh request is used to request to install the third application on the first device, and the seventh request carries the second installation credential; and
installing, by the first functional module, the third application on the first device in response to the seventh request.

12. A device, comprising at least one memory and at least one processor, wherein
the memory is configured to store an executable program or instructions; and
the processor is configured to invoke the executable program or the instructions in the memory, so that the device performs the method according to any one of claims 1 to 11.

13. A readable storage medium, wherein the readable storage medium stores an executable program or instructions, and the executable program or the instructions are set to perform the method according to any one of claims 1 to 11.
